# EUROPEAN PATENT APPLICATION

(11) **EP 2 093 265 A1**
(43) Date of publication of application: **26.08.2009**
(21) Application number: 09002518.0
(22) Date of filing: 23.02.2009
(51) Int. Cl.: C09D 11/00

(54) **Inkjet ink composition, and inkjet recording method and printed material employing same**

(30) Priority: 25.02.2008 JP 2008042387; 25.02.2008 JP 2008042390; 11.03.2008 JP 2008061557
(71) Applicant: FUJIFILM Corporation, Minato-ku Tokyo (JP)
(72) Inventor: Kasai, Seishi, Ashigarakami-gun Kanagawa (JP)
(74) Representative: HOFFMANN EITLE

(57) **Abstract**

An inkjet ink composition is provided that includes at least one type of organic pigment exhibiting an orange, violet, or green color, at least one type selected from the group consisting of polymer compounds derived from a monomer represented by specific Formulae and a polymer represented by a specific Formula, and an actinic radiation-curable compound.

## Description

The present invention relates to an inkjet ink composition suitably used for inkjet recording, an inkjet recording method and a printed material obtained by employing the inkjet recording method. More particularly, it relates to an ink composition suitable for inkjet recording that cures with high sensitivity upon exposure to actinic radiation, and gives a cured material having sufficient flexibility even after the ink has been cured; an inkjet recording method; and a printed material employing same.

An electrophotographic method, a thermal transfer method of sublimation and melting type, and an ink-jet method are known as image recording methods for forming images on a recording medium such as paper based on image data signals. Among them, the ink-jet method excels as an image recording method because it can be realized with an inexpensive apparatus and forms images directly on the recording medium by discharging the ink only on the required image portion, thereby making it possible to use the ink efficiently, has a low running cost, and has a low noise level. With the ink-jet method, printing can be performed not only on regular paper, but also on recording media that do not absorb water, such as plastic sheets and metal sheets.

An example of the ink-jet systems is a recording system using curable ink compositions for ink-jet recording that can be cured by irradiation with active radiation. With such a system, sharp images can be formed by irradiating the ink droplets with radiation and by curing them immediately after printing.

In order to form highly accurate images with excellent color developing ability, the curable ink compositions are required to have high pigment dispersivity and stability. Generally, the size of pigment particles has to be decreased to impart the ink composition with a bright color tone and high tinting strength. In particular, in ink compositions for ink-jet recording, because the discharged ink droplets greatly affect the sharpness of images, the discharge ink droplets also have to be small and very fine pigment particles that are less in size than the thickness of the cured ink film formed by the ink composition have to be used.

For this reason, there is a need for an ink composition that has sufficient flowability, can disperse a finely powdered pigment with excellent stability, and excels in stability of pigment dispersion with time, and a variety of dispersants for obtaining a stable pigment dispersion have heretofore been suggested.

For example, an ink composition using a pigment derivative as a dispersant to increase the affinity for the pigment (see Japanese Patent Application Laid-Open (JP-A) Nos. 2003-119414 and 2004-18656), an ink composition using a polymer having a basic group as a dispersant for a special pigment such as phthalocyanine- and quinacridone-based pigments (see JP-A No. 2003-321628), and an ink composition using no organic solvent and containing a dispersant such as poly(ethyleneimine)-poly(12-hydroxystearic acid) graft polymer and an organic solvent containing a special monomer that dissolved the dispersant (see JP-A No. 2004-131589) have been suggested.

Furthermore, the achievement of a desired color gamut has been sought, and because of this a radiation-curable inkjet ink employing a special color ink such as pigment orange or pigment green has been disclosed (JP-PCT-2003-531223) (JP-PCT denotes a published Japanese translation of a PCT application).

It is an object of the present invention to provide an ink composition that excels in dispersivity and stability of a fine pigment, can form high-quality images with a good color reproduction, a bright color tone and a high tinting strength, can be cured by irradiation with active radiation, and is suitable for ink-jet recording applications, and also to provide an inkjet recording method and a printed material obtained by employing the inkjet recording method.

The inventors have conducted a comprehensive study to attain the above-described object. The results obtained demonstrated that an ink composition that excels in pigment dispersivity and in which the decrease in dispersion stability is effectively suppressed even after long-term storage and cyclic temperature variations can be obtained by using a special polymer as a pigment dispersant.

The above-mentioned objects have been accomplished by (1), (14), and (16). (2) to (13) and (15), which are preferred embodiments, are also shown below.
(1) An inkjet ink composition comprising: at least one type of organic pigment exhibiting an orange, violet, or green color; at least one type selected from the group consisting of a polymer compound derived from a monomer represented by Formula (1-1) below, a polymer compound derived from a monomer represented by Formula (2-1) below, and a polymer represented by Formula (3-1) below; and an actinic radiation-curable compound, 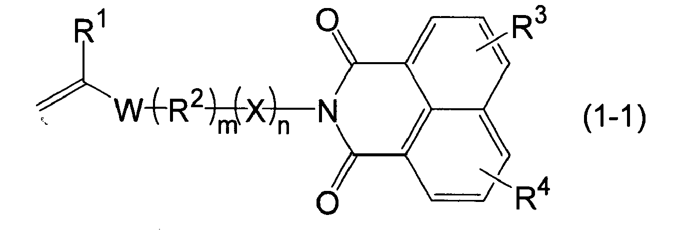 in Formula (1-1) above, R¹ denotes any of a hydrogen atom, a substituted alkyl group, and an unsubstituted alkyl group, R² denotes an alkylene group, W denotes any of -CO-, -C(=O)O-, -CONH-, -OC(=O)-, and a phenylene group, X denotes any of -CO-, -NHCO-, -OC(=O)-, -CH(OH)CH₂-, and -SO₂-, R³ and R⁴ denote a monovalent substituent, R³ and R⁴ may be linked to each other to form a ring structure, and m and n are independently 0 or 1, 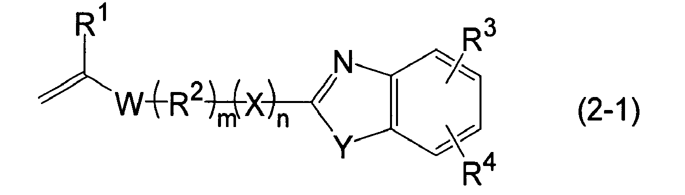 in Formula (2-1) above, R¹ denotes any of a hydrogen atom, a substituted alkyl group, and an unsubstituted alkyl group, R² denotes an alkylene group, W denotes any of -CO-, -C(=O)O-, -CONH-, -OC(=O)-, and a phenylene group, X denotes any of -O-, -S-, -C(=O)O-, -CONH-, -C(=O)S-, -NHCONH-, -NHC(=O)O-, - NHC(=O)S-, -OC(=O)-, -OC(=O)NH-, -CO-, -SO₂-, -CH(OH)CH₂NH-, - CH(OH)CH₂S-, -SO₂NH-, and -NHCO-, Y denotes any of -NR⁵-, -O-, and -S-, R⁵ denotes any of a hydrogen atom, an alkyl group, and an aryl group, R³ and R⁴ denote a monovalent substituent, R³ and R⁴ may be linked to each other to form a ring structure, and m and n are independently 0 or 1, 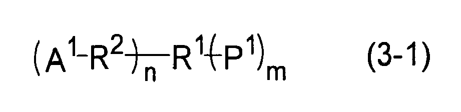 in Formula (3-1) above, R¹ denotes an (m + n)-valent organic linking group, R² denotes a single bond or a divalent organic linking group, A¹ denotes a pigment adsorption structure-containing monovalent organic group comprising at least one type selected from the group consisting of an organic dye structure, a heterocyclic structure, an acidic group, a basic nitrogen atom-containing group, a urea group, a urethane group, a coordinating oxygen atom-containing group, a hydrocarbon group having at least 4 carbons, an alkoxysilyl group, an epoxy group, an isocyanate group, and a hydroxy group, the n A¹s and R²s may independently be identical to or different from each other, m denotes 1 to 8, n denotes 2 to 9, m+n is 3 to 10, P¹ denotes a polymer skeleton, and the m P¹s may be identical to or different from each other,
(2) the inkjet ink composition according to (1), wherein the monomer represented by Formula (1-1) above is a monomer represented by Formula (1-2) below, 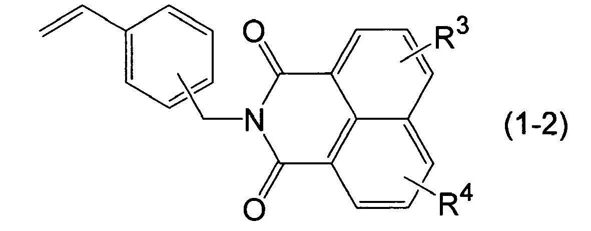 in Formula (1-2) above, R³ and R⁴ denote a monovalent substituent, and R³ and R⁴ may be linked to each other to form a ring structure,
(3) the inkjet ink composition according to (1), wherein the monomer represented by Formula (2-1) above is a monomer represented by Formula (2-2) below, 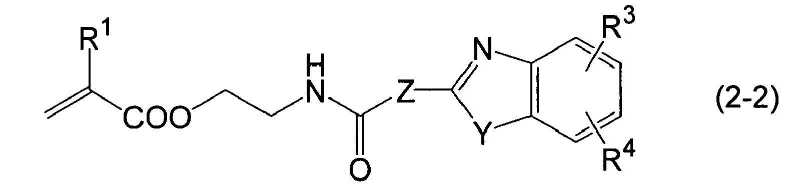 in Formula (2-2) above, R¹ denotes any of a hydrogen atom, a substituted alkyl group, and an unsubstituted alkyl group, Y and Z independently denote any of -NR⁵-, -O-, and -S-, R⁵ denotes any of a hydrogen atom, an alkyl group, and an aryl group, R³ and R⁴ denote a monovalent substituent, and R³ and R⁴ may be linked to each other to form a ring structure,
(4) the inkjet ink composition according to (1), wherein the monomer represented by Formula (2-1) above is a monomer represented by Formula (2-3) below, 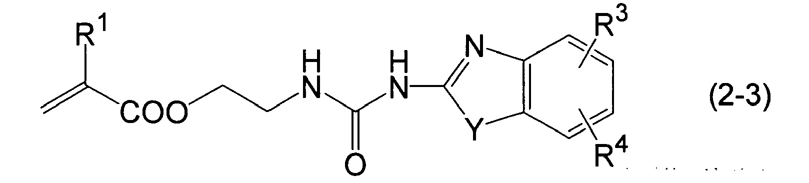 in Formula (2-3) above, R¹ denotes any of a hydrogen atom, a substituted alkyl group, and an unsubstituted alkyl group, Y denotes any of -NR⁵-, -O-, and -S-, R⁵ denotes any of a hydrogen atom, an alkyl group, and an aryl group, R³ and R⁴ denote a monovalent substituent, and R³ and R⁴ may be linked to each other to form a ring structure,
(5) the inkjet ink composition according to (1), wherein for the polymer in Formula (3-1) above, A¹ is a monovalent organic group containing at least one type selected from the group consisting of an organic dye structure, a heterocyclic structure, an acidic group, a basic nitrogen atom-containing group, a urea group, and a hydrocarbon group having at least 4 carbons,
(6) the inkjet ink composition according to (1), wherein for the polymer in Formula (3-1) above, the polymer skeleton denoted by P¹ is derived from at least one type selected from the group consisting of a polymer or copolymer of a vinyl monomer, an ester polymer, an ether polymer, a urethane polymer, an amide polymer, an epoxy polymer, a silicone polymer, a modified substance thereof, and a copolymer thereof,
(7) the inkjet ink composition according to (1), wherein the polymer represented by Formula (3-1) is a polymer represented by Formula (3-2) below, 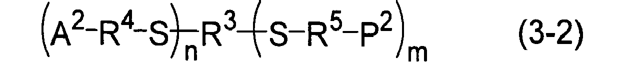 in Formula (3-2) above, R³ denotes a (m+n)-valent organic linking group, R⁴ and R⁵ independently denote a single bond or a divalent organic linking group, A² denotes a pigment adsorption structure-containing monovalent organic group comprising at least one type selected from the group consisting of an organic dye structure, a heterocyclic structure, an acidic group, a basic nitrogen atom-containing group, a urea group, a urethane group, a coordinating oxygen atom-containing group, a hydrocarbon group having at least 4 carbons, an alkoxysilyl group, an epoxy group, an isocyanate group, and a hydroxy group, the n A²s and R⁴s may independently be identical to or different from each other, m denotes 1 to 8, n denotes 2 to 9, m+n is 3 to 10, P² denotes a polymer skeleton, and the m P²s and R⁵s may independently be identical to or different from each other,
(8) the inkjet ink composition according to (7), wherein for the polymer in Formula (3-2) above, A² is a monovalent organic group comprising at least one type selected from the group consisting of an organic dye structure, a heterocyclic structure, an acidic group, a basic nitrogen atom-containing group, a urea group, and a hydrocarbon group having at least 4 carbons,
(9) the inkjet ink composition according to (7), wherein for the polymer in Formula (3-2) above, the polymer skeleton denoted by P² is derived from at least one type selected from the group consisting of a polymer or copolymer of a vinyl monomer, an ester polymer, an ether polymer, a urethane polymer, an amide polymer, an epoxy polymer, a silicone polymer, a modified substance thereof, and a copolymer thereof,
(10) the inkjet ink composition according to (1), wherein the organic pigment is at least one type selected from the group shown below,
   C.I. Pigment Orange 36, 38, 43, 71,
   C.I. Pigment Violet 23, 32, 37, 39, and
   C.I. Pigment Green 7, 36, 37,
(11) the inkjet ink composition according to (1), wherein the organic pigment is at least one type selected from the group shown below,
   C.I. Pigment Orange 36
   C.I. Pigment Violet 23, 37, and
   C.I. Pigment Green 7,
(12) the inkjet ink composition according to (1), wherein the organic pigment is a dioxazine type compound represented by Formula (A) below, 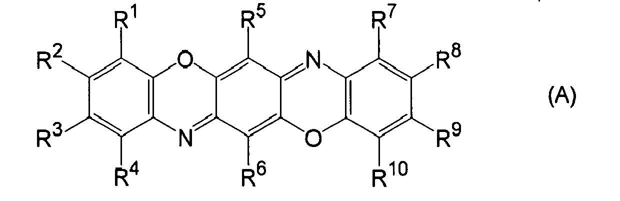 in Formula (A) above, R¹ to R¹⁰ independently denote a hydrogen atom, a halogen atom (fluorine atom, chlorine atom, bromine atom, iodine atom), or a monovalent group,
(13) the inkjet ink composition according to (12), wherein the dioxazine type compound is C.I. Pigment Violet 23 or C.I. Pigment Violet 37,
(14) an inkjet recording method comprising: (a¹) a step of discharging the inkjet ink composition according to (1) onto a recording medium; and (b¹) a step of curing the ink composition by irradiating the discharged inkjet ink composition with actinic radiation,
(15) the inkjet recording method according to (14), wherein the actinic radiation is UV radiation emitted by a UV radiation-emitting light-emitting diode that has a peak light emission wavelength in the range of 350 to 420 nm and gives a maximum illumination intensity on the surface of a recording medium of 10 to 2,000 mW/cm²,
(16) a printed material recorded by the inkjet recording method according to (14).

### Brief Description of Drawings

(FIG. 1) The maximum gamut of color reproduction (a^{*}, b^{*}) measured in Example 1-4.
(FIG. 2) The maximum gamut of color reproduction (a^{*}, b^{*}) measured in Example 2-4.
(FIG. 3) The maximum gamut of color reproduction (a^{*}, b^{*}) measured in Example 3-4.

The inkjet ink composition of the present invention (in the present invention, the 'inkjet ink composition' is also called an 'ink composition' or an 'ink') comprises (A) at least one type of organic pigment exhibiting an orange, violet, or green color, (B) a polymer compound derived from a monomer represented by Formula (1-1) above (also called a 'polymer of Formula (1-1)'), and (C) an actinic radiation-curable compound. It may further comprise another component appropriately selected as necessary. The ink composition can cure upon exposure to actinic radiation (in the present invention, also called active energy radiation).

The actinic radiations (active energy radiation) are not particularly limited, provided that the irradiation therewith can generate initial species of a curing reaction in the ink composition, and the energy ray can be appropriately selected according to the object. Examples of suitable rays include alpha rays, gamma rays, X rays, ultraviolet rays, visible light rays, and electron beams. In accordance with the present invention, from the standpoint of curing sensitivity and availability of equipment, ultraviolet radiation and electron beams are preferred, and ultraviolet radiation is especially preferred.

### Inkjet ink composition

The inkjet ink composition of the present invention is explained below.

### (A) Organic pigment exhibiting orange, violet, or green color

The ink composition of the present invention comprises at least one type of organic pigment exhibiting an orange, violet, or green color (hereinafter, also simply called an organic pigment). Furthermore, the ink composition of the present invention is preferably an ink composition comprising any one type of organic pigment exhibiting an orange, violet, or green color. Here, the ink composition of the present invention comprising an orange color organic pigment is also called an orange ink composition, the ink composition of the present invention comprising a violet color organic pigment is also called a violet ink composition, and the ink composition of the present invention comprising a green color organic pigment is also called a green ink composition.

Furthermore, for example, in the case of the composition comprising a violet color organic pigment, one type of violet color organic pigment may be used on its own, or two or more types thereof may be used in combination. Moreover, the ink composition may comprise as necessary a colorant exhibiting another color (preferably an organic pigment) in combination.

The inkjet ink composition of the present invention is preferably used as an ink set comprising a plurality of inkjet ink compositions, and in this case the ink set comprises at least one ink composition selected from the group consisting of an orange ink composition, a violet ink composition, and a green ink composition. It is preferably an ink set comprising an orange ink composition, a violet ink composition, and a green ink composition.

Furthermore, in addition to the above compositions, an ink set using in combination ink compositions exhibiting each of cyan, magenta, yellow, and black colors is preferable, and it is preferable to use in combination as necessary an ink composition exhibiting a white color.

The organic pigment that the ink composition of the present invention contains is an organic pigment exhibiting at least any color of violet, orange, and green.

An organic pigment exhibiting an orange color is defined as an organic pigment for which a film obtained by applying a dispersion thereof has a hue (a^{*}, b^{*}) in the range of 'b^{*} < 2a^{*} + 20 and b^{*} > a^{*} - 20 (a^{*} > 0, b^{*} > 0)'. Similarly, an organic pigment exhibiting a violet color is defined as an organic pigment for which a film obtained by applying a dispersion thereof has a hue (a^{*}, b^{*}) in the range of 'b^{*} > -2a^{*} - 20 and b^{*} < 0.5a^{*} + 10 (a^{*} > 0, b^{*} < 0)', and an organic pigment exhibiting a green color is defined as an organic pigment for which a film obtained by applying a dispersion thereof has a hue (a^{*}, b^{*}) in the range of 'b^{*} < -a^{*} + 20 and b^{*} > -0.25a^{*} (a^{*} < 0)'. Measurement of hue (a^{*}, b^{*}) may be carried out using an SPM100-II manufactured by Gretag.

The pigment concentration of an organic pigment dispersion used here for evaluation of the hue is preferably at least 1 wt % but no greater than 30 wt %. The particle size (volume-average particle size) of the organic pigment in the dispersion is not particularly limited, but from the viewpoint of suppression of the influence of optical scattering it is preferably no greater than 1 µm, more preferably no greater than 500 nm, and yet more preferably no greater than 200 nm. A dispersion medium is not particularly limited as long as it has little coloration or no coloration, and water, a general-purpose solvent, a commercial monomer, etc. are preferable. A process for preparing the dispersion is not particularly limited, and a known technique may be used. Since it is relatively simple, ball mill dispersion, bead mill dispersion, ultrasonic dispersion, etc. may preferably be used. Furthermore, a commercial surfactant or pigment-dispersing agent may be used in the dispersion as appropriate.

As a substrate to be coated with the dispersion, a white substrate is preferable. It is not particularly limited as long as it is a white substrate and, for example, commercial white-coated paper, white synthetic paper, etc. may preferably be used. Means for applying the dispersion is not particularly limited and, for example, bar coating may preferably be used since it is simple.

From the viewpoint of obtaining wide color reproduction, as the organic pigment exhibiting an orange color, the hue (a^{*}, b^{*}) of a film obtained by applying a dispersion thereof is preferably in the range of 'b^{*} < 2a^{*} and b^{*} > a^{*} (a^{*} > 0, b^{*} > 0)'. Similarly, from the viewpoint of obtaining wide color reproduction, as the organic pigment exhibiting a violet color, the hue (a^{*}, b^{*}) of a film obtained by applying a dispersion thereof is preferably in the range of 'b^{*} > -2a^{*} and b^{*} < 0.5a^{*} (a^{*} > 0, b^{*} < 0)', and as the organic pigment exhibiting a green color the hue (a^{*}, b^{*}) of a film obtained by applying a dispersion thereof is preferably 'b^{*} < -a^{*} (a^{*} < 0, b^{*} > 0)'.

The organic pigments exhibiting any of violet, orange, and green colors are not particularly limited as long as the above-mentioned hue is satisfied, and it is possible to select them as appropriate from commercial products and use them.

With regard to the organic pigment exhibiting a violet color, C.I. Pigment Violet 1 (rhodamine B), C.I. Pigment Violet 2 (rhodamine 3B), C.I. Pigment Violet 3 (methyl violet lake), C.I. Pigment Violet 3:1 (methyl violet lake), C.I. Pigment Violet 3:3 (methyl violet lake), C.I. Pigment Violet 5:1 (alizarin maroon), C.I. Pigment Violet 13 (ultramarine pink), C.I. Pigment Violet 17 (naphthol AS), C.I. Pigment Violet 23 (dioxazine violet), C.I. Pigment Violet 25 (naphthol AS), C.I. Pigment Violet 29 (perylene violet), C.I. Pigment Violet 31 (violanthrone violet), C.I. Pigment Violet 32 (benzimidazolone bordeaux HF3R), C.I. Pigment Violet 36 (thioindigo), C.I. Pigment Violet 37 (dioxazine violet), C.I. Pigment Violet 42 (quinacridone maroon B), C.I. Pigment Violet 50 (naphthol AS), etc. are available as commercial products.

Among them, from the viewpoint of color reproduction, light fastness, and stability of an organic pigment dispersion, the organic pigment exhibiting a violet color is preferably C.I. Pigment Violet 23, C.I. Pigment Violet 32, C.I. Pigment Violet 37, or C.I. Pigment Violet 39, and particularly preferably C.I. Pigment Violet 23 or C.I. Pigment Violet 37.

With regard to the organic pigment exhibiting an orange color, C.I. Pigment Orange 1 (hansa yellow 3R), C.I. Pigment Orange 2 (orthonitro orange), C.I. Pigment Orange 3 (beta-naphthol), C.I. Pigment Orange 4 (naphthol AS), C.I. Pigment Orange 5 (beta-naphthol), C.I. Pigment Orange 13 (pyrazolone orange G), C.I. Pigment Orange 15 (disazo orange), C.I. Pigment Orange 16 (anisidine orange), C.I. Pigment Orange 17 (persian orange lake), C.I. Pigment Orange 19 (naphthalene yellow lake), C.I. Pigment Orange 24 (naphthol orange Y), C.I. Pigment Orange 31 (condensed azo orange), C.I. Pigment Orange 34 (pyrazolone orange), C.I. Pigment Orange 36 (benzimidazolone orange HL), C.I. Pigment Orange 38 (naphthol orange), C.I. Pigment Orange 40 (pyranthrone orange), C.I. Pigment Orange 43 (perinone orange), C.I. Pigment Orange 46 (ethyl red lake C), C.I. Pigment Orange 48 (quinacridone gold), C.I. Pigment Orange 49 (quinacridone gold), C.I. Pigment Orange 51 (pyranthrone orange), C.I. Pigment Orange 60 (imidazolone orange HGL), C.I. Pigment Orange 61 (isoindolinone orange), C.I. Pigment Orange 62 (benzimidazolone orange H5G), C.I. Pigment Orange 64 (benzimidazolone), C.I. Pigment Orange 65 (azomethine orange), C.I. Pigment Orange 66 (isoindoline orange), C.I. Pigment Orange 67 (pyrazoloquinazolone orange), C.I. Pigment Orange 68 (azomethine orange), C.I. Pigment Orange 69 (isoindolinone orange), C.I. Pigment Orange 71 (diketopyrrolopyrrole orange), C.I. Pigment Orange 72 (imidazolone orange H4GL), C.I. Pigment Orange 73 (diketopyrrolopyrrole orange), C.I. Pigment Orange 74 (naphthol orange 2RLD), C.I. Pigment Orange 81 (diketopyrrolopyrrole orange), etc. are available as commercial products.

Among them, from the viewpoint of color reproduction, light fastness, and stability of an organic pigment dispersion, the organic pigment exhibiting an orange color is preferably C.I. Pigment Orange 36, C.I. Pigment Orange 38, C.I. Pigment Orange 43, or C.I. Pigment Orange 71, and particularly preferably C.I. Pigment Orange 36.

With regard to the organic pigment exhibiting a green color, C.I. Pigment Green 1 (brilliant green lake), C.I. Pigment Green 4 (malachite green lake), C.I. Pigment Green 7 (phthalocyanine green), C.I. Pigment Green 8 (Pigment Green B), C.I. Pigment Green 10 (nickel azo yellow), C.I. Pigment Green 36 (bromophthalocyanine green), etc. are available as commercial products.

Among them, from the viewpoint of color reproduction, light fastness, and stability of an organic pigment dispersion, the organic pigment exhibiting a green color is preferably C.I. Pigment Green 7, C.I. Pigment Green 36, or C.I. Pigment Green 37, and particularly preferably C.I. Pigment Green 7.

Furthermore, from the viewpoint of good dispersibility, particularly in component (B) (polymer compound derived from a monomer represented by Formula (1-1)), which is described later, the organic pigment is preferably a dioxazine type compound. Examples of the dioxazine type compound include a dioxazine compound represented by Formula (A) below.

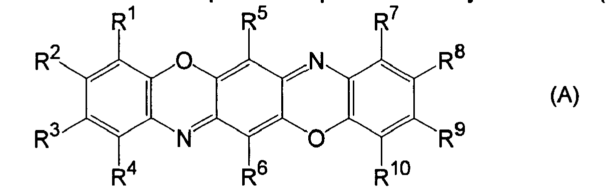

In Formula (A), R¹ to R¹⁰ independently denote a hydrogen atom, a halogen atom (fluorine atom, chlorine atom, bromine atom, iodine atom), or a monovalent group. Furthermore, with regard to R¹ to R¹⁰, any two or more thereof may be bonded to form a ring structure, and this ring structure may further have a substituent.

Examples of the monovalent group include an amino group, a substituted amino group, a substituted carbonyl group, a hydroxy group, a substituted oxy group, a thiol group, a thioether group, a silyl group, a nitro group, a cyano group, an alkyl group, an alkenyl group, an aryl group, a heterocyclic group, a sulfo group, a substituted sulfonyl group, a sulfonate group, a substituted sulfinyl group, a phosphono group, a substituted phosphono group, a phosphonate group, and a substituted phosphonate group, and they may further have a substituent where this is possible.

As the alkyl group denoted by R¹ to R¹⁰, straight-chain, branched, and cyclic alkyl groups having 1 to 20 carbons can be cited. Among them, a straight-chain alkyl group having 1 to 12 carbons, a branched alkyl group having 3 to 12 carbons, and a cyclic alkyl group having 5 to 10 carbons are preferable. Specific examples thereof include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a hexadecyl group, an octadecyl group, an eicosyl group, an isopropyl group, an isobutyl group, an s-butyl group, a *t*-butyl group, an isopentyl group, a neopentyl group, a 1-methylbutyl group, an isohexyl group, a 2-ethylhexyl group, a 2-methylhexyl group, a cyclohexyl group, a cyclopentyl group, and a 2-norbornyl group.

When the alkyl group denoted by R¹ to R¹⁰ has a substituent (that is, when it is a substituted alkyl group), examples of the alkyl moiety of the substituted alkyl group include a divalent organic residue formed by removing any one hydrogen atom on the above-mentioned alkyl group having 1 to 20 carbons, and a preferred range for the number of carbons is also the same as that for the alkyl group.

When R¹ to R¹⁰ are substituted alkyl groups, specific preferred examples thereof include a chloromethyl group, a bromomethyl group, a 2-chloroethyl group, a trifluoromethyl group, a methoxymethyl group, a methoxycarbonylmethyl group, an isopropoxymethyl group, a butoxymethyl group, an *s*-butoxybutyl group, a methoxyethoxyethyl group, an allyloxymethyl group, a phenoxymethyl group, an acetyloxymethyl group, a methylthiomethyl group, a tolylthiomethyl group, a pyridylmethyl group, a tetramethylpiperidinylmethyl group, an *N-*acetyltetramethylpiperidinylmethyl group, a trimethylsilylmethyl group, a methoxyethyl group, an ethylaminoethyl group, a diethylaminopropyl group, a morpholinopropyl group, a benzoyloxymethyl group, an *N-*cyclohexylcarbamoyloxyethyl group, an *N*-phenylcarbamoyloxyethyl group, an acetylaminoethyl group, an *N*-methylbenzoylaminopropyl group, a 2-oxoethyl group, a 2-oxopropyl group, a carboxypropyl group, a methoxycarbonylethyl group, an allyloxycarbonylbutyl group, a chlorophenoxycarbonylmethyl group,
a carbamoylmethyl group, an *N*-methylcarbamoylethyl group, an *N*,*N-*dipropylcarbamoylmethyl group, an *N*-(methoxyphenyl)carbamoylethyl group, an *N*-methyl-*N*-(sulfophenyl)carbamoylmethyl group, a sulfobutyl group, a sulfonatobutyl group, a sulfamoylbutyl group, an *N*-ethylsulfamoylmethyl group, an *N*,*N*-dipropylsulfamoylpropyl group, an *N*-tolylsulfamoylpropyl group, an *N*-methyl-*N*-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonooxypropyl group, a phosphonatooxybutyl group, a benzyl group, a phenethyl group, an α-methylbenzyl group, a 1-methyl-1-phenylethyl group, a *p*-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group, and a 3-butynyl group.

As the substituent that can be introduced into the alkyl group denoted by R¹ to R¹⁰, substituents described for explanation of the above substituted alkyl group as well as a monovalent substituent comprising non-metallic atoms illustrated below can be cited. Preferred examples, which include the above-mentioned substituents, include a halogen atom (-F, -Br, -Cl, -I), a hydroxy group, an alkoxy group, an aryloxy group, a mercapto group, an alkylthio group, an arylthio group, an alkyldithio group, an aryldithio group, an amino group, an *N-*alkylamino group, an *N*,*N*-dialkylamino group, an *N*-arylamino group, an *N*,*N-*diarylamino group, an *N*-alkyl-*N*-arylamino group, an acyloxy group, a carbamoyloxy group, an *N*-alkylcarbamoyloxy group, an *N*-arylcarbamoyloxy group, an *N*,*N*-dialkylcarbamoyloxy group, an *N*,*N*-diarylcarbamoyloxy group, an *N*-alkyl-*N*-arylcarbamoyloxy group, an alkylsulfoxy group, an arylsulfoxy group, an acylthio group, an acylamino group, an *N*-alkylacylamino group, an *N-*arylacylamino group, a ureido group, an *N'*-alkylureido group, an *N',N'-*dialkylureido group, an *N'*-arylureido group, an *N',N'*-diarylureido group, an *N*'-alkyl-*N'*-arylureido group, an *N*-alkylureido group, an *N*-arylureido group, an *N'-*alkyl-*N*-alkylureido group, an *N'*-alkyl-*N*-arylureido group, an *N',N'*-dialkyl-*N-*alkylureido group, an *N',N'*-dialkyl-*N*-arylureido group, an *N'*-aryl-*N*-alkylureido group, an *N'*-aryl-*N*-arylureido group, an *N',N'*-diaryl-*N*-alkylureido group, an *N',N'-*diaryl-*N*-arylureido group, an *N'*-alkyl-*N'*-aryl-*N*-alkylureido group, an *N'*-alkyl-*N'-*aryl-*N*-arylureido group,
an alkoxycarbonylamino group, an aryloxycarbonylamino group, an *N*-alkyl-N-alkoxycarbonylamino group, an *N*-alkyl-*N*-aryloxycarbonylamino group, an *N-*aryl-*N*-alkoxycarbonylamino group, an *N*-aryl-*N*-aryloxycarbonylamino group, a formyl group, an acyl group, a carboxy group, an alkoxycarbonyl group, an aryloxycarbonyl group, a carbamoyl group, an *N*-alkylcarbamoyl group, an *N,N-*dialkylcarbamoyl group, an *N*-arylcarbamoyl group, an *N,N*-diarylcarbamoyl group, an *N*-alkyl-*N*-arylcarbamoyl group, an alkylsulfinyl group, an arylsulfinyl group, an alkylsulfonyl group, an arylsulfonyl group, a sulfo group (-SO₃H) and its conjugate base group (called a sulfonate group), an alkoxysulfonyl group, an aryloxysulfonyl group, a sulfinamoyl group, an *N*-alkylsulfinamoyl group, an *N,N*-dialkylsulfinamoyl group, an *N*-arylsulfinamoyl group, an *N,N*-diarylsulfinamoyl group, an *N*-alkyl-*N-*arylsulfinamoyl group, a sulfamoyl group, an *N*-alkylsulfamoyl group, an *N,N-*dialkylsulfamoyl group, an *N*-arylsulfamoyl group, an *N,N*-diarylsulfamoyl group, an *N*-alkyl-*N*-arylsulfamoyl group,
a phosphono group (-PO₃H₂) and its conjugate base group (called a phosphonate group), a dialkylphosphono group (-PO₃(alkyl)₂) 'alkyl = alkyl group, the same applies below', a diarylphosphono group (-PO₃(aryl)₂) 'aryl = aryl group, the same applies below', an alkylarylphosphono group (-PO₃(alkyl)(aryl)), a monoalkylphosphono group (-PO₃H(alkyl)) and its conjugate base group (called an alkylphosphonate group), a monoarylphosphono group (-PO₃H(aryl)) and its conjugate base group (called an arylphosphonate group), a phosphonooxy group (-OPO₃H₂) and its conjugate base group (called a phosphonatooxy group), a dialkylphosphonooxy group (-OPO₃H(alkyl)₂), a diarylphosphonooxy group (-OPO₃(aryl)₂), an alkylarylphosphonooxy group (-OPO₃(alkyl)(aryl)), a monoalkylphosphonooxy group (-OPO₃H(alkyl)) and its conjugate base group (called an alkylphosphonatooxy group), a monoarylphosphonooxy group (-OPO₃H(aryl)) and its conjugate base group (called an arylphosphonatooxy group), a cyano group, a nitro group, an aryl group, an alkenyl group, an alkynyl group, a heterocyclic group, and a silyl group.

Specific examples of the alkyl moiety of a substituent that can be introduced into the alkyl group denoted by R¹ to R¹⁰ are the same as in the above-mentioned case in which R¹ to R¹⁰ are substituted alkyl groups, and a preferred range is also the same.

Specific examples of the aryl moiety of a substituent that can be introduced into the alkyl group denoted by R¹ to R¹⁰ include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carboxyphenyl group, a methoxycarbonylphenyl group, an ethoxyphenylcarbonyl group, a phenoxycarbonylphenyl group, an N-phenylcarbamoylphenyl group, a cyanophenyl group, a sulfophenyl group, a sulfonatophenyl group, a phosphonophenyl group, and a phosphonatophenyl group.

As the alkenyl group denoted by R¹ to R¹⁰, alkenyl groups having 2 to 20 carbons can be cited. Among them, an alkenyl group having 2 to 10 carbons is preferable, and an alkenyl group having 2 to 8 carbons is more preferable. The alkenyl group may further have a substituent. Examples of the substituent that can be introduced include a halogen atom, an alkyl group, a substituted alkyl group, an aryl group, and a substituted aryl group, and a halogen atom and a straight-chain, branched, or cyclic alkyl group having 1 to 10 carbons are preferable. Specific examples of the alkenyl group include a vinyl group, a 1-propenyl group, a 1-butenyl group, a cinnamyl group, a 1-pentenyl group, a 1-hexenyl group, a 1-octenyl group, a 1-methyl-1-propenyl group, a 2-methyl-1-propenyl group, a 2-methyl-1-butenyl group, a 2-phenyl-1-ethenyl group, and a 2-chloro-1-ethenyl group.

As the alkynyl group denoted by R¹ to R¹⁰, alkynyl groups having by 2 to 20 carbons can be cited. Among them, an alkynyl group having 2 to 10 carbons is preferable, and an alkynyl group having 2 to 8 carbons is more preferable. Specific examples thereof include an ethynyl group, a 1-propynyl group, a 1-butynyl group, a phenylethynyl group, and a trimethylsilylethynyl group.

As the aryl group denoted by R¹ to R¹⁰, a benzene ring, a condensed ring formed from 2 to 3 benzene rings, a condensed ring formed from a benzene ring and a 5-membered unsaturated ring, etc. can be cited. Specific examples thereof include a phenyl group, a naphthyl group, an anthryl group, a phenanthryl group, an indenyl group, an acenaphthenyl group, and a fluorenyl group, and among them a phenyl group and a naphthyl group are more preferable.

Furthermore, the aryl group denoted by R¹ to R¹⁰ may have a substituent on a carbon atom forming a ring, and examples of such a substituent include a monovalent substituent comprising non-metallic atoms. Preferred examples of the substituent to be introduced include the above-mentioned alkyl groups, substituted alkyl groups, and those described in the explanation of the substituent of the substituted alkyl group above.

The heterocyclic group denoted by R¹ to R¹⁰ is preferably a 3- to 8-membered heterocyclic group, more preferably a 3- to 6-membered heterocyclic group containing a nitrogen atom, an oxygen atom, or a sulfur atom, and yet more preferably a 5- or 6-membered heterocyclic group containing a nitrogen atom, an oxygen atom, or a sulfur atom. Specific examples thereof include a pyrrole ring group, a furan ring group, a thiophene ring group, a benzopyrrole ring group, a benzofuran ring group, a benzothiophene ring group, a pyrazole ring group, an isoxazole ring group, an isothiazole ring group, an indazole ring group, a benzoisoxazole ring group, a benzoisothiazole ring group, an imidazole ring group, an oxazole ring group, a thiazole ring group, a benzimidazole ring group, a benzoxazole ring group, a benzothiazole ring group, a pyridine ring group, a quinoline ring group, an isoquinoline ring group, a pyridazine ring group, a pyrimidine ring group, a pyrazine ring group, a phthalazine ring group, a quinazoline ring group, a quinoxaline ring group, an aziridine ring group, a phenanthridine ring group, a carbazole ring group, a purine ring group, a pyran ring group, a piperidine ring group, a piperazine ring group, a morpholine ring group, an indole ring group, an indolizine ring group, a chromene ring group, a cinnoline ring group, an acridine ring group, a phenothiazine ring group, a tetrazole ring group, and a triazine ring group.

Furthermore, the heterocyclic group denoted by R¹ to R¹⁰ may have a substituent on a carbon atom forming a ring, and examples of such a substituent include a monovalent substituent comprising non-metallic atoms. Preferred examples of a substituent to be introduced include the above-mentioned alkyl groups, substituted alkyl groups, and those described in the explanation of the substituent of the substituted alkyl group above.

The silyl group denoted by R¹ to R¹⁰ may have a substituent, and is preferably a silyl group having 0 to 30 carbons, more preferably a silyl group having 3 to 20 carbons, and yet more preferably a silyl group having 3 to 10 carbons. Specific examples thereof include a trimethylsilyl group, a triethylsilyl group, a tripropylsilyl group, a triisopropylsilyl group, a cyclohexyldimethylsilyl group, and a dimethylvinylsilyl group.

The thiol group denoted by R¹ to R¹⁰ may have a substituent, and is preferably a thiol group having 0 to 30 carbons, more preferably a thiol group having 3 to 20 carbons, and yet more preferably a thiol group having 1 to 10 carbons. Specific examples thereof include a mercaptomethyl group, a mercaptoethyl group, a 4-mercaptocyclohexyl group, and a 4-mercaptophenyl group.

The thioether group denoted by R¹ to R¹⁰ may have a substituent, and is preferably a thioether group having 0 to 30 carbons, more preferably a thioether group having 3 to 20 carbons, and yet more preferably a thioether group having 1 to 10 carbons.

Specific examples thereof include alkylthio groups such as a methylthio group, an ethylthio group, and a cyclohexylthio group and arylthio groups such as a phenylthio group.

As the halogen atom denoted by R¹ to R¹⁰, a fluorine atom, a bromine atom, a chlorine atom, and an iodine atom can be cited, and among them a chlorine atom and a bromine atom are preferable.

As the substituted oxy group (R⁰⁶O-) denoted by R¹ to R¹⁰, those in which R⁰⁶ is a monovalent group comprising non-metallic atoms, excluding a hydrogen atom, may be used. Preferred examples of the substituted oxy group include an alkoxy group, an aryloxy group, an acyloxy group, a carbamoyloxy group, an *N-*alkylcarbamoyloxy group, an *N*-arylcarbamoyloxy group, an *N,N-*dialkylcarbamoyloxy group, an *N,N*-diarylcarbamoyloxy group, an *N*-alkyl-*N-*arylcarbamoyloxy group, an alkylsulfoxy group, an arylsulfoxy group, a phosphonooxy group, and a phosphonatooxy group. Examples of the alkyl group and aryl group therein include the above-mentioned examples for the alkyl group, substituted alkyl group, aryl group, and substituted aryl group. Examples of the acyl group (R⁰⁷CO-) of the acyloxy group include those in which R⁰⁷ is the alkyl group, substituted alkyl group, aryl group, or substituted aryl group cited as examples above. Among these substituents, an alkoxy group, an aryloxy group, an acyloxy group, and an arylsulfoxy group are more preferable. Specific preferred examples of the substituted oxy group include a methoxy group, an ethoxy group, a propyloxy group, an isopropyloxy group, a butyloxy group, a pentyloxy group, a hexyloxy group, a dodecyloxy group, a benzyloxy group, an allyloxy group, a phenethyloxy group, a carboxyethyloxy group, a methoxycarbonylethyloxy group, an ethoxycarbonylethyloxy group, a methoxyethoxy group, a phenoxyethoxy group, a methoxyethoxyethoxy group, an ethoxyethoxyethoxy group, a morpholinoethoxy group, a morpholinopropyloxy group, an aryloxyethoxyethoxy group, a phenoxy group, a tolyloxy group, a xylyloxy group, a mesityloxy group, a cumenyloxy group, a methoxyphenyloxy group, an ethoxyphenyloxy group, a chlorophenyloxy group, a bromophenyloxy group, an acetyloxy group, a benzoyloxy group, a naphthyloxy group, a phenylsulfonyloxy group, a phosphonooxy group, and a phosphonatooxy group.

The amino group denoted by R¹ to R¹⁰ may be a substituted amino group, including an amide group. As the substituted amino group (R⁰⁸NH-, (R⁰⁹)(R⁰¹⁰)N-), including an amide group, those in which R⁰⁸, R⁰⁹, and R⁰¹⁰ are monovalent groups comprising non-metallic atoms, excluding a hydrogen atom, may be used. In addition, R⁰⁹ and R⁰¹⁰ may be bonded to form a ring. Preferred examples of the substituted amino group include an *N*-alkylamino group, an *N,N*-dialkylamino group, an *N*-arylamino group, an *N,N*-diarylamino group, an *N*-alkyl-*N*-arylamino group, an acylamino group, an *N*-alkylacylamino group, an *N*-arylacylamino group, a ureido group, an *N'*-alkylureido group, an *N',N'*-dialkylureido group, an *N'-*arylureido group, an *N',N'*-diarylureido group, an *N'*-alkyl-*N'*-arylureido group, an *N*-alkylureido group, an *N*-arylureido group, an *N'*-alkyl-*N*-alkylureido group, an *N'-*alkyl-*N*-arylureido group, an *N',N'*-dialkyl-*N*-alkylureido group, an *N'*-alkyl-*N'-*arylureido group, an *N',N'*-dialkyl-*N*-alkylureido group, an *N',N'*-dialkyl-*N'-*arylureido group, an *N'*-aryl-*N*-alkylureido group, an *N'*-aryl-*N*-arylureido group, an *N',N'*-diaryl-*N*-alkylureido group, an *N',N'*-diaryl-*N*-arylureido group, an *N'*-alkyl-*N'-*aryl-*N*-alkylureido group, an *N'*-alkyl-*N'*-aryl-*N*-arylureido group, an alkoxycarbonylamino group, an aryloxycarbonylamino group, an *N*-alkyl-*N-*alkoxycarbonylamino group, an *N*-alkyl-*N*-aryloxycarbonylamino group, an *N*-aryl-*N*-alkoxycarbonylamino group, and an *N*-aryl-*N*-aryloxycarbonylamino group. Examples of the alkyl group and aryl group therein include the above-mentioned examples for the alkyl group, substituted alkyl group, aryl group, and substituted aryl group, and R⁰⁷ of the acyl group (R⁰⁷CO-) of the acylamino group, the *N-*alkylacylamino group, and the *N*-arylacylamino group is as described above. Among them, an *N*-alkylamino group, an *N,N*-dialkylamino group, an *N*-arylamino group, and an acylamino group are more preferable. Specific preferred examples of the substituted amino group include a methylamino group, an ethylamino group, a diethylamino group, a morpholino group, a piperidino group, a pyrrolidino group, a phenylamino group, a benzoylamino group, and an acetylamino group.

As the substituted sulfonyl group (R⁰¹¹-SO₂-) denoted by R¹ to R¹⁰, those in which R⁰¹¹ is a monovalent group comprising non-metallic atoms may be used. Preferred examples include an alkylsulfonyl group, an arylsulfonyl group, and a substituted or unsubstituted sulfamoyl group. Examples of the alkyl group and aryl group therein include the above-mentioned examples for the alkyl group, substituted alkyl group, aryl group, and substituted aryl group. Specific examples of such a substituted sulfonyl group include a butylsulfonyl group, a phenylsulfonyl group, a chlorophenylsulfonyl group, a sulfamoyl group, an *N*-alkylsulfamoyl group, an *N,N*-dialkylsulfamoyl group, an *N*-arylsulfamoyl group, and an *N*-alkyl-*N-*arylsulfamoyl group.

The sulfonate group (-SO₃⁻) denoted by R¹ to R¹⁰ means, as described above, a conjugate base anion group of a sulfo group (-SO₃H), and is usually preferably used together with a counter cation. Examples of such a counter cation include those generally known, that is, various types of onium species (ammonium, sulfonium, phosphonium, iodonium, azinium, etc.) and metal ions (Na⁺, K⁺, Ca²⁺, Zn²⁺, etc.).

As the substituted carbonyl group (R⁰¹³-CO-) denoted by R¹ to R¹⁰, those in which R⁰¹³ is a monovalent group comprising non-metallic atoms may be used. Preferred examples of the substituted carbonyl group include a formyl group, an acyl group, a carboxy group, an alkoxycarbonyl group, an aryloxycarbonyl group, a carbamoyl group, an *N*-alkylcarbamoyl group, an *N,N*-dialkylcarbamoyl group, an *N*-arylcarbamoyl group, an *N,N*-diarylcarbamoyl group, and an *N*-alkyl-*N'-*arylcarbamoyl group. Examples of the alkyl group and aryl group therein include the above-mentioned examples for the alkyl group, substituted alkyl group, aryl group, and substituted aryl group. Among them, more preferred examples of the substituted carbonyl group include a formyl group, an acyl group, a carboxy group, an alkoxycarbonyl group, an aryloxycarbonyl group, a carbamoyl group, an *N-*alkylcarbamoyl group, an *N,N*-dialkylcarbamoyl group, and an *N*-arylcarbamoyl group, and yet more preferred examples include a formyl group, an acyl group, an alkoxycarbonyl group, and an aryloxycarbonyl group. Preferred specific examples of the substituted carbonyl group include a formyl group, an acetyl group, a benzoyl group, a carboxy group, a methoxycarbonyl group, an ethoxycarbonyl group, an allyloxycarbonyl group, a dimethylaminophenylethenylcarbonyl group, a methoxycarbonylmethoxycarbonyl group, an *N*-methylcarbamoyl group, an *N*-phenylcarbamoyl group, an *N,N-*diethylcarbamoyl group, and a morpholinocarbonyl group.

As the substituted sulfinyl group (R⁰¹⁴-SO-) denoted by R¹ to R¹⁰, those in which R⁰¹⁴ is a monovalent group comprising non-metallic atoms may be used. Preferred examples thereof include an alkylsulfinyl group, an arylsulfinyl group, a sulfinamoyl group, an *N*-alkylsulfinamoyl group, an *N,N*-dialkylsulfinamoyl group, an *N*-arylsulfinamoyl group, an *N,N*-diarylsulfinamoyl group, and an *N*-alkyl-*N-*arylsulfinamoyl group. Examples of the alkyl group and aryl group therein include the above-mentioned examples for the alkyl group, substituted alkyl group, aryl group, and substituted aryl group. Among them, more preferred examples thereof include an alkylsulfinyl group and an arylsulfinyl group. Specific examples of such a substituted sulfinyl group include a hexylsulfinyl group, a benzylsulfinyl group, and a tolylsulfinyl group.

The substituted phosphono group denoted by R¹ to R¹⁰ means one in which one or two hydroxy groups on the phosphono group are replaced by another organooxo group, and preferred examples thereof include the above-mentioned dialkylphosphono group, diarylphosphono group, alkylarylphosphono group, monoalkylphosphono group, and monoarylphosphono group. Among them, a dialkylphosphono group and a diarylphosphono group are more preferable. Specific examples thereof include a diethylphosphono group, a dibutylphosphono group, and a diphenylphosphono group.

The phosphonate group (-PO₃H⁻, -PO₃²⁻) denoted by R¹ to R¹⁰ means a conjugate base anion group derived from acid first dissociation or acid second dissociation of a phosphono group (-PO₃H₂). It is usually preferably used together with a counter cation. Examples of such a counter cation include those generally known, that is, various types of onium species (ammonium, sulfonium, phosphonium, iodonium, azinium, etc.) and metal ions (Na⁺, K⁺, Ca²⁺, Zn²⁺, etc.).

The substituted phosphonate group denoted by R¹ to R¹⁰ is a conjugate base anion group formed by replacing a hydroxy group of the above-mentioned substituted phosphono groups by one organooxo group, and specific examples thereof include conjugate bases of the above-mentioned monoalkylphosphono group (-PO₃H(alkyl)) and monoarylphosphono group (-PO₃H(aryl)).

Furthermore, R¹ to R¹⁰ may be bonded to each other so as to form, together with carbon atoms to which they are bonded, a condensed ring of a benzene ring or a hetero ring.

Preferred embodiments of R¹ to R¹⁰ are listed below.

In the formulae, R¹ to R¹⁰ independently denote a hydrogen atom, a halogen atom (a chlorine atom, a bromine atom), or a monovalent group. Furthermore, any two or more of R¹ to R¹⁰ may be bonded to form a ring structure, and this ring structure may further have a substituent.

Examples of the monovalent group include an amino group, a substituted amino group, a substituted carbonyl group, a hydroxy group, a substituted oxy group, a thiol group, a thioether group, a silyl group, a nitro group, a cyano group, an alkyl group, an alkenyl group, an aryl group, a heterocyclic group, a substituted sulfonyl group, a sulfonate group, a substituted sulfinyl group, a substituted phosphono group, a phosphonate group, and a substituted phosphonate group, and they may further have a substituent where this is possible.

As the alkyl group denoted by R¹ to R¹⁰, straight-chain, branched, or cyclic alkyl groups having 1 to 10 carbons can be cited. Among them, a straight-chain alkyl group having 1 to 6 carbons, a branched alkyl group having 3 to 6 carbons, and a cyclic alkyl group having 5 to 10 carbons are more preferable. Specific examples thereof include a methyl group, an ethyl group, a propyl group, a butyl group, a pentyl group, a hexyl group, an isopropyl group, an isobutyl group, an *s-*butyl group, a *t*-butyl group, an isopentyl group, a neopentyl group, a 1-methylbutyl group, an isohexyl group, a cyclohexyl group, a cyclopentyl group, and a 2-norbornyl group.

When the alkyl group denoted by R¹ to R¹⁰ has a substituent (that is, it is a substituted alkyl group), as the alkyl moiety of the substituted alkyl group a divalent organic residue formed by removing any one hydrogen atom on an alkyl group having 1 to 10 carbons can be cited, and a preferred range for the number of carbons is also the same as that for the above-mentioned alkyl group.

When R¹ to R¹⁰ are substituted alkyl groups, specific preferred examples thereof include a bromomethyl group, a 2-chloroethyl group, a trifluoromethyl group, a methoxymethyl group, a methoxycarbonylmethyl group, a butoxymethyl group, an *s*-butoxybutyl group, a methoxyethoxyethyl group, an allyloxymethyl group, a phenoxymethyl group, a methylthiomethyl group, a tolylthiomethyl group, a pyridylmethyl group, a trimethylsilylmethyl group, a methoxyethyl group, an ethylaminoethyl group, a diethylaminopropyl group, a benzoyloxymethyl group, an acetylaminoethyl group, an N-methylbenzoylaminopropyl group, a 2-oxoethyl group, a methoxycarbonylethyl group, an allyloxycarbonylbutyl group, a chlorophenoxycarbonylmethyl group, an *N*-methylcarbamoylethyl group, an *N,N-*dipropylcarbamoylmethyl group, a sulfonatobutyl group, an *N*-ethylsulfamoylmethyl group, a diethylphosphonobutyl group, a benzyl group, a phenethyl group, an α-methylbenzyl group, a 1-methyl-1-phenylethyl group, a *p*-methylbenzyl group, an allyl group, a 2-butenyl group, a 2-methylallyl group, a 2-propynyl group, and a 3-butynyl group.

As a preferred alkenyl group denoted by R¹ to R¹⁰, an alkenyl group having 2 to 8 carbons can be cited. The alkenyl group may further have a substituent. Examples of a substituent that can be introduced include a halogen atom, an alkyl group, a substituted alkyl group, an aryl group, and a substituted aryl group, and a halogen atom and a straight-chain, branched, or cyclic alkyl group having 1 to 6 carbons are preferable. Specific examples of the alkenyl group include a vinyl group, a 1-propenyl group, a 1-butenyl group, a 1-pentenyl group, a 1-hexenyl group, a 1-methyl-1-propenyl group, a 2-methyl-1-propenyl group, a 2-methyl-1-butenyl group, and a 2-phenyl-1-ethenyl group.

As a preferred alkynyl group denoted by R¹ to R¹⁰, an alkynyl group having 2 to 8 carbons can be cited. Specific examples thereof include an ethynyl group, a 1-propynyl group; and a 1-butynyl group.

Specific preferred examples of the aryl group denoted by R¹ to R¹⁰ include a phenyl group, a tolyl group, a chlorophenyl group, a methoxyphenyl group, and a naphthyl group.

As the heterocyclic group denoted by R¹ to R¹⁰, a nitrogen, oxygen, or sulfur atom-containing 5- or 6-membered heterocyclic group is preferable. Specific examples thereof include a pyrrole ring group, a furan ring group, a thiophene ring group, a benzopyrrole ring group, a benzofuran ring group, a benzothiophene ring group, an isoxazole ring group, an isothiazole ring group, an imidazole ring group, oxazole ring group, a thiazole ring group, a benzimidazole ring group, a benzoxazole ring group, a benzothiazole ring group, a quinoline ring group, a pyrimidine ring group, a quinazoline ring group, a quinoxaline ring group, a carbazole ring group, a piperidine ring group, a piperazine ring group, a morpholine ring group, an indole ring group, an indolizine ring group, a tetrazole ring group, and a triazine ring group. A pyrrole ring group, a benzopyrrole ring group, a carbazole ring group, and an indole ring group are more preferable.

The silyl group denoted by R¹ to R¹⁰ may have a substituent, and a silyl group having 3 to 10 carbons is preferable. Specific examples thereof include a trimethylsilyl group, a triethylsilyl group, and a tripropylsilyl group.

The thiol group denoted by R¹ to R¹⁰ may have a substituent, and a thiol group having 1 to 10 carbons is preferable. Specific examples thereof include a mercaptomethyl group, a mercaptoethyl group, a 4-mercaptocyclohexyl group, and a 4-mercaptophenyl group.

The thioether group denoted by R¹ to R¹⁰ may have a substituent, and a thioether group having 1 to 10 carbons is preferable. Specific examples thereof include alkylthio groups such as a methylthio group, an ethylthio group, and a cyclohexylthio group and arylthio groups such as a phenylthio group.

As the halogen atom denoted by R¹ to R¹⁰, a chlorine atom and a bromine atom are preferable.

Specific preferred examples of the substituted oxy group denoted by R¹ to R¹⁰ include a methoxy group, an ethoxy group, a propyloxy group, an isopropyloxy group, a butyloxy group, a pentyloxy group, a hexyloxy group, a benzyloxy group, an allyloxy group, a phenethyloxy group, a methoxyethoxy group, a phenoxyethoxy group, a phenoxy group, a tolyloxy group, a xylyloxy group, a mesityloxy group, a methoxyphenyloxy group, a chlorophenyloxy group, and a bromophenyloxy group.

The amino group denoted by R¹ to R¹⁰ may be a substituted amino group, including an amide group. Specific preferred examples of the substituted amino group include a methylamino group, an ethylamino group, a diethylamino group, a morpholino group, a piperidino group, a pyrrolidino group, a phenylamino group, a benzoylamino group, and an acetylamino group.

As a preferred substituted sulfonyl group denoted by R¹ to R¹⁰, an alkylsulfonyl group and an arylsulfonyl group can be cited. Specific examples of such a substituted sulfonyl group include a methylsulfonyl group, a butylsulfonyl group, a phenylsulfonyl group, and a chlorophenylsulfonyl group.

As a preferred substituted carbonyl group denoted by R¹ to R¹⁰, a formyl group, an acyl group, an alkoxycarbonyl group, and an aryloxycarbonyl group can be cited. Specific examples thereof include a formyl group, an acetyl group, a benzoyl group, a carboxy group, a methoxycarbonyl group, an ethoxycarbonyl group, and an allyloxycarbonyl group.

As a preferred substituted sulfinyl group denoted by R¹ to R¹⁰, an alkylsulfinyl group and an arylsulfinyl group can be cited. Specific examples of such a substituted sulfinyl group include a hexylsulfinyl group, a benzylsulfinyl group, and a tolylsulfinyl group.

As a preferred substituted phosphono group denoted by R¹ to R¹⁰, a dialkylphosphono group, a diarylphosphono group, an alkylarylphosphono group, a monoalkylphosphono group, and a monoarylphosphono group can be cited. Among them, a dialkylphosphono group and a diarylphosphono group are more preferable. Specific examples thereof include a diethylphosphono group, a dibutylphosphono group, and a diphenylphosphono group.

The organic pigment represented by Formula (A) is preferably an organic pigment exhibiting a violet color. Examples of the organic pigment exhibiting a violet color represented by Formula (A) are listed below, but the present invention is not limited thereto.

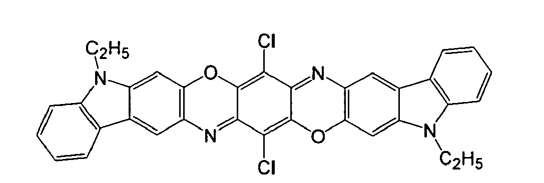

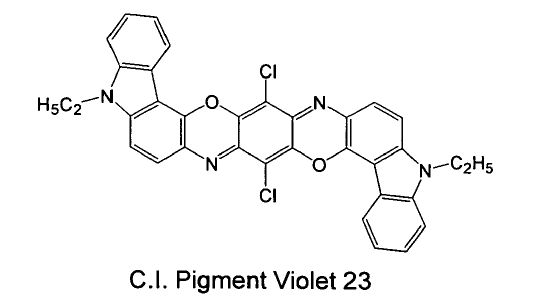

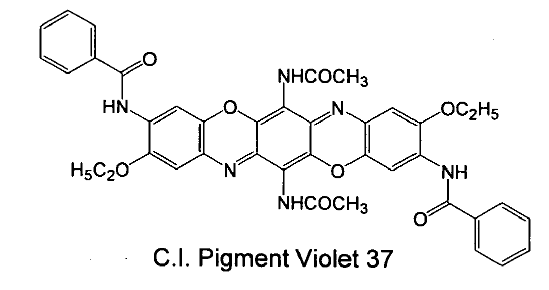

For dispersion of the organic pigment, for example, dispersing equipment such as a ball mill, a sand mill, an attritor, a roll mill, a jet mill, a homogenizer, a paint shaker, a kneader, an agitator, a Henschel mixer, a colloidal mill, an ultrasonic homogenizer, a pearl mill, or a wet type jet mill may suitably be used.

In the present invention, it is particularly preferable to add component (B) when dispersing the organic pigment.

Furthermore, when dispersing the organic pigment, depending on the type of each pigment a synergist may be added as necessary as a dispersion aid. The content of the dispersion aid in an ink composition is preferably at least 1 part by weight but no greater than 50 parts by weight (in the present invention, 'at least 1 part by weight but no greater than 50 parts by weight' is also written as '1 to 50 parts by weight' or '1 part by weight to 50 parts by weight', the same applies below) relative to 100 parts by weight of the organic pigment.

A dispersion medium used when dispersing the organic pigment in an ink composition is not particularly limited, and it may be selected appropriately according to the intended application; for example, a low molecular weight actinic radiation-curable compound may be used as the dispersion medium, or a solvent may be used as the dispersion medium. However, the ink composition of the present invention is a radiation-curing ink composition, and since the ink composition is cured after being applied onto a recording medium, it is preferable that it does not contain a solvent and is solvent-free. This is because, if solvent remains in a cured ink image, the solvent resistance is degraded, and the VOC (Volatile Organic Compound) problem of residual solvent occurs. Because of this, from the viewpoint of dispersion suitability and improvement of ease of handling of the ink composition it is preferable that an actinic radiation-curable compound is used as the dispersion medium, and a polymerizable compound having the lowest viscosity is selected therefrom.

That is, in the present invention, it is preferable to disperse component (A) (at least one type of organic pigment exhibiting an orange, violet, or green color) in an actinic radiation-curable compound using component (B) as a dispersant, thus giving an organic pigment dispersion.

The average particle size of the organic pigment is not particularly limited and may be selected appropriately according to the intended application, but since the finer it is the better coloring properties, it is preferably on the order of 0.01 to 0.4 µm, and more preferably 0.02 to 0.2 µm. The maximum particle size of the organic pigment is preferably no greater than 3 µm, and more preferably no greater than 1 µm. The particle size of the organic pigment may be adjusted by selection of the organic pigment, dispersing agent, and dispersion medium and setting of dispersion conditions and filtration conditions; head nozzle clogging can be suppressed by controlling the particle size of the organic pigment, and it is thus possible to maintain the storage stability of an ink composition, and the transparency and curing sensitivity of an ink composition.

In the present invention, since component (B), which has excellent dispersibility and stability, is contained, even if a fine particulate organic pigment is used, a uniform and stable ink composition can be prepared. Furthermore, even if a dioxazine type compound organic pigment, which cannot be sufficiently dispersed by a conventional dispersant, is used, good dispersibility can be achieved, and an ink composition having excellent color reproduction can be obtained.

The particle size of the organic pigment in the ink composition may be measured by a known measurement method. Specifically, it may be measured by a centrifugal sedimentation light transmission method, an X-ray transmission method, a laser diffraction/scattering method, or a dynamic light scattering method.

The content of the organic pigment in the ink composition is preferably 1 to 20 wt %, and more preferably 2 to 10 wt %.

### (B) Polymer compound derived from monomer represented by Formula (1-1), polymer compound derived from monomer represented by Formula (2-1), and polymer represented by Formula (3-1)

The inkjet ink composition of the present invention comprises at least one type selected from the group consisting of a polymer compound derived from a monomer represented by Formula (1-1), a polymer compound derived from a monomer represented by Formula (2-1), and a polymer represented by Formula (3-1) (hereinafter, also called component (B)). The polymer compound derived from a monomer represented by Formula (1-1), the polymer compound derived from a monomer represented by Formula (2-1) and the polymer represented by Formula (3-1) is explained below.

### Polymer compound derived from monomer represented by Formula (1-1)

A polymer compound, which is component (B), used in the present invention may be a homopolymer of a monomer represented by Formula (1-1), and it is preferably a copolymer with a monomer that is copolymerizable with the above monomer, and more preferably a graft copolymer, which is described in detail later.

In the present invention, since the polymer compound derived from a monomer represented by Formula (1-1) is a polymer compound that acts or functions as a pigment-dispersing agent, has high affinity for component (A) above, has good adsorption on component (A), and comprises a specific repeating constituent unit, due to the steric repulsion effect of a polymer chain the ink composition of the present invention comprising component (B) has excellent dispersion stability. Component (B) shows good dispersibility even if it is used for a dioxazine type compound organic pigment, which is conventionally difficult to disperse in a stable manner.

### A monomer used in the present invention

A monomer used in the present invention is represented by the following Formula (1-1).

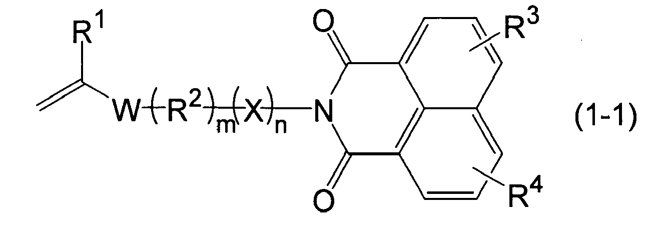

### R¹ in Formula (1-1)

In Formula (1-1), R¹ represents a hydrogen atom, or a substituted or unsubstituted alkyl group. The alkyl group has preferably 1 to 12 carbon atoms, more preferably 1 to 8 carbon atoms, still more preferably 1 to 4 carbon atoms. Examples of the alkyl group include a methyl group, an ethyl group, a propyl group, an n-butyl group, an i-butyl group, a t-butyl group, an n-hexyl group, a cyclohexyl group, a 2-hydroxyethyl group, a 3-hydroxypropyl group, a 2-hydroxypropyl group, and a 2-methoxyethyl group.

### R² in Formula (1-1)

R² represents an alkylene group and has preferably 1 to 12 carbon atoms, more preferably 1 to 8 carbon atoms, still more preferably 1 to 4 carbon atoms. Examples of the alkylene group include a methylene group, an ethylene group, a propylene group, a trimethylene group, and a tetramethylene group.

### W in Formula (1-1)

W represents -CO-, -C(=O)O-, -CONH-, -OC(=O)-, or a phenylene group.

### X in Formula (1-1)

X represents -CO-, -NHCO-, -OC(=O)-, -CH(OH)CH₂-, or -SO₂-.

### m and n in Formula (1-1)

m and n each independently represent 0 or 1.

### R³ and R⁴ in Formula (1-1)

R³ and R⁴ represent a monovalent substituent. R³ and R⁴ may be bound to each other to form a ring structure.

The monovalent substituent for R³ or R⁴ is preferably an alkyl group, an aryl group, a halogen atom, an alkoxy group, an aryloxy group, an alkylthio group, an arylthio group, an alkoxycarbonyl group, an acylamino group, a carbamoyl group, a cyano group, an alkylsulfonyl group, an arylsulfonyl group, an acyl group, or a sulfamoyl group, and more preferably, a halogen atom, an alkyl group, an aryl group, an alkoxy group, an aryloxy group, an alkylthio group, an arylthio group, an acylamino group, or a sulfonylamino group.

The substituent represented by R³ or R⁴ may be unsubstituted or substituted. For the substituent that can be introduced into the substituent, an alkyl group, an aryl group, a halogen atom, an alkoxy group, an aryloxy group, an alkoxycarbonyl group, an acyloxy group, an acylamino group, a carbamoyl group, a cyano group, a carboxy group, a sulfonyl group, and a heterocyclic residue are preferable.

The alkyl group for R³ or R⁴ is preferably an alkyl group having 1 to 30 total carbon atoms, more preferably, an alkyl group having 1 to 20 total carbon atoms. Specifically, a methyl group, an ethyl group, a butyl group, a hexyl group, an octyl group, a 2-ethylhexyl group, a 3,5,5-trimethylhexyl group, a dodecyl group, an octadecyl group, a benzyl group, a (4-ethoxyphenyl) methyl group, an N,N-diethyl carbamoyl methyl group, an N,N-dibutyl carbamoyl methyl group, a 1-(N,N-dibutyl carbamoyl) ethyl group, a 2-methoxy ethyl group, a 1-methyl-2-phenoxyethyl group, a (4-chlorophenyl) methyl group and a (2,4-dichlorophenyl) methyl group are preferable, and an ethyl group, a butyl group, a hexyl group, a benzyl group, an N,N-diethyl carbamoyl methyl group, an N,N-dibutyl carbamoyl methyl group, a 1-(N,N-dibutyl carbamoyl) ethyl group, a 1-methyl-2-phenoxyethyl group, a (4-chlorophenyl) methyl group and a (2,4-dichlorophenyl) methyl group are more preferable.

The aryl group for R³ or R⁴ is preferably an aryl group having 6 to 30 total carbon atoms, more preferably, an aryl group having 1 to 20 total carbon atoms. Specifically, a phenyl group, a 2-methylphenyl group, a 3-methylphenyl group, a 4-methylphenyl group, a 4-phenylphenoxy group, a 4-chlorophenyl group, a 2-methoxyphenyl group, a 3-ethoxyphenyl group, a 4-butoxyphenyl group, a 2,4-diethoxyphenyl group, a 2,5-dibutoxyphenyl group, a 4-phenoxyphenyl group, a naphthyl group, a 4-dibutyl carbamoyl phenyl group and a 4-dibutyl sulfamoyl phenyl group are preferable, and a phenyl group, a 2-methylphenyl group, a 3-methylphenyl group, a 4-methylphenyl group, a 4-chlorophenyl group, a 2-methoxyphenyl group, a 3-ethoxyphenyl group and a 4-butoxyphenyl group are more preferable.

The halogen atom for R³ or R⁴ is preferably a fluorine atom, a chlorine atom, a bromine atom or an iodine atom, and more preferably a fluorine atom or a chlorine atom.

The alkoxy group for R³ or R⁴ is preferably an alkoxy group having 1 to 30 total carbon atoms, more preferably, an alkoxy group having 1 to 20 total carbon atoms. For the substituent, a methoxy group, an ethoxy group, a propoxy group, a butoxy group, a hexyloxy group, a 2-ethylhexyloxy group, a 3,5,5-trimethyl hexyloxy group, an octyloxy group, a decyloxy group, a 2-phenoxyethoxy group, a 2-(3,5-di-t-butylphenoxy) ethoxy group, a dibutyl carbamoyl methoxy group, a hexadecyloxy group and an octadecyloxy group are preferable, and a methoxy group, an ethoxy group, a butoxy group, a hexyloxy group, a 2-ethyl hexyloxy group, a 3,5,5-trimethyl hexyloxy group, a 2-phenoxyethoxy group and a dibutyl carbamoyl methoxy group are more preferable.

The aryloxy group for R³ or R⁴ is preferably an aryloxy group having 6 to 30 total carbon atoms, more preferably, an aryloxy group having 6 to 20 total carbon atoms. For the substituent, a phenoxy group, a tolyloxy group, a 4-chlorophenyloxy group, a 4-acetamide phenyloxy group, a 2-butoxyphenyloxy group, a 2-benzoyl aminophenyloxy group, a 2,5-dimethoxy-4-nitrophenyloxy group and a 3-octyloxy phenyloxy group are preferable, and a phenoxy group, a tolyloxy group, a 4-chlorophenyloxy group, a 4-acetamide phenyloxy group, a 2-butoxyphenyloxy group and a 2,5-dimethoxy-4-nitrophenyloxy group are more preferable.

The alkylthio group for R³ or R⁴ is preferably an alkylthio group having 1 to 30 total carbon atoms, more preferably, an alkylthio group having 1 to 20 total carbon atoms. For the substituent, a methylthio group, an ethylthio group, a butylthio group, a hexylthio group, a 2-ethylhexylthio group, a 3,5,5-trimethylhexylthio group, an octylthio group, a decylthio group, a 2-phenoxyethylthio group, a 2-(3,5-di-t-butylphenoxy) ethylthio group, a dibutyl carbamoyl methylthio group, a hexadecylthio group and an octadecylthio group are preferable, and a methylthio group, an ethylthio group, a butylthio group, a hexylthio group, a 2-ethylhexylthio group, a 3,5,5-trimethylhexylthio group, a 2-phenoxyethylthio group and a dibutyl carbamoyl methylthio group are more preferable.

The arylthio group for R³ or R⁴ is preferably an arylthio group having 6 to 30 total carbon atoms, more preferably, an arylthio group having 6 to 20 total carbon atoms. For the substituent, a phenylthio group, a tolylthio group, a 4-chlorophenylthio group, a 4-acetamide phenylthio group, a 2-butoxyphenylthio group, a 2-benzoyl aminophenylthio group, a 2,5-dimethoxy-4-nitrophenylthio group, a 3-octyloxy phenylthio group are preferable, and a phenylthio group, a tolylthio group, a 4-chlorophenylthio group, a 4-acetamide phenylthio group, a 2-butoxyphenylthio group and a 2,5-dimethoxy-4-nitrophenylthio group are more preferable.

The alkoxycarbonyl group for R³ or R⁴ is preferably an alkoxycarbonyl group having 2 to 30 total carbon atoms, more preferably, an alkoxycarbonyl group having 2 to 20 total carbon atoms. For the substituent, a methoxycarbonyl group, an ethoxycarbonyl group, a butoxycarbonyl group, a phenoxycarbonyl group, a (2-ethylhexyl) oxycarbonyl group, a hexyloxycarbonyl group, an octyloxycarbonyl group, a (4-methoxyphenyl) oxycarbonyl group are preferable, and a methoxycarbonyl group, an ethoxycarbonyl group, a butoxycarbonyl group and a phenoxycarbonyl group are more preferable.

The acylamino group for R³ or R⁴ is preferably an acylamino group having 1 to 30 total carbon atoms, more preferably, an acylamino group having 1 to 20 total carbon atoms. For the substituent, a formylamino group, an acetylamino group, a butyrylamino group, a lauroylamino group, a benzoylamino group, a toluoylamino group, a phenoxyacetyl group, a (4-methoxyphenoxy)acetyl group, a 2',4'-dichlorobenzoylamino group, a 2',4'-di-t-amylbenzoylamino group, an acetylmethylamino group, a benzoylmethylamino group and an acetylbenzylamino group are preferable, and an acetylamino group, a butyrylamino group, a benzoylamino group, a toluoylamino group, a phenoxyacetyl group, a 2',4'-di-t-amylbenzoylamino group, an acetylmethylamino group, a benzoylmethylamino group and an acetylbenzylamino group are more preferable.

The carbamoyl group for R³ or R⁴ is preferably a carbamoyl group having 1 to 30 total carbon atoms, more preferably, a carbamoyl group having 1 to 20 total carbon atoms. For the substituent, a carbamoyl group, an N-phenylcarbamoyl group, an N-butylcarbamoyl group, an N-octylcarbamoyl group, an N,N-dimethylcarbamoyl group, an N,N-diethylcarbamoyl group, an N,N-dibutylcarbamoyl group, an N,N-dihexylcarbamoyl group, an N,N-diphenylcarbamoyl group, an N-methyl-N-phenylcarbamoyl group, an N-ethyl-N-phenylcarbamoyl group, an N-methyl-N-tolylcarbamoyl group, a morpholinocarbonyl group, a piperidinocarbonyl group and an N,N-bis(2-methoxyethyl)carbamoyl group are preferable, and an N-butylcarbamoyl group, an N-octylcarbamoyl group, an N-phenylcarbamoyl group, an N,N-diethylcarbamoyl group, an N,N-dibutylcarbamoyl group and an N-methyl-N-phenylcarbamoyl group are more preferable.

The alkylsulfonyl group for R³ or R⁴ is preferably an alkylsulfonyl group having 1 to 30 total carbon atoms, more preferably, an alkylsulfonyl group having 1 to 20 total carbon atoms. For the substituent, a methylsulfonyl group, an ethylsulfonyl group, a butylsulfonyl group, a hexylsulfonyl group and a benzylsulfonyl group are preferable, and a methylsulfonyl group and a benzylsulfonyl group are more preferable.

The arylsulfonyl group for R³ or R⁴ is preferably an arylsulfonyl group having 1 to 30 total carbon atoms, more preferably, an arylsulfonyl group having 1 to 20 total carbon atoms. For the substituent, a phenylsulfonyl group, a 4-methylphenylsulfonyl group, a naphthylsulfonyl group, a 4-methoxysulfonyl group and a 4-chlorophenyl sulfonylgroup are preferable, and a methyl sulfonyl group, a phenyl sulfonyl group and a 4-methylphenyl sulfonyl group are more preferable.

The acyl group for R³ or R⁴ is preferably an acyl group having 1 to 30 total carbon atoms, more preferably, an acyl group having 1 to 20 total carbon atoms. For the substituent, a formyl group, an acetyl group, a propionyl group, a pivaloyl group, a butyloyl group, a 4-phenoxy butyloyl group, a benzoyl group, a (4-ethoxyphenyl) carbonyl group, a (2-buthoxyphenyl) carbonyl group and a (4-chlorophenyl) carbonyl group are preferable, and a formyl group, an acetyl group, a propionyl group, a pivaloyl group, a benzoyl group and a (4-chlorophenyl) carbonyl group are more preferable.

The sulfamoyl group for R³ or R⁴ is preferably a sulfamoyl group having 1 to 30 total carbon atoms, more preferably, a sulfamoyl group having 1 to 20 total carbon atoms. For the substituent, a sulfamoyl group, an N-phenyl sulfamoyl group, an N,N-dimethyl sulfamoyl group, an N,N-diethyl sulfamoyl group, an N,N-dibutyl sulfamoyl group, an N,N-dihexyl sulfamoyl group, an N,N-diphenyl sulfamoyl group, an N-methyl-N-phenyl sulfamoyl group, an N-ethyl-N-phenyl sulfamoyl group, an N-methyl-N-tolyl sulfamoyl group, a morpholino sulfonyl group, a piperidino sulfonyl group and an N,N-bis (2-methoxyethyl) sulfonyl group are preferable, and a sulfamoyl group, an N-phenyl sulfamoyl group, an N,N-dibutyl sulfamoyl group, an N,N-diphenyl sulfamoyl group and an N-methyl-N-phenyl sulfamoyl group are more preferable.

In addition, a monomer used in the present invention is preferably represented by the following Formula (1-2).

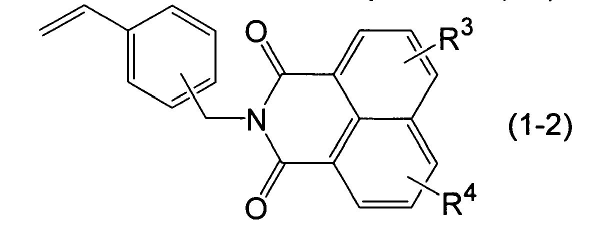

In Formula (1-2), R³ and R⁴ represent a monovalent substituent. R³ and R⁴ may be bound to each other to form a ring structure. Preferable examples of the substituent are the same as those described above in Formula (1-1).

Preferable specific examples of the monomer represented by Formula (1-1) or Formula (1-2) will be given below. The present invention is not limited to these examples.

### Exemplary compounds

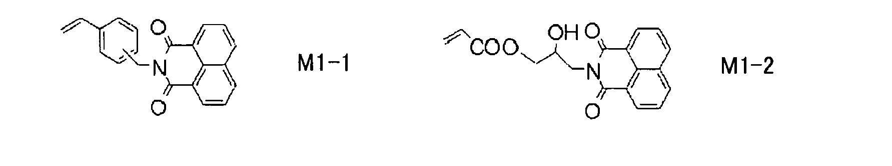

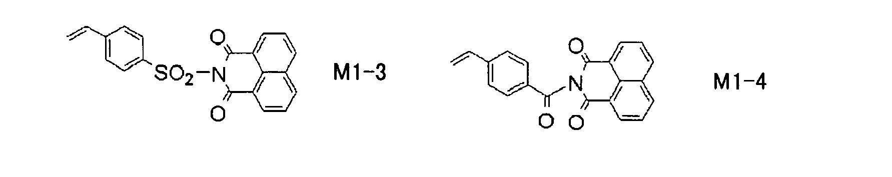

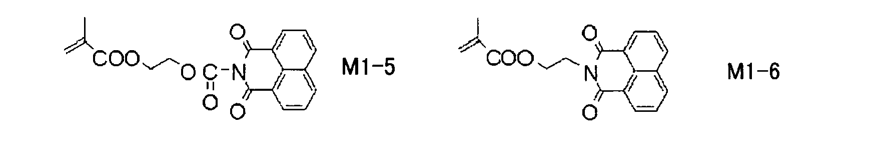

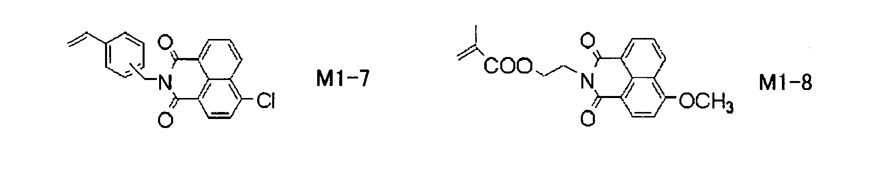

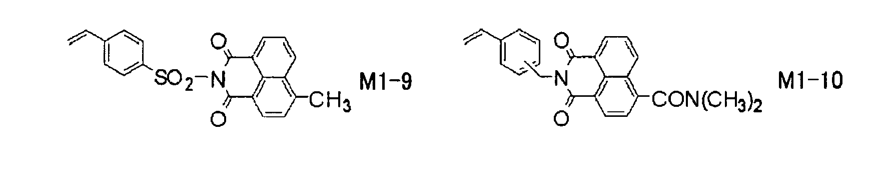

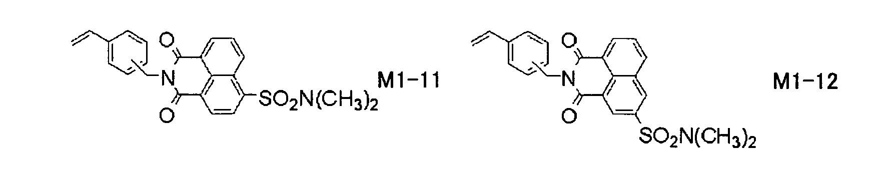

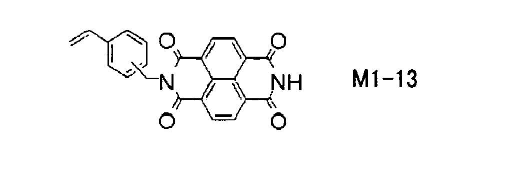

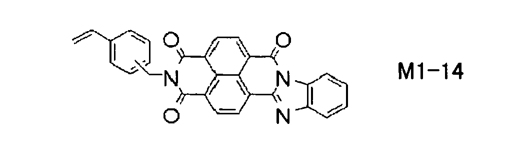

### (Polymer compound)

A polymer compound used in the present invention is a polymer that comprises a copolymer unit derived from the monomer (polymerizable compound) represented by the above Formula (1-1) or Formula (1-2).

The polymer compound is preferably a graft copolymer that contains, as a copolymer unit, a polymerizable oligomer having an ethylenically unsaturated double bond at its terminal.

Such a polymerizable oligomer having an ethylenically unsaturated double bond at its terminal is a compound having a given molecular mass and is therefore called a macromonomer.

The polymerizable oligomer contains a polymer chain moiety and a polymerizable functional group moiety at a terminal of the polymer chain. The polymerizable functional group moiety has an ethylenically unsaturated double bond. From the viewpoint of obtaining the desired graft copolymer, the group having an ethylenically unsaturated double bond is preferably present at only one of the terminals of the polymer chain. The group having an ethylenically unsaturated double bond is preferably a (meth)acryloyl group or a vinyl group, and more preferably a (meth)acryloyl group.

The polystyrene-equivalent number-average molecular mass (Mn) of the macromonomer is preferably in the range of 1,000 to 10,000, more preferably in the range of 2,000 to 9,000.

The polymer chain moiety is preferably a homopolymer or copolymer formed from at least one monomer selected from the group consisting of alkyl (meth)acrylates, styrene and derivatives thereof, acrylonitrile, vinyl acetate, and butadiene , or is polyethylene oxide, polypropylene oxide, and polycaprolactone.

The polymerizable oligomer is preferably an oligomer represented by the following Formula (1-3).

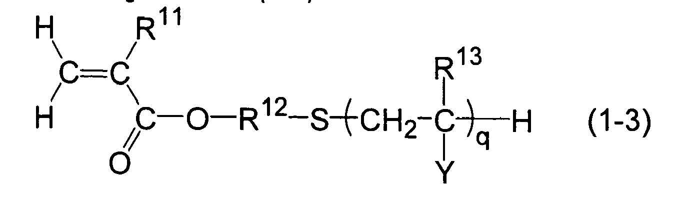

In Formula (1-3), R¹¹ and R¹³ each independently represent a hydrogen atom or a methyl group. R¹² represents an alkylene group having 1 to 12 carbon atoms (preferably an alkylene group having 2 to 4 carbon atoms, may have a substituent (for example, a hydroxy group) and may be bound to each other via e.g. an ester bond, ether bond or amide bond). Y represents a phenyl group, a phenyl group with an alkyl group having 1 to 4 carbon atoms, or -COOR¹⁴ (where R¹⁴ represents an alkyl group having 1 to 6 carbon atoms, a phenyl group, or an arylalkyl group having 7 to 10 carbon atoms), and q is from 20 to 200. Y is preferably a phenyl group or -COOR¹⁴ (where R¹⁴ is an alkyl group having 1 to 12 carbon atoms).

Preferable examples of the polymerizable oligomer (macromonomer) include polymers in which a (meth)acryloyl group is bound to one terminal of polymethyl (meth)acrylate, poly-n-butyl (meth)acrylate, poly-i-butyl (meth)acrylate or polystyrene. Examples of commercially available polymerizable oligomers include a polystyrene oligomer having a methacryloyl group at one terminal (Mn = 6,000, trade name: AS-6, manufactured by Toagosei Co., Ltd.), a polymethyl methacrylate oligomer having a methacryloyl group at one terminal (Mn = 6,000, trade name: AA-6, manufactured by Toagosei Co., Ltd.), and a poly-n-butylacrylate oligomer having a methacryloyl group at one terminal (Mn =6,000, trade name: AB-6, manufactured by Toagosei Co., Ltd.).

The polymerizable oligomer may be not only polymerizable oligomers represented by Formula (1-3) but also polymerizable oligomers represented by the following Formula (1-4).

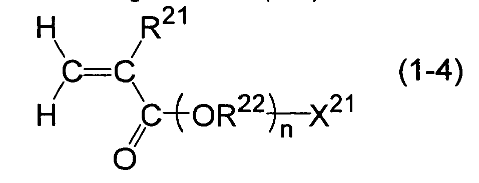

In Formula (1-4), R²¹ represents a hydrogen atom or a methyl group, and R²² represents an alkylene group having 1 to 8 carbon atoms. X²¹ represents-OR²³ or -OCOR²⁴, where R²³ and R²⁴ represent a hydrogen atom, an alkyl group or an aryl group. n denotes a number from 2 to 200.

In Formula (1-4), R²¹ represents a hydrogen atom or a methyl group. R²² represents an alkylene group having 1 to 8 carbon atoms, is preferably an alkylene group having 1 to 6 carbon atoms and is more preferably an alkylene group having 2 to 3 carbon atoms. X²¹ represents -OR²³ or -OCOR²⁴, where R²³ represents a hydrogen atom, an alkyl group having 1 to 18 carbon atoms, a phenyl group or a phenyl group substituted with an alkyl group having 1 to 18 carbon atoms. R²⁴ represents an alkyl group having 1 to 18 carbon atoms. Also, n denotes a number 2 to 200, preferably 5 to 100 and more preferably 10 to 100.

Examples of the polymerizable oligomer represented by Formula (1-4) include polyethylene glycol mono(meth)acrylate, polypropylene glycol mono(meth)acrylate, polyethylene glycol polypropylene glycol mono(meth)acrylate and polytetramethylene glycol monomethacrylate. These materials may be commercially available products or may be those synthesized properly.

The polymerizable monomers represented by Formula (1-4) are commercially available. Examples of these commercially available products include methoxypolyethylene glycol methacrylate (trade name: NK ESTER M-40G, M-90G and M-230G (manufactured by SHIN-NAKAMURA CHEMICAL Co., Ltd.); trade name: BLENMER-PME-100, PME-200, PME-400, PME-1000, PME-2000 and PME-4000 (manufactured by NOF CORPORATION)), polyethylene glycol monomethacrylate (trade name: BLENMER-PE-90, PE-200 and PE-350, manufactured by NOF CORPORATION), polypropylene glycol monomethacrylate (trade name: BLENMER-PP-500, PP-800 and PP-1000, manufactured by NOF CORPORATION), polyethylene glycol polypropylene glycol monomethacrylate (trade name: BLENMER-70PEP-370B, manufactured by NOF CORPORATION), polyethylene glycol polytetramethylene glycol monomethacrylate (trade name: BLENMER-55PET-800, manufactured by NOF CORPORATION) and polypropylene glycol polytetramethylene glycol monomethacrylate (trade name: BLENMER-NHK-5050, manufactured by NOF CORPORATION).

Further, the polymer for use in the present invention may be a copolymer with a monomer having a nitrogen atom. Examples of the monomer having a nitrogen atom include N,N-dimethylaminoethyl(meth)acrylate, N,N-dimethylaminopropyl(meth)acrylate, 1-(N, N-dimethylamino)-1,1-dimethylmethyl(meth)acrylate, N,N-dimethylaminohexyl(meth)acrylate, N,N-diethylaminoethyl(meth)acrylate, N,N-diisopropylaminoethyl(meth)acrylate, N,N-din-butylaminoethyl(meth)acrylate, N,N-di-i-butylaminoethyl(meth)acrylate, morpholinoethyl(meth)acrylate, piperidinoethyl(meth)acrylate, 1-pyrrolidinoethyl(meth)acrylate, N,N-methyl-2-pyrrolidylaminoethyl(meth)acrylate and N,N-methylphenylaminoethyl(meth)acrylate (the monomers mentioned above are (meth)acrylates); dimethyl(meth)acrylamide, diethyl(meth)acrylamide, diisopropyl (meth)acrylamide, di-n-butyl(meth)acrylamide, di-i-butyl(meth)acrylamide, morpholino(meth)acrylamide, piperidino(meth)acrylamide, N-methyl-2-pyrrolidyl(meth)acrylamide and N,N-methylphenyl(meth)acrylamide (the monomers mentioned above are (meth)acrylamides); 2-(N,N-dimethylamino)ethyl(meth)acrylamide, 2-(N,N-diethylamino)ethyl(meth)acrylamide, 3-(N,N-diethylamino)propyl(meth)acrylamide, 3-(N,N-dimethylamino)propyl(meth)acrylamide, 1-(N,N-dimethylamino)-1,1-dimethylmethyl(meth)acrylamide and 6-(N,N-diethylamino)hexyl(meth)acrylamide (the monomers mentioned above are aminoalkyl(meth)acrylamides); p-vinylbenzyl-N,N-dimethylamine, p-vinylbenzyl-N,N-diethylamine, and p-vinylbenzyl-N,N-dihexylamine (the monomers mentioned above are vinylbenzylamines); and 2-vinylpyridine, 4-vinylpyridine, and N-vinylimidazole. Among these, N,N-dimethylaminoethyl(meth)acrylate, N,N-dimethylaminopropyl(meth)acrylate, 3-(N, N-diethylamino)propyl(meth)acrylamide, 3-(N,N-dimethylamino)propyl(meth)acrylamide, 2-vinylpyridine, 4-vinylpyridine, and N-vinylimidazole are preferable.

Further, the polymer for use in the present invention may be a copolymer with other monomers copolymerizable with these polymers. Examples of the other monomers copolymerizable with these polymers may include unsaturated carboxylic acids (for example, (meth)acrylic acids, crotonic acid, itaconic acid, maleic acid and fumaric acid), aromatic vinyl compounds (for example, styrene, α-methylstyrene, vinyltoluene, 2-vinylpyridine, 4-vinylpyridine and N-vinylimidazole), alkyl(meth)acrylates (for example, methyl(meth)acrylate, ethyl(meth)acrylate, n-butyl(meth)acrylate and i-butyl(meth)acrylate), alkylaryl(meth)acrylates (for example, benzyl(meth)acrylate), substituted alkyl(meth)acrylates (for example, glycidyl(meth)acrylate and 2-hydroxyethyl(meth)acrylate), vinyl carboxylates (for example, vinyl acetate and vinyl propionate), vinyl cyanates (for example, (meth)acrylonitrile and α-chloroacrylonitrile) and aliphatic conjugate dienes (for example, 1,3-butadiene and isoprene). Among these compounds, unsaturated carboxylic acids, alkyl(meth)acrylates, alkylaryl(meth)acrylates, vinyl carboxylates and aromatic vinyl compounds are preferable.

The polymer used in the present invention is preferably a copolymer that comprises a copolymer unit derived from the polymerizable compound represented by Formula (1-1) or (1-2) and a repeating unit given from the polymerizable oligomer (macromonomer), or a copolymer that comprises a repeating unit represented by Formula (1-1), a repeating unit given from the polymerizable oligomer (macromonomer) and a repeating unit given from a monomer having a nitrogen atom. The above copolymer preferably contains the repeating unit represented by Formula (1-1) in a ratio 5% by weight to 70% by weight (particularly, 5% by weight to 30% by weight) based on all repeating units. In addition, the above copolymer preferably contains the repeating unit given from the polymerizable oligomer (macromonomer) in a ratio 30% by weight to 95% by weight (particularly, 50% by weight to 90% by weight) based on all repeating units. The above copolymer preferably contains the repeating unit derived from the above monomer containing nitrogen containing group in a ratio 5% by weight to 80% by weight (particularly, 5% by weight to 50% by weight) based on all repeating units.

When the additional monomer copolymerizable with these repeating units is used, the quantity of the repeating units derived from the additional monomer is preferably in the range of 5% by weight to 30% by weight based on the total quantity of the repeating units in the copolymer. The weight-average molecular mass (Mw) of the copolymer is preferably in the range of 1,000 to 200,000, more preferably in the range of 10,000 to 100,000. This weight-average molecular mass is a polystyrene equivalent weight-average molecular mass determined by gel permeation chromatography (carrier: tetrahydrofuran).

The structure of the copolymer can be analyzed, for example, by performing ¹H-NMR measurement (a measurement using Mercury (300 MHz) manufactured by Varian, Inc.).

Examples of the graft copolymer that can be suitably used for the polymer used in the present invention will be shown below; however, these examples are not intended to limit the present invention.
1-1) A copolymer of the monomer, represented by M1-1 of the exemplary compounds, and polymethylmethacrylate having a methacryloyl group at its terminal
1-2) A copolymer of the monomer, represented by M1-1 of the exemplary compounds, and polyethylene glycol mono(meth)acrylate
1-3) A copolymer of the monomer, represented by M1-1 of the exemplary compounds, and polycaprolactone having a methacryloyl group at its terminal
1-4) A copolymer of the monomer, represented by M1-1 of the exemplary compounds, and polybutyl acrylate having a methacryloyl group at its terminal
1-5) A copolymer of the monomer, represented by M1-3 of the exemplary compounds, and polymethylmethacrylate having a methacryloyl group at its terminal
1-6) A copolymer of the monomer, represented by M1-4 of the exemplary compounds, and polymethylmethacrylate having a methacryloyl group at its terminal
1-7) A copolymer of the monomer, represented by M1-5 of the exemplary compounds, and polyethylene glycol mono(meth)acrylate
1-8) A copolymer of the monomer, represented by M1-1 of the exemplary compounds, 3-(N,N-dimethylamino)propyl acrylamide, and polymethylmethacrylate having a methacryloyl group at its terminal
1-9) A copolymer of the monomer, represented by M1-1 of the exemplary compounds, p-vinylbenzyl-N,N-dimethylamine, and polymethylmethacrylate having a methacryloyl group at its terminal
1-10) A copolymer of the monomer, represented by M1-1 of the exemplary compounds, 3-(N,N-dimethylamino)propyl acrylamide, and polybutyl acrylate having a methacryloyl group at its terminal
1-11) A copolymer of the monomer, represented by M1-1 of the exemplary compounds, 3-(N,N-dimethylamino)ethyl (meth)acrylate, and polymethylmethacrylate having a methacryloyl group at its terminal
1-12) A copolymer of the monomer, represented by M1-1 of the exemplary compounds, 2-(N,N-dimethylamino)ethyl (meth)acrylate, and polymethylmethacrylate having a methacryloyl group at its terminal
1-13) A copolymer of the monomer, represented by M1-1 of the exemplary compounds, 3-(N,N-dimethylamino)propyl acrylamide, polymethylmethacrylate having a methacryloyl group at its terminal, and polyethylene glycol mono(meth)acrylate
1-14) A copolymer of the monomer, represented by M1-1 of the exemplary compounds, N,N-dimethylacrylamide, and polymethylmethacrylate having a methacryloyl group at its terminal
1-15) A copolymer of the monomer, represented by M1-1 of the exemplary compounds, methyl (meth)acrylate, and polymethylmethacrylate having a methacryloyl group at its terminal
1-16) A copolymer of the monomer, represented by M1-1 of the exemplary compounds, methacrylic acid, and polymethylmethacrylate having a methacryloyl group at its terminal
1-17) A copolymer of the monomer, represented by M1-1 of the exemplary compounds, cyclohexyl (meth)acrylate, and polymethylmethacrylate having a methacryloyl group at its terminal
1-18) A copolymer of the monomer, represented by M1-1 of the exemplary compounds, 2-hydroxyethyl (meth)acrylate, and polymethylmethacrylate having a methacryloyl group at its terminal
1-19) A copolymer of the monomer, represented by M1-7 of the exemplary compounds, 3-(N,N-dimethylamino)propyl acrylamide, and polymethylmethacrylate having a methacryloyl group at its terminal
1-20) A copolymer of the monomer, represented by M1-12 of the exemplary compounds, 3-(N,N-dimethylamino)propyl acrylamide, and polymethylmethacrylate having a methacryloyl group at its terminal
1-21) A copolymer of the monomer, represented by M1-13 of the exemplary compounds, 3-(N,N-dimethylamino)ethyl (meth)acrylate, and polymethylmethacrylate having a methacryloyl group at its terminal

Such graft copolymers can be obtained by radical polymerization, in a solvent, of the polymerizable oligomer and, optionally, the monomer having a nitrogen atom and/or other additional monomers. In this polymerization, preferably a radical polymerization initiator (e.g., azo compounds such as 2,2'-azobis(isobutyronitrile) (AIBN) and 2,2'-azobis(2,4'-dimethylvaleronitrile), peroxides such as benzoyl peroxide, and persulfates such as potassium persulfates and ammonium persulfates) is used. In addition to the initiator, a chain transfer agent (e.g., 2-mercaptoethanol and dodecyl mercaptan) may be further added for the synthesis of the graft copolymer.

### Polymer compound derived from monomer represented by Formula (2-1)

The polymer compound, which is component (B), used in the present invention may be a homopolymer of a monomer represented by Formula (2-1), and is preferably a copolymer with another monomer that is copolymerizable with the above monomer, and more preferably a graft copolymer, which is explained in detail later.

In the present invention, since the polymer compound derived from a monomer represented by Formula (2-1) is a polymer compound that acts or functions as a pigment-dispersing agent, has high affinity for component (A) above, has good adsorption on component (A), and comprises a specific repeating constituent unit, due to the steric repulsion effect of a polymer chain the ink composition of the present invention comprising the polymer compound derived from a monomer represented by Formula (2-1) has excellent dispersion stability. The polymer compound derived from a monomer represented by Formula (2-1) shows good dispersibility even if it is used for a dioxazine type compound organic pigment, which is conventionally difficult to disperse in a stable manner.

### Monomer used in the present invention

The monomer used in the present invention is represented by Formula (2-1) below.

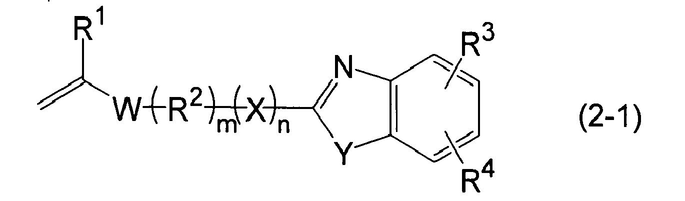

In Formula (2-1) above, R¹ denotes any of a hydrogen atom, a substituted alkyl group, and an unsubstituted alkyl group, R² denotes an alkylene group, W denotes any of -CO-, -C(=O)O-, -CONH-, -OC(=O)-, and a phenylene group, X denotes any of -O-, -S-, -C(=O)O-, -CONH-, -C(=O)S-, -NHCONH-, -NHC(=O)O-, - NHC(=O)S-, -OC(=O)-, -OC(=O)NH-, -CO-, -SO₂-, -CH(OH)CH₂NH-, - CH(OH)CH₂S-, -SO₂NH-, and -NHCO-, Y denotes any of -NR⁵-, -O-, and -S-, R⁵ denotes any of a hydrogen atom, an alkyl group, and an aryl group, R³ and R⁴ denote a monovalent substituent, R³ and R⁴ may be linked to each other to form a ring structure, and m and n are independently 0 or 1.

### R¹ in Formula (2-1)

In Formula (2-1) above, R¹ denotes a hydrogen atom or a substituted or unsubstituted alkyl group. The number of carbons of the alkyl group is preferably 1 to 12, more preferably 1 to 8, and yet more preferably 1 to 4. Examples of the alkyl group include a methyl group, an ethyl group, a propyl group, an *n*-butyl group, an *i*-butyl group, a *t*-butyl group, an *n*-hexyl group, a cyclohexyl group, a 2-hydroxyethyl group, a 3-hydroxypropyl group, a 2-hydroxypropyl group, and a 2-methoxyethyl group.

### R² in Formula (2-1)

R² denotes an alkylene group, and the number of carbons is preferably 1 to 12, more preferably 1 to 8, and yet more preferably 1 to 4. Examples of the alkylene group include a methylene group, an ethylene group, a propylene group, a trimethylene group, and a tetramethylene group.

### W in Formula (2-1)

W denotes -CO-, -C(=O)O-, -CONH-, -OC(=O)-, or a phenylene group.

### X in Formula (2-1)

X denotes -O-, -S-, -C(=O)O-, -CONH-, -C(=O)S-, -NHCONH-, -NHC(=O)O-, -NHC(=O)S-, -OC(=O)-, -OC(=O)NH-, -CO-, -SO₂-, -CH(OH)CH₂NH-, - CH(OH)CH₂S-, -SO₂NH-, or -NHCO-.

### Y in Formula (2-1)

Y denotes -NR⁵-, -O-, or -S-, and R⁵ denotes a hydrogen atom, an alkyl group, or an aryl group. The number of carbons of the alkyl group is preferably 1 to 12, more preferably 1 to 8, and yet more preferably 1 to 4. Examples of the alkyl group include a methyl group, an ethyl group, a propyl group, an *n*-butyl group, an *i*-butyl group, a *t*-butyl group, an *n*-hexyl group, a cyclohexyl group, a 2-ethylhexyl group, an octyl group, a benzyl group, a 2-hydroxyethyl group, a 3-hydroxypropyl group, a 2-hydroxypropyl group, and a 2-methoxyethyl group. The number of carbons of the aryl group is preferably 6 to 20, and more preferably 6 to 15. Preferred examples of the aryl group include a phenyl group, a 2-methylphenyl group, a 3-methylphenyl group, a 4-methylphenyl group, a 4-chlorophenyl group, a 2-methoxyphenyl group, a 3-ethoxyphenyl group, a 4-butoxyphenyl group, a 2,4-diethoxyphenyl group, a 4-phenoxyphenyl group, a naphthyl group, a 4-dibutylcarbamoylphenyl group, and a 4-dibutylsulfamoylphenyl group, and more preferred examples thereof include a phenyl group, a 2-methylphenyl group, a 3-methylphenyl group, a 4-methylphenyl group, a 4-chlorophenyl group, a 2-methoxyphenyl group, a 3-ethoxyphenyl group, and a 4-butoxyphenyl group.

### m and n in Formula (2-1)

m and n are independently 0 or 1.

### R³ and R⁴ in Formula (2-1)

R³ and R⁴ denote a monovalent substituent. R³ and R⁴ may be linked to each other to form a ring structure. Specific examples of the monovalent substituent denoted by R³ and R⁴ in Formula (2-1) are the same as specific examples of the monovalent substituent denoted by R³ and R⁴ in Formula (1-1), and a preferred range is also the same.

Furthermore, the monomer used in the present invention is preferably represented by Formula (2-2) below.

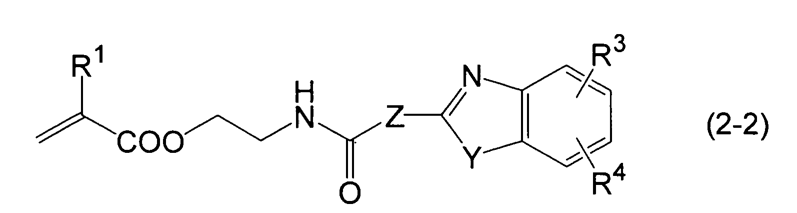

In Formula (2-2), R¹ denotes a hydrogen atom or a substituted or unsubstituted alkyl group. R³ and R⁴ denote a monovalent substituent. R³ and R⁴ may be linked to each other to form a ring structure. Preferred examples of the substituent are the same as in the case of Formula (2-1) above.

Y and Z independently denote -NR⁵-, -O-, or -S-, and R⁵ denotes a hydrogen atom, an alkyl group, or an aryl group. Preferred examples of a substituent are the same as in the case of Formula (2-1) above.

Furthermore, the monomer used in the present invention is preferably represented by Formula (2-3) below.

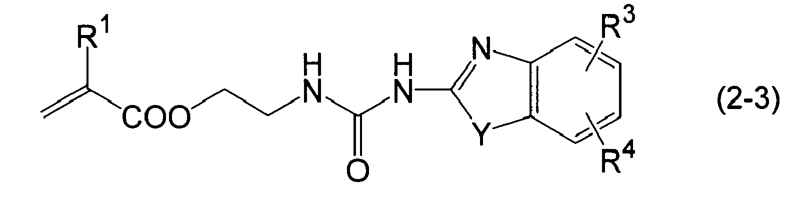

In Formula (2-3), R¹ denotes a hydrogen atom or a substituted or unsubstituted alkyl group. R³ and R⁴ denote a monovalent substituent. R³ and R⁴ may be linked to each other to form a ring structure. Preferred examples of the substituent are the same as in the case of Formula (2-1) above.

Y denotes -NR⁵-, -O-, or -S-, and R⁵ denotes a hydrogen atom, an alkyl group, or an aryl group. Preferred examples of a substituent are the same as in the case of Formula (2-1) above.

Specific preferred examples of compounds represented by Formula (2-1), Formula (2-2), or Formula (2-3) are listed below. The present invention is not limited thereto.

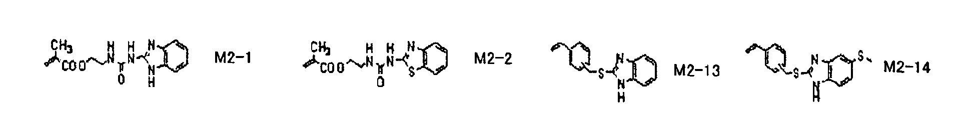

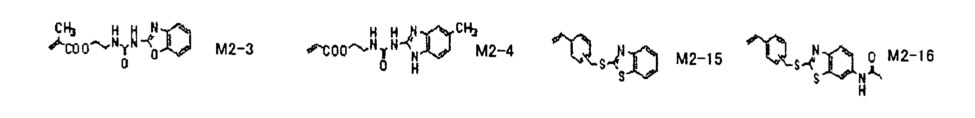

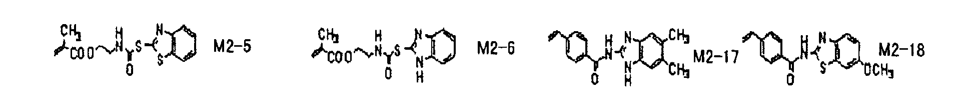

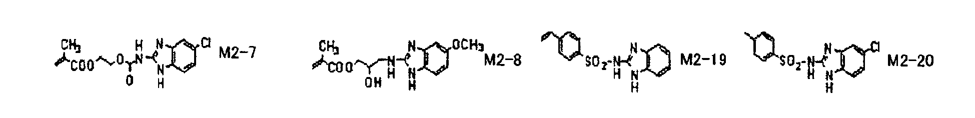

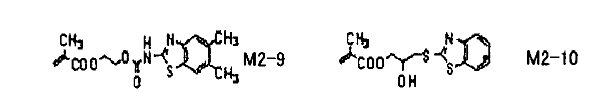

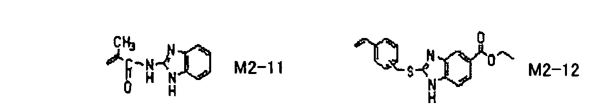

### Polymer compound

A polymer compound used in the present invention is a polymer that comprises a copolymer unit derived from the monomer represented by Formula (2-1) to Formula (2-3).

The polymer compound is preferably a graft copolymer that contains, as a copolymer unit, a polymerizable oligomer having an ethylenically unsaturated double bond at its terminal. Such a polymerizable oligomer having an ethylenically unsaturated double bond at its terminal is a compound having a given molecular mass and is therefore called a macromonomer.

Examples of the polymerizable oligomer include a polymerizable oligomer represented by Formula (1-3) above and a polymerizable oligomer represented by Formula (1-4) above, and a preferred range is also the same.

Furthermore, the polymer used in the present invention may be a copolymer with a nitrogen atom-containing monomer. Examples of the nitrogen atom-containing monomer include the above-mentioned nitrogen atom-containing monomer, which is a copolymerization component of a polymer compound derived from a monomer represented by Formula (1-1).

The polymer used in the present invention may be a copolymer with another monomer that is copolymerizable therewith. Examples of said monomer that is copolymerizable therewith include said other monomer, which is a copolymerization component of a polymer compound derived from a monomer represented by Formula (1-1).

The polymer used in the present invention is preferably a copolymer that comprises a copolymer unit derived from the polymerizable compound represented by Formula (2-1) to (2-3) and a repeating unit given from the polymerizable oligomer (macromonomer), or a copolymer that comprises a repeating unit represented by Formula (2-1), a repeating unit given from the polymerizable oligomer (macromonomer) and a repeating unit given from a monomer having a nitrogen atom. The above copolymer preferably contains the repeating unit represented by Formula (2-1) to Formula (2-3) in a ratio 5% by weight to 70% by weight (particularly, 5% by weight to 30% by weight) based on all repeating units. In addition, the above copolymer preferably contains the repeating unit given from the polymerizable oligomer (macromonomer) in a ratio 30% by weight to 95% by weight (particularly, 50% by weight to 90% by weight) based on all repeating units. The above copolymer preferably contains the repeating unit derived from the above monomer containing nitrogen containing group in a ratio 5% by weight to 80% by weight (particularly, 5% by weight to 50% by weight) based on all repeating units.

When the additional monomer copolymerizable with these repeating units is used, the quantity of the repeating units derived from the additional monomer is preferably in the range of 5% by weight to 30% by weight based on the total quantity of the repeating units in the copolymer. The weight-average molecular mass (Mw) of the copolymer is preferably in the range of 1,000 to 200,000, more preferably in the range of 10,000 to 100,000. This weight-average molecular mass is a polystyrene equivalent weight-average molecular mass determined by gel permeation chromatography (carrier: tetrahydrofuran).

The structure of the copolymer can be analyzed, for example, by performing ¹H-NMR measurement (a measurement using Mercury (300 MHz) manufactured by Varian, Inc.).

Examples of the graft copolymer that can be suitably used for the polymer of the present invention will be shown below; however, these examples are not intended to limit the present invention.
2-1) A copolymer of the monomer, represented by M2-1 of the exemplary compounds, and polymethylmethacrylate having a methacryloyl group at its terminal
2-2) A copolymer of the monomer, represented by M2-1 of the exemplary compounds, and polyethylene glycol mono(meth)acrylate
2-3) A copolymer of the monomer, represented by M2-1 of the exemplary compounds, and polycaprolactone having a methacryloyl group at its terminal
2-4) A copolymer of the monomer, represented by M2-1 of the exemplary compounds, and polybutyl acrylate having a methacryloyl group at its terminal
2-5) A copolymer of the monomer, represented by M2-2 of the exemplary compounds, and polymethylmethacrylate having a methacryloyl group at its terminal
2-6) A copolymer of the monomer, represented by M2-2 of the exemplary compounds, and polymethylmethacrylate having a methacryloyl group at its terminal
2-7) A copolymer of the monomer, represented by M2-5 of the exemplary compounds, and polyethylene glycol mono(meth)acrylate
2-8) A copolymer of the monomer, represented by M2-1 of the exemplary compounds, 3-(N,N-dimethylamino)propyl acrylamide, and polymethylmethacrylate having a methacryloyl group at its terminal
2-9) A copolymer of the monomer, represented by M2-1 of the exemplary compounds, p-vinylbenzyl-N,N-dimethylamine, and polymethylmethacrylate having a methacryloyl group at its terminal
2-10) A copolymer of the monomer, represented by M2-1 of the exemplary compounds, 3-(N,N-dimethylamino)propyl acrylamide, and polybutyl acrylate having a methacryloyl group at its terminal
2-11) A copolymer of the monomer, represented by M2-1 of the exemplary compounds, 3-(N,N-dimethylamino)ethyl (meth)acrylate, and polymethylmethacrylate having a methacryloyl group at its terminal
2-12) A copolymer of the monomer, represented by M2-13 of the exemplary compounds, 2-(N,N-dimethylamino)ethyl (meth)acrylate, and polymethylmethacrylate having a methacryloyl group at its terminal
2-13) A copolymer of the monomer, represented by M2-1 of the exemplary compounds, 3-(N,N-dimethylamino)propyl acrylamide, polymethylmethacrylate having a methacryloyl group at its terminal, and polyethylene glycol mono(meth)acrylate
2-14) A copolymer of the monomer, represented by M2-15 of the exemplary compounds, N,N-dimethylacrylamide, and polymethylmethacrylate having a methacryloyl group at its terminal
2-15) A copolymer of the monomer, represented by M2-1 of the exemplary compounds, methyl (meth)acrylate, and polymethylmethacrylate having a methacryloyl group at its terminal
2-16) A copolymer of the monomer, represented by M2-1 of the exemplary compounds, methacrylic acid, and polymethylmethacrylate having a methacryloyl group at its terminal
2-17) A copolymer of the monomer, represented by M2-1 of the exemplary compounds, cyclohexyl (meth)acrylate, and polymethylmethacrylate having a methacryloyl group at its terminal
2-18) A copolymer of the monomer, represented by M2-1 of the exemplary compounds, 2-hydroxyethyl (meth)acrylate, and polymethylmethacrylate having a methacryloyl group at its terminal
2-19) A copolymer of the monomer, represented by M2-7 of the exemplary compounds, 3-(N,N-dimethylamino)propyl acrylamide, and polymethylmethacrylate having a methacryloyl group at its terminal
2-20) A copolymer of the monomer, represented by M2-10 of the exemplary compounds, 3-(N,N-dimethylamino)propyl acrylamide, and polymethylmethacrylate having a methacryloyl group at its terminal
2-21) A copolymer of the monomer, represented by M2-19 of the exemplary compounds, 3-(N,N-dimethylamino)ethyl (meth)acrylate, and polymethylmethacrylate having a methacryloyl group at its terminal

Such graft copolymers can be obtained by radical polymerization, in a solvent, of the polymerizable oligomer and, optionally, the monomer having a nitrogen atom and/or other additional monomers. In this polymerization, a radical polymerization initiator (e.g., azo compounds such as 2,2'-azobis(isobutyronitrile) (AIBN) and 2,2'-azobis(2,4-dimethylvaleronitrile), peroxides such as benzoyl peroxide, and persulfates such as potassium persulfate and ammonium persulfate) is preferably used. In addition to the initiator, a chain transfer agent (e.g., 2-mercaptoethanol and dodecyl mercaptan) may be further added for the synthesis of the graft copolymer.

### (B) Polymer represented by Formula (3-1)

The polymer represented by Formula (3-1) has at the polymer ends a plurality of monovalent organic groups having a pigment adsorption structure that contains at least one selected from an organic pigment structure, a heterocyclic structure, an acidic group, a group having a basic nitrogen atom, an urea group, an urethane group, a group having a coordinating oxygen atom, a hydrocarbon group having 4 or more carbon atoms, an alkoxysilyl group having 6 or less carbon atoms, an epoxy group, an isocyanate group, and a hydroxy group. Therefore, the polymer excels in adsorptivity on solid surfaces, micelle formation ability, and surface activity, demonstrates a variety of actions and functions, and is advantageous as a pigment dispersant.

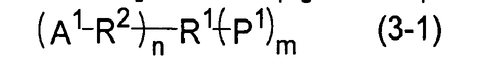

### Monovalent Organic Group: A¹

In Formula (3-1), A¹ represents a monovalent organic group that contains a pigment adsorption structure that contains at least one selected from an organic pigment structure, a heterocyclic structure, an acidic group, a group having a basic nitrogen atom, an urea group, an urethane group, a group having a coordinating oxygen atom, a hydrocarbon group having 4 or more carbon atoms, an alkoxysilyl group having 6 or less carbon atoms, an epoxy group, an isocyanate group, and a hydroxy group. The n groups of A¹ may be the same or different.

At least one pigment adsorption structure or two or more such structures may be contained in one A¹.

In the monovalent organic group the pigment adsorption structure is bonded to an organic linking group composed of 1 to 200 carbon atoms, 20 or less nitrogen atoms, 100 or less oxygen atoms, 1 to 400 hydrogen atoms, and 40 or less sulfur atoms.

The pigment adsorption structure itself may constitute the monovalent organic group.

### Pigment Adsorption Structure

The pigment adsorption structure constituting the A¹ will be described below.

The preferred examples of the organic pigment structure that is an example of the pigment adsorption structure include colorant structures of a phthalocyanine system, an insoluble azo system, an azo lake system, an anthraquinone system, a quinacridone system, a dioxazine system, a diketopyrrolopyrrole system, an anthrapydirine system, an anthrathrone system, an indanthrone system, a flavanthrone system, a perinone system, a perilene system, and a thioindigo system. Among them, the colorant structures of a phthalocyanine system, an azo lake system, an anthraquinone system, a dioxazine system, and a diketopyrrolopyrrole system are preferred, and the colorant structures of a phthalocyanine system, an anthraquinone system, and a diketopyrrolopyrrole system are especially preferred.

The preferred examples of the heterocyclic structure that is an example of the pigment adsorption structure include thiophene, furan, xanthene, pyrrole, pyrroline, pyrrolidine, dioxolan, pyrazole, pyrazoline, pyrazolidine, imidazole, oxazole, thiazole, oxadiazole, triazole, thiadiazole, pyran, pyridine, piperidine, dioxane, morpholine, pyridazine, pyrimidine, piperazine, triazine, trithian, isoindoline, isoindolinone, benzimidazolone, benzothiazole, succinimide, phthalimide, naphthalimide, hydantoin, indole, quinoline, carbazole, acridine, acridone and anthraquinone. Among them, pyrroline, pyrrolidine, pyrazole, pyrazoline, pyrazolidine, imidazole, triazole, pyridine, piperidine, morpholine, pyridazine, pyrimidine, piperazine, triazine, isoindoline, isoindolinone, benzimidazolone, benzothiazole, succinimide, phthalimide, naphthalimide, hydantoin, carbazole, acridine, acridone and anthraquinone are especially preferred.

The organic pigment structure or heterocyclic structure may further have a substituent. Examples of suitable substituents include an alkyl group having 1 to 20 carbon atoms (a methyl group, an ethyl group), an aryl group having 6 to 16 carbon atoms (a phenyl group, a naphthyl group), a hydroxy group, an amino group, a carboxy group, a sulfonamide group, an N-sulfonylamide group, an acyloxy group having 1 to 6 carbon atoms (an acetoxy group and the like), an alkoxy group having 1 to 20 carbon atoms (a methoxy group, an ethoxy group), a halogen atom (chlorine, bromine, and the like), an alkoxycarbonyl group having 2 to 7 carbon atoms (a methoxycarbonyl group, an ethoxycarbonyl group, a cyclohexyloxycarbonyl group, and the like), a cyano group, and a carbonic acid ester group having 2 to 10 carbon atoms (t-butyl carbonate and the like). These substituents may be bonded to the organic pigment structure or heterocyclic structure via a linking group composed of the below-described structural unit or a combination of such structural units.

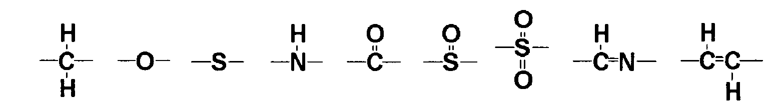

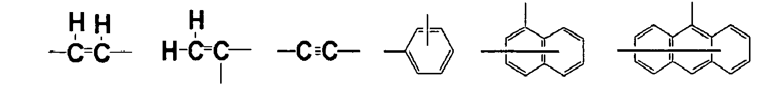

The preferred examples of the acidic group that is an example of the pigment adsorption structure include a carboxylic acid group, a sulfonic acid group, a monosulfuric acid ester group, a phosphoric acid group, a monophosphoric acid ester group, and a boric acid group. Among them, a carboxylic acid group, a sulfonic acid group, a monosulfuric acid ester group, a phosphoric acid group, and a monophosphoric acid ester group are preferred, and a carboxylic acid group, a sulfonic acid group, and a phosphoric acid group are especially preferred.

The preferred examples of the group having a basic nitrogen atom that is an example of the pigment adsorption structure include an amino group (-NH₂), a substituted amino group (-NHR⁸, -NR⁹R¹⁰, where R⁸, R⁹, R¹⁰ independently represent an alkyl group having 1 to 20 carbon atoms, an aryl group having 6 to 20 carbon atoms, and an aralkyl group having 7 to 20 carbon atoms), a guanidyl group represented by the following Formula (a1), and an amidinyl group represented by the following Formula (a2).

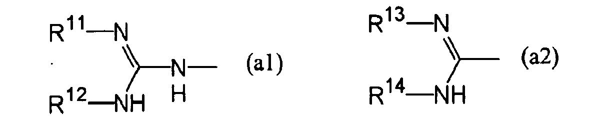

In Formula (a1), R¹¹ and R¹² independently represent an alkyl group having 1 to 20 carbon atoms, an aryl group having 6 to 20 carbon atoms, and an aralkyl group having 7 to 20 carbon atoms.

In Formula (a2), R¹³ and R¹⁴ independently represent an alkyl group having 1 to 20 carbon atoms, an aryl group having 6 to 20 carbon atoms, and an aralkyl group having 7 to 20 carbon atoms.

Among them, an amino group (-NH₂), a substituted amino group (-NHR⁸, -NR⁹R¹⁰, where R⁸, R⁹, and R¹⁰ independently represent an alkyl group having 1 to 10 carbon atoms, a phenyl group, a benzyl group), a guanidyl group represented by Formula (a1) (in Formula (a1), R¹¹ and R¹² independently represent an alkyl group having 1 to 10 carbon atoms, a phenyl group, a benzyl group), and an amidinyl group represented by Formula (a2) (in Formula (a2), R¹³ and R¹⁴ independently represent an alkyl group having 1 to 10 carbon atoms, a phenyl group, a benzyl group) are preferred, and an amino group (-NH₂), a substituted amino group (-NHR⁸, -NR⁹R¹⁰, where R⁸, R⁹, and R¹⁰ independently represent an alkyl group having 1 to 5 carbon atoms, a phenyl group, a benzyl group), a guanidyl group represented by Formula (a1) (in Formula (a1), R¹¹ and R¹² independently represent an alkyl group having 1 to 5 carbon atoms, a phenyl group, a benzyl group), and an amidinyl group represented by Formula (a2) (in Formula (a2), R¹³ and R¹⁴ independently represent an alkyl group having 1 to 5 carbon atoms, a phenyl group, a benzyl group) are especially preferred.

The preferred examples of the urea group that is an example of the pigment adsorption structure include -NR¹⁵CONR¹⁶R¹⁷ (here, R¹⁵, R¹⁶, and R¹⁷ are independently a hydrogen atom, or an alkyl group having 1 to 20 carbon atoms, an aryl group having 6 to 20 carbon atoms, and an aralkyl group having 7 to 20 carbon atoms). Among them, -NR¹⁵CONHR¹⁷ (here, R¹⁵ and R¹⁷ independently represent a hydrogen atom, or an alkyl group having 1 to 10 carbon atoms, an aryl group having 6 to 20 carbon atoms, and an aralkyl group having 7 to 20 carbon atoms) are preferred, and -NHCONHR¹⁷ (here, R¹⁷ is a hydrogen atom, or an alkyl group having 1 to 10 carbon atoms, an aryl group having 6 to 15 carbon atoms, and an aralkyl group having 7 to 15 carbon atoms) are especially preferred.

The preferred examples of the urethane group that is an example of the pigment adsorption structure include -NHCOOR¹⁸, -NR¹⁹COOR²⁰, -OCONHR²¹, -OCONR²²R²³ (here, R¹⁸, R¹⁹, R²⁰, R²¹, R²², and R²³ independently represent an alkyl group having 1 to 20 carbon atoms, an aryl group having 6 to 20 carbon atoms, and an aralkyl group having 7 to 20 carbon atoms). Among them, -NHCOOR¹⁸, -OCONHR²¹ (here, R¹⁸, R²¹ independently represent an alkyl group having 1 to 20 carbon atoms, an aryl group having 6 or more carbon atoms, and an aralkyl group having 7 or more carbon atoms) are preferred, and -NHCOOR¹⁸, -OCONHR²¹ (here, R¹⁸, R²¹ independently represent an alkyl group having 1 to 10 carbon atoms, an aryl group having 6 to 15 carbon atoms, and an aralkyl group having 7 to 15 carbon atoms) are especially preferred.

The preferred examples of the group having a coordinating oxygen atom that is an example of the pigment adsorption structure include an acetylacetonate group and crown ethers.

The preferred examples of the hydrocarbon group having 4 or more carbon atoms that is an example of the pigment adsorption structure include an alkyl group having 4 or more carbon atoms, an aryl group having 6 or more carbon atoms, and an aralkyl group having 7 or more carbon atoms. Among them, an alkyl group having 4 to 20 carbon atoms, an aryl group having 6 to 20 carbon atoms, and an aralkyl group having 7 to 20 carbon atoms are preferred, and an alkyl group having 4 to 15 carbon atoms (for example, an octyl group and a dodecyl group), an aryl group having 6 to 15 carbon atoms (for example, a phenyl group and a naphthyl group), and an aralkyl group having 7 to 15 carbon atoms (for example, a benzyl group) are especially preferred.

The preferred examples of the alkoxysilyl group that is an example of the pigment adsorption structure include an alkoxysilyl group having 6 or less carbon atoms (for example, a trimethoxysilyl group and a triethoxysilyl group.

### Organic Linking Group

The preferred examples of the organic linking group include organic linking groups composed of 1 to 100 carbon atoms, 10 or less nitrogen atoms, 50 or less oxygen atoms, 1 to 200 hydrogen atoms, and 20 or less sulfur atoms. The organic linking group may be substituted with a substituent.

The preferred specific examples of the organic linking group include groups composed for the following structural units or combinations thereof.

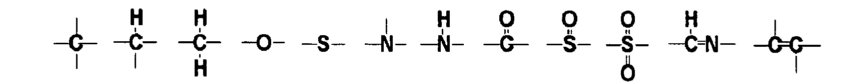

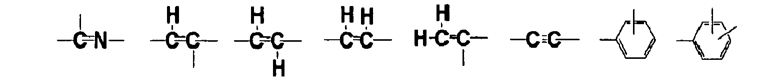

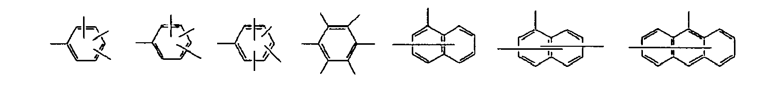

When the organic linking group has a substituent, examples of preferred substituents include alkyl groups having 1 to 20 carbon atoms (a methyl group, an ethyl group, and the like), an aryl group having 6 to 16 carbon atoms (a phenyl group, a naphthyl group, and the like), a hydroxy group, an amino group, a carboxy group, a sulfonamide group, an N-sulfonylamide group, an acyloxy group having 1 to 6 carbon atoms (an acetoxy group and the like), an alkoxy group having 1 to 6 carbon atoms (a methoxy group, an ethoxy group, and the like), a halogen atom such as chlorine and bromine, an alkoxycarbonyl group having 2 to 7 carbon atoms (for example, a methoxycarbonyl group, an ethoxycarbonyl group, and a cyclohexyloxycarbonyl group), cyano group, and a carbonic acid ester group having 2 to 10 carbon atoms (a t-butyl carbonate, and the like).

In accordance with the present invention, the A¹ is preferably a monovalent organic group that contains a pigment adsorption structure that contains at least one selected from the organic pigment structure, heterocyclic structure, acidic group, group having a basic nitrogen atom, urea group, and hydrocarbon group having 4 or more carbon atoms, and more preferably a monovalent organic group represented by Formula (3-4).

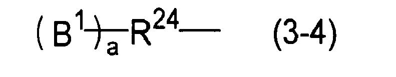

In Formula (3-4), B¹ represents the pigment adsorption structure (that is, the structure that contains at least one selected from an organic pigment structure, a heterocyclic structure, an acidic group, a group having a basic nitrogen atom, an urea group, an urethane group, a group having a coordinating oxygen atom, a hydrocarbon group having 4 or more carbon atoms, an alkoxysilyl group having 6 or less carbons, an epoxy group, an isocyanate group, and a hydroxy group), R²⁴ is a single bond or an (a + 1)-valent organic linking group. (a) is an integer of 1 to 10, preferably 1 to 7, more preferably 1 to 5, and especially 1 to 3. The (a) pigment adsorption structures B¹ may be the same or different. Examples of the (a + 1)-valent organic linking groups include groups composed of 1 to 100 carbon atoms, 10 or less nitrogen atoms, 50 or less oxygen atoms, 1 to 200 hydrogen atoms, and 20 or less sulfur atoms. Among the (a + 1)-valent organic linking groups, the especially preferred organic linking groups are composed of 1 to 10 carbon atoms, 5 or less nitrogen atoms, 10 or less oxygen atoms, 1 to 30 hydrogen atoms, and 5 or less sulfur atoms.

Examples of the pigment adsorption structure represented by the B¹ are identical to those of the organic adsorption structure constituting A¹ in Formula (3-1) above, and the preferred examples are also the same. Among them, the preferred pigment adsorption structure includes at least one selected from an organic pigment structure, a heterocyclic structure, an acidic group, a group having a basic nitrogen atom, an urea group, and a hydrocarbon group having 4 or more carbon atoms.

The preferred specific examples of the (a + 1)-valent organic linking group include groups composed for the following structural units or combinations thereof (ring structures may be also formed).

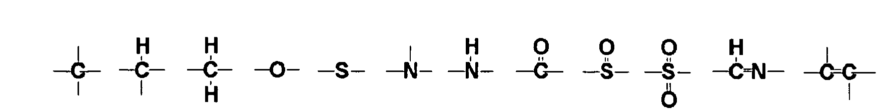

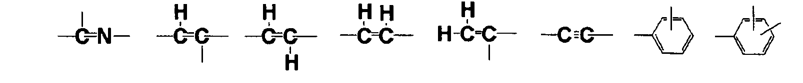

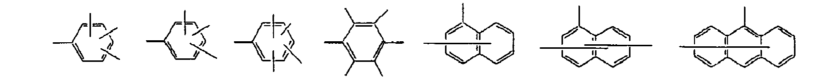

The (a +1)-valent organic linking group may have a substituent, examples of preferred substituents including alkyl groups having 1 to 20 carbon atoms (a methyl group, an ethyl group, and the like), an aryl group having 6 to 16 carbon atoms (a phenyl group, a naphthyl group, and the like), a hydroxy group, an amino group, a carboxy group (an acetoxy group and the like), a sulfonamide group, an N-sulfonylamide group, an acyloxy group having 1 to 6 carbon atoms, an alkoxy group having 1 to 6 carbon atoms (a methoxy group, an ethoxy group, and the like), a halogen atom (chlorine, bromine and the like), an alkoxycarbonyl group having 2 to 7 carbon atoms (a methoxycarbonyl group, an ethoxycarbonyl group, a cyclohexyloxycarbonyl group and the like), a cyano group, and a carbonic acid ester group having 2 to 10 carbon atoms (t-butyl carbonate, and the like).

### R²

R² in Formula (3-1) represents a single bond or a divalent organic linking group. The n groups R² may be the same or different.

The preferred examples of the divalent organic linking group include organic linking groups composed of 1 to 100 carbon atoms, 10 or less nitrogen atoms, 50 or less oxygen atoms, 1 to 200 hydrogen atoms, and 20 or less sulfur atoms. The divalent organic linking group may be substituted with a substituent.

The preferred specific examples of the divalent organic linking group include groups composed for the following structural units or combinations thereof.

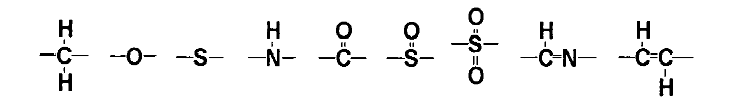

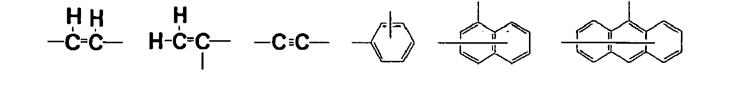

A single bond or a divalent organic linking group composed of 1 to 50 carbon atoms, 8 or less nitrogen atoms, 25 or less oxygen atoms, 1 to 100 hydrogen atoms, and 10 or less sulfur atoms is preferred, a single bond or a divalent organic linking group composed of 1 to 30 carbon atoms, 6 or less nitrogen atoms, 15 or less oxygen atoms, 1 to 50 hydrogen atoms, and 7 or less sulfur atoms is more preferred, and a single bond or a divalent organic linking group composed of 1 to 10 carbon atoms, 5 or less nitrogen atoms, 10 or less oxygen atoms, 1 to 30 hydrogen atoms, and 5 or less sulfur atoms is especially preferred as the R².

When the divalent organic linking group has a substituent, examples of preferred substituents include alkyl groups having 1 to 20 carbon atoms (a methyl group, an ethyl group, and the like), an aryl group having 6 to 16 carbon atoms (a phenyl group, a naphthyl group, and the like), a hydroxy group, an amino group, a carboxy group (an acetoxy group and the like), a sulfonamide group, an N-sulfonylamide group, an acyloxy group having 1 to 6 carbon atoms, an alkoxy group having 1 to 6 carbon atoms (a methoxy group, an ethoxy group, and the like), a halogen atom (chlorine, bromine, and the like), an alkoxycarbonyl group having 2 to 7 carbon atoms (a methoxycarbonyl group, an ethoxycarbonyl group, a cyclohexyloxycarbonyl group and the like), a cyano group, and a carbonic acid ester group (t-butyl carbonate and the like).

### R¹

R¹ in Formula (3-1) represents a single bond or a (m + n)-valent organic linking group. m + n is 3 to 10.

The examples of the (m + n)-valent organic linking group represented by the R¹ include groups composed of 1 to 100 carbon atoms, 10 or less nitrogen atoms, 50 or less oxygen atoms, 1 to 200 hydrogen atoms, and 20 or less sulfur atoms, and these groups may be substituted with a substituent.

The preferred specific examples of the (m +n)-valent organic linking group include groups (may include cyclic groups) composed for the following structural units or combinations thereof.

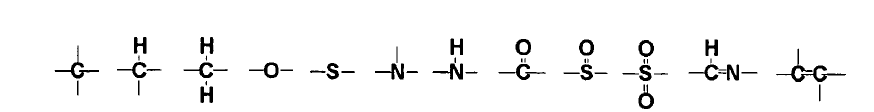

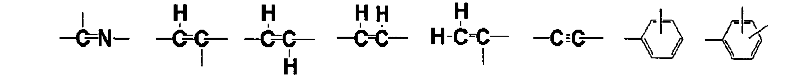

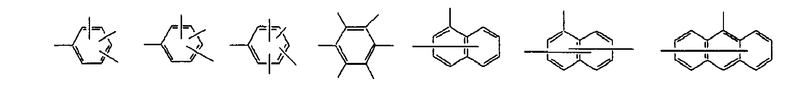

A group composed of 1 to 60 carbon atoms, 10 or less nitrogen atoms, 40 or less oxygen atoms, 1 to 120 hydrogen atoms, and 10 or less sulfur atoms is preferred, a group composed of 1 to 50 carbon atoms, 10 or less nitrogen atoms, 30 or less oxygen atoms, 1 to 100 hydrogen atoms, and 7 or less sulfur atoms is more preferred, and a group composed of 1 to 40 carbon atoms, 8 or less nitrogen atoms, 20 or less oxygen atoms, 1 to 80 hydrogen atoms, and 5 or less sulfur atoms is especially preferred as the (m +n)-valent organic linking group.

When (m + n)-valent organic linking group has a substituent, examples of preferred substituents include alkyl groups having 1 to 20 carbon atoms (a methyl group, an ethyl group, and the like), an aryl group having 6 to 16 carbon atoms (a phenyl group, a naphthyl group, and the like), a hydroxy group, an amino group, a carboxy group (an acetoxy group and the like), a sulfonamide group, an N-sulfonylamide group, an acyloxy group having 1 to 6 carbon atoms, an alkoxy group having 1 to 6 carbon atoms (a methoxy group, an ethoxy group, and the like), a halogen atom (chlorine, bromine, and the like), an alkoxycarbonyl group having 2 to 7 carbon atoms (a methoxycarbonyl group, an ethoxycarbonyl group, a cyclohexyloxycarbonyl group and the like), a cyano group, and a carbonic acid ester group having 2 to 10 carbon atoms (t-butyl carbonate and the like).

Specific examples (1) to (17) of the (m + n)-valent organic linking group represented by R¹ are shown below. However, the invention is not limited to these examples.

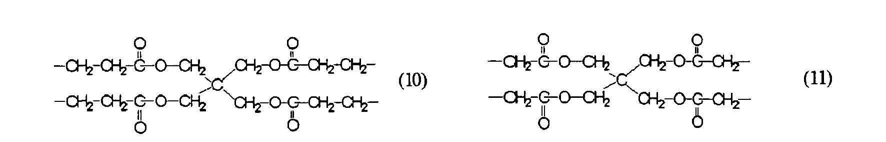

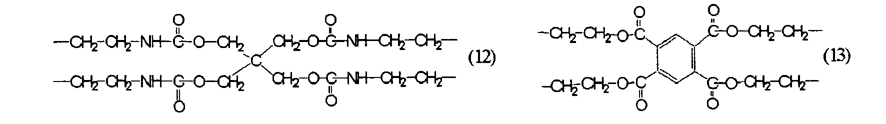

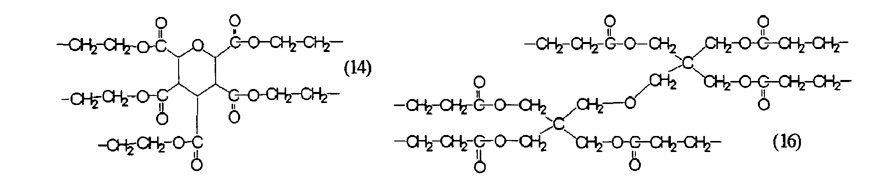

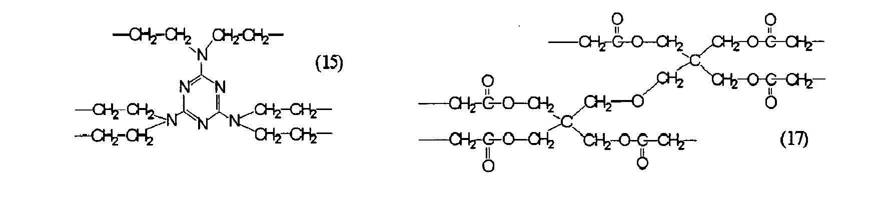

From among the specific examples (1) to (17), the following (m + n)-valent organic linking groups are especially preferred due to availability of starting materials, easiness of synthesis, and solubility in a variety of solvents.

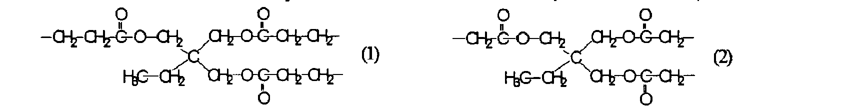

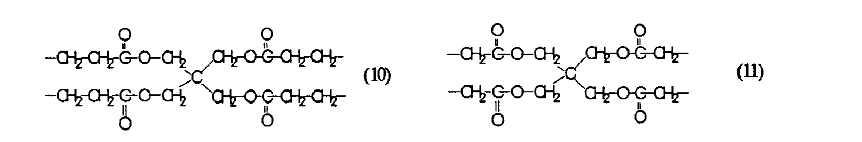

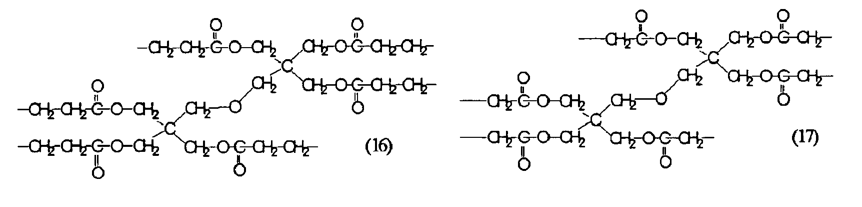

### m and n

In Formula (3-1), m represents 1 to 8, preferably 1 to 5, more preferably 1 to 4, and especially preferably 1 to 3.

Further, n represents 2 to 9, preferably 2 to 8, more preferably 2 to 7, and especially preferably 3 to 6.

### P¹

In Formula (3-1), P¹ represents a polymer skeleton that can be selected according to the object from among the well-known polymers. The m polymer skeletons P¹ may be the same or different.

In the polymer, the polymer skeleton is composed preferably of at least one selected from the group including polyvinyls, polyesters, polyethers, polyurethanes, polyamides, polyoxides, polysiloxanes and modified products thereof, or copolymers thereof for example, polyether/polyurethane copolymers, copolymers of polyether/vinyl monomers, and the like (they may be random copolymers block copolymers, or graft copolymers), more preferably of at least one selected from the group including polyvinyls, polyesters, polyethers, polyurethanes and modified products thereof or copolymers thereof, and especially preferably polyvinyls.

The polymer is preferably soluble in an organic solvent. Where the polymer has low affinity for the organic solvent, for example, when a pigment dispersant is used, the affinity for the dispersion medium is weakened and an adsorption layer sufficient for dispersion stabilization cannot be ensured.

Examples of the vinyl monomers include (meth)acrylic acid esters, crotonic acid esters, vinyl esters, maleic acid diesters, fumaric acid diesters, itaconic acid diesters, (meth)acrylamides, styrenes, vinyl ethers, vinyl ketones, olefins, maleimides, (meth)acrylonitrile, and vinyl monomers having an acidic group.

Examples of (meth)acrylic acid esters include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, amyl (meth)acrylate, n-hexyl (meth)acrylate, cyclohexyl (meth)acrylate, t-butylcyclohexyl (meth)acrylate, 2-ethylhexyl (meth)acrylate, t-octyl (meth)acrylate, dodecyl (meth)acrylate, octadecyl (meth)acrylate, acetoxyethyl (meth)acrylate, phenyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 2-methoxyethyl (meth)acrylate, 2-ethoxyethyl (meth)acrylate, 2-(2-methoxyethoxy)ethyl (meth)acrylate, 3-phenoxy-2-hydroxypropyl (meth)acrylate, 2-chloroethyl (meth)acrylate, glycidyl (meth)acrylate, 3,4-epoxycyclohexylmethyl (meth)acrylate, vinyl (meth)acrylate, 2-phenyl vinyl (meth)acrylate, 1-propenyl (meth)acrylate, allyl (meth)acrylate, 2-aryloxyethyl (meth)acrylate, propalgyl (meth)acrylate, benzyl (meth)acrylate, diethylene glycol monomethyl ether (meth)acrylate, diethylene glycol monoethyl ether (meth)acrylate, triethylene glycol monomethyl ether (meth)acrylate, triethylene glycol monoethyl ether (meth)acrylate, polyethylene glycol monomethyl ether (meth)acrylate, polyethylene glycol monoethyl ether (meth)acrylate, β-phenoxyethoxyethyl (meth)acrylate, nonylphenoxypolyethylene glycol (meth)acrylate, dicyclopentenyl (meth)acrylate, dicyclopentenyloxyethyl (meth)acrylate, trifluoroethyl (meth)acrylate, octafluoropentyl (meth)acrylate, perfluorooctylethyl (meth)acrylate, dicyclopentanyl (meth)acrylate, tribromophenyl (meth)acrylate, tribromophenyloxyethyl (meth)acrylate, and γ-butyrolactone (meth)acrylate.

Examples of crotonic acid esters include butyl crotonate and hexyl crotonate.

Examples of vinyl esters include vinyl acetate, vinyl chloracetate, vinyl propionate, vinyl butyrate, vinyl methoxyacetate, and vinyl benzoate.

Examples of maleic acid diesters include dimethyl maleate, diethyl maleate, and dibutyl maleate.

Examples of fumaric acid diesters include dimethyl fumarate, diethyl fumarate, and dibutyl fumarate.

Examples of itaconic acid diesters include dimethyl itaconate, diethyl itaconate, and dibutyl itaconate.

Examples of (meth)acrylamides include (meth)acrylamide, N-methyl (meth)acrylamide, N-ethyl (meth)acrylamide, N-propyl (meth)acrylamide, N-isopropyl (meth)acrylamide, N-n-butylacryl (meth)acrylamide, N-t-butyl (meth)acrylamide, N-cyclohexyl (meth)acrylamide, N-(2-methoxyethyl) (meth)acrylamide, N,N-dimethyl (meth)acrylamide, N,N-diethyl (meth)acrylamide, N-phenyl (meth)acrylamide, N-nitrophenyl (meth)acrylamide, N-ethyl-N-phenyl (meth)acrylamide, N-benzyl (meth)acrylamide, (meth)acryloyl morpholine, diacetone (meth)acrylamide, N-methylol (meth)acrylamide, N-hydroxyethyl (meth)acrylamide, vinyl (meth)acrylamide, N,N-diallyl (meth)acrylamide, and N-allyl (meth)acrylamide.

Examples of styrenes include styrene, methylstyrene, dimethylstyrene, trimethylstyrene, ethylstyrene, isopropylstyrene, butylstyrene, hydroxystyrene, methoxystyrene, butoxystyrene, acetoxystyrene, chlorostyrene, dichlorostyrene, bromostyrene, chloromethylstyrene, hydroxystyrene protected with a group (for example, t-Boc) that can be de-protected with an acidic substance, methyl vinyl benzoate, and α-methylstyrene.

Examples of vinyl ethers include methyl vinyl ether, ethyl vinyl ether, 2-chloroethyl vinyl ether, hydroxyethyl vinyl ether, propyl vinyl ether, butyl vinyl ether, hexyl vinyl ether, octyl vinyl ether, methoxyethyl vinyl ether, and phenyl vinyl ether.

Examples of vinyl ketones include methyl vinyl ketone, ethyl vinyl ketone, propyl vinyl ketone, and phenyl vinyl ketone.

Examples of olefins include ethylene, propylene, isobutylene, butadiene, and isoprene.

Examples of maleimides include maleimide, butyl maleimide, cyclohexyl maleimide, and phenyl maleimide.

Examples of suitable vinyl monomers include the above-described (meth)acrylonitrile and also heterocyclic rings with a substituted vinyl group (for example, vinyl pyridine, N-vinyl pyrrolidone, and vinyl carbazole), N-vinyl formamide, N-vinyl acetamide, N-vinyl imidazole, vinyl caprolactone. Further, vinyl monomers having a functional group such as an urethane group, an urea group, a sulfonamide group, a phenol group, and an imide group can be also used. Examples of monomers having an urethane group or an urea group can be appropriately synthesized by using an addition reaction of an isocyanate group and a hydroxy group or an amino group. More specifically, they can be appropriately synthesized by conducting an addition reaction of a monomer containing an isocyanate group with a compound containing one hydroxy group or a compound containing one primary or secondary amine group, or by an addition reaction of a monomer containing a hydroxy group or a monomer containing a primary or secondary amine group with monoisocyanate.

Examples of vinyl monomers having an acidic group include vinyl monomers having a carboxy group, vinyl monomers having a sulfonic acid group, vinyl monomers having a phosphoric acid group, vinyl monomers containing a phenolic hydroxy group, and vinyl monomers containing a sulfonamide group.

Examples of vinyl monomers having a carboxy group include (meth)acrylic acid, vinylbenzoic acid, maleic acid, monoalkyl maleates, fumaric acid, itaconic acid, crotonic acid, cinnamic acid, and acrylic acid dimer. Further, addition reaction products of monomers having a hydroxy group, such as 2-hydroxyethyl (meth)acrylate and a cyclic anhydride such as maleic anhydride, phthalic anhydride, and cyclohexanedicarboxylic acid anhydride, and ω-carboxypolycaprolactone mono(meth)acrylate can be also used. Further, anhydride-containing monomers such as maleic anhydride, itaconic anhydride, and citraconic anhydride may be used as precursors of the carboxy group. Among them, from the standpoint of copolymerization ability, cost, and solubility, (meth)acrylic acid is especially preferred.

Examples of vinyl monomers having a sulfonic acid group include 2-acrylamide-2-methylpropanesulfonic acid.

Examples of vinyl monomers having a phosphoric acid group include mono(2-acryloyloxyethyl ester) phosphate and (1-methyl-2-acryloyloxyethyl ester) phosphate.

In accordance with the present invention, among the polymers represented by Formula (3-1), the polymers represented by Formula (3-2) are preferred.

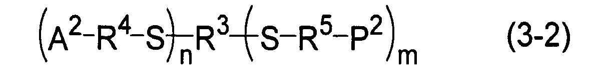

In Formula (3-2), A² is the same as A¹ in Formula (3-1), and the preferred forms thereof are also the same.

R⁴ and R⁵ independently represent a single bond or a divalent organic linking group. The n bonds or groups of R⁴ and the m bonds or groups of R⁵ may independently be same or different. R⁴ and R⁵ are the same as the R² in Formula (3-1), and the preferred forms thereof are also the same.

R³ in Formula (3-2) represents an (m + n)-valent organic linking group. m + n = 3 to 10.

The preferred examples of the (m + n)-valent organic linking group represented by the R³ include groups composed of 1 to 60 carbon atoms, 10 or less nitrogen atoms, 50 or less oxygen atoms, 1 to 100 hydrogen atoms, and 20 or less sulfur atoms. The organic linking group may be substituted with a substituent.

The (m + n)-valent organic linking group represented by the R³ is the same as the (m + n)-valent organic linking group in the R¹, and the preferred forms thereof also the same.

In Formula (3-2), m represents 1 to 8, preferably 1 to 5, more preferably 1 to 4, and especially preferably 1 to 3; n represents 2 to 9, preferably 2 to 8, more preferably 2 to 7, and especially preferably 3 to 6.

In Formula (3-2), P² represents a polymer skeleton that can be selected according to the object from among the well-known polymers. The m polymer skeletons of P² may be the same or different. The preferred forms of the polymer are the same as those of P¹ in Formula (3-1), and the more preferred forms are also the same.

Among the polymers represented by Formula (3-2), the most preferred polymers have the below-described R³, R⁴, R⁵, P², m and n.

R³: the above-described specific examples (1), (2), (10), (11), (16) or (17).

R⁴: a single bond or a divalent organic linking group (may be substituted) composed of the below-described structural units, or combinations thereof and containing 1 to 10 carbon atoms, 5 or less nitrogen atoms, 10 or less oxygen atoms, 1 to 30 hydrogen atoms, and 0 to 5 or less sulfur atoms, examples of the substituents including alkyl groups having 1 to 20 carbon atoms (a methyl group, an ethyl group, and the like), an aryl group having 6 to 16 carbon atoms (a phenyl group, a naphthyl group, and the like), a hydroxy group, an amino group, a carboxy group (an acetoxy group and the like), a sulfonamide group, an N-sulfonylamide group, an acyloxy group having 1 to 6 carbon atoms, an alkoxy group having 1 to 6 carbon atoms (a methoxy group, an ethoxy group, and the like), a halogen atom (chlorine, bromine, and the like), an alkoxycarbonyl group having 2 to 7 carbon atoms (for example, a methoxycarbonyl group, an ethoxycarbonyl group, and a cyclohexyloxycarbonyl group), a cyano group, and a carbonic acid ester group having 2 to 10 carbon atoms (t-butyl carbonate and the like).

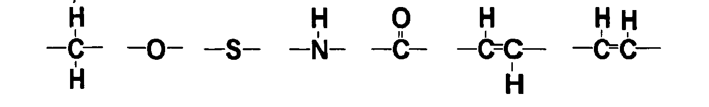

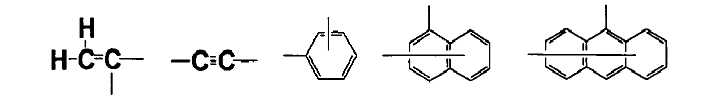

R⁵: a single bond, an ethylene group, a propylene group, following group (a) or following group (b).

In the following groups, R²⁵ represents a hydrogen atom or a methyl group; I is 1 or 2.

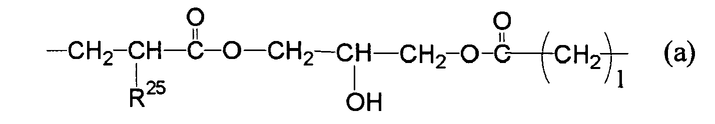

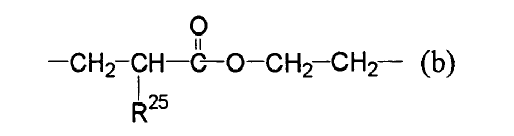

P²: a vinyl polymer, a polyester, a polyether, a polyurethane, or modified products thereof, copolymer thereof.
m: 1 to 3.
n: 3 to 6.

The weight-average molecular weight of the polymer represented by Formula (3-1) is preferably 3,000 to 100,000, more preferably 5,000 to 80,000, and especially preferably 7,000 to 60,000.

Where the weight-average molecular weight is within these ranges, a sufficient effect is demonstrated by a plurality of adsorption sites introduced into the polymer ends, and excellent performance such as adsorption to a solid surface, formation of micellae, and surface activity is demonstrated. In particular when the polymer compound in accordance with the present invention is used as a pigment dispersant, excellent dispersivity and dispersion stability can be attained.

The polymers represented by Formula (3-1) (including those represented by Formula (3-2)) can be synthesized, for example, by the following methods,
(1) a method of conducting a polymer reaction of a polymer having introduced as an end group a functional group selected from a carboxy group, a hydroxy group, and an amino group and an acid halide having a plurality of adsorption sites, an alkyl halide having a plurality of adsorption sites, or an isocyanate having a plurality of adsorption sites.
(2) a method of conducting a Michael addition reaction of a polymer having a carbon-carbon double bond introduced as an end bond and an mercaptan having a plurality of adsorption sites.
(3) a method of conducting a reaction of a polymer having a carbon-carbon double bond introduced as an end bond and the mercaptan having adsorption sites in the presence of a radical generating agent.
(4) a method of conducting a reaction of a polymer having a plurality of mercaptans introduced as end groups and a compound having a carbon-carbon double bond and the adsorption sites in the presence of a radical generating agent.
(5) a method of performing radical polymerization of vinyl monomers in the presence of a mercaptan compound having a plurality of adsorption sites.
   Among the above-described methods, from the standpoint of easiness of synthesis, the methods (2), (3), (4), (5) are preferred, the methods (3), (4), (5) are more preferred, and the method (5) is especially preferred.
   The preferred specific method (5) involves radical polymerization of vinyl monomers in the present of a compound represented by Formula (3-3). 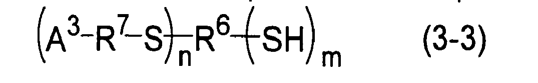 In Formula (3-3), R⁶, R⁷, A³, m, and n are the same as R³, R⁴, A², m, and n in Formula (3-2), and the preferred forms thereof are also the same.
   The compound represented by Formula (3-3) can be synthesized by the following methods,
(6) a method of transforming a halide compound having a plurality of adsorption sites into a mercaptan compound (a method of conducting a reaction with thiourea and hydrolyzing, a method of conducting a direct reaction with NaSH, a method of conducting a reaction with CH₃COSNa and hydrolyzing, and the like), and
(7) a method of conducting an addition reaction of a compound having 3 to 10 mercaptan groups in a molecule and a compound having the adsorption sites and also having a functional group reactable with a mercaptan group. From the standpoint of easiness of synthesis, the method (7) is preferred.

The preferred examples of the functional group reactable with a mercaptan group in the method (7) include an acid halide, an alkyl halide, an isocyanate, and a carbon-carbon double bond.

It is especially preferred that the functional group reactable with a mercaptan group be a carbon-carbon double bond and that the addition reaction be a radical addition reaction. From the standpoint of reactivity with a mercaptan group, a monosubstituted or disubstituted vinyl group is more preferred as the carbon-carbon double bond.

Specific examples of compounds having 3 to 10 mercaptan groups in a molecule include the following compounds (18) to (34).

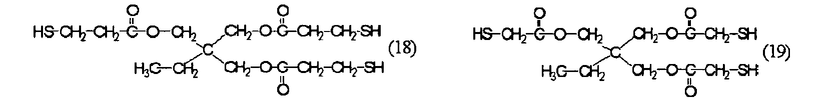

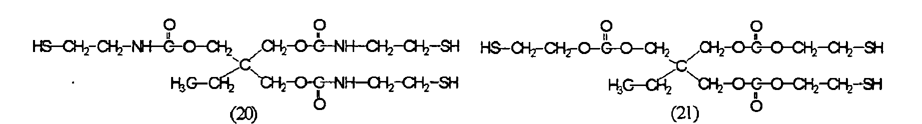

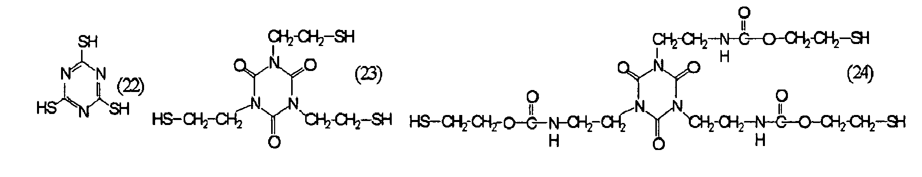

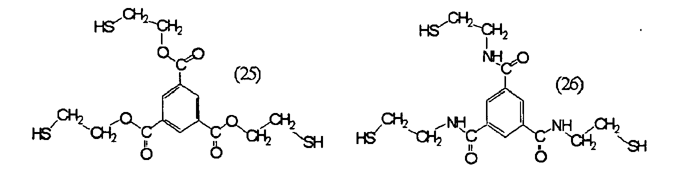

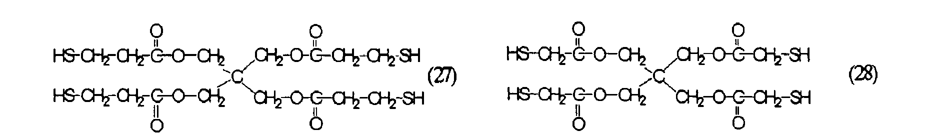

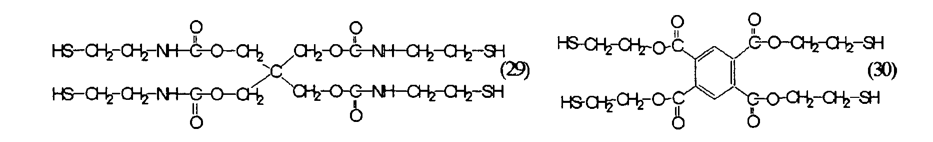

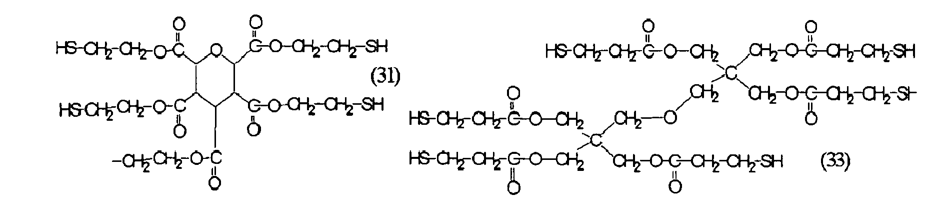

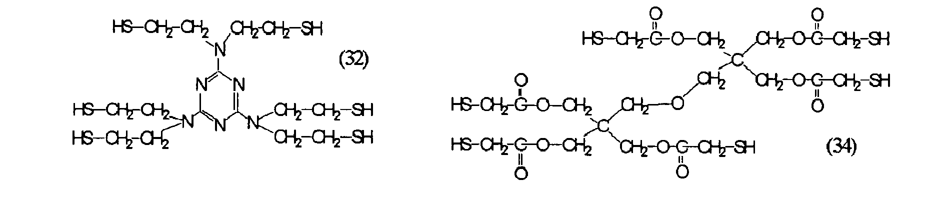

From among the specific examples (18) to (34) of the compounds, the following compounds are especially preferred due to availability of starting materials, easiness of synthesis, and solubility in a variety of solvents.

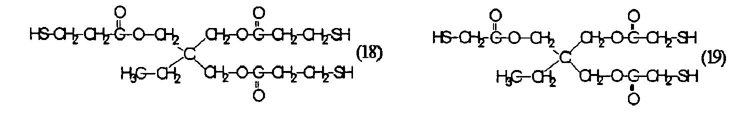

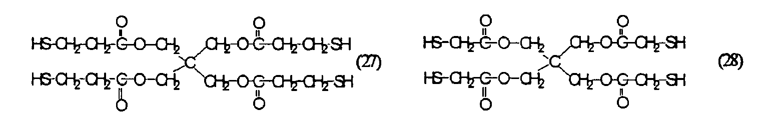

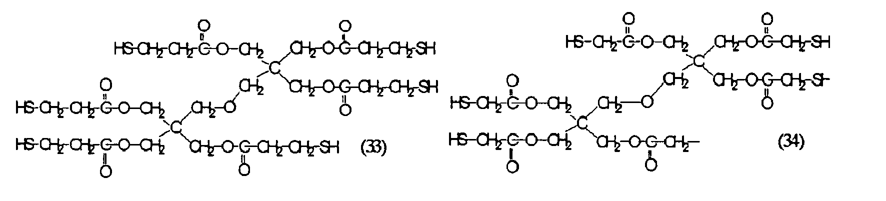

Compounds having the pigment adsorption structure and also having a carbon-carbon double bond (more specifically, compounds having at least one selected from an organic pigment structure, a heterocyclic structure, an acidic group, a group having a basic nitrogen atom, an urea group, an urethane group, a group having a coordinating oxygen atom, a hydrocarbon group having 4 or more carbon atoms, an alkoxysilyl group, an epoxy group, an isocyanate group, and a hydroxy group and also having a carbon-carbon double bond) are not particularly limited, but the following compounds are preferred.

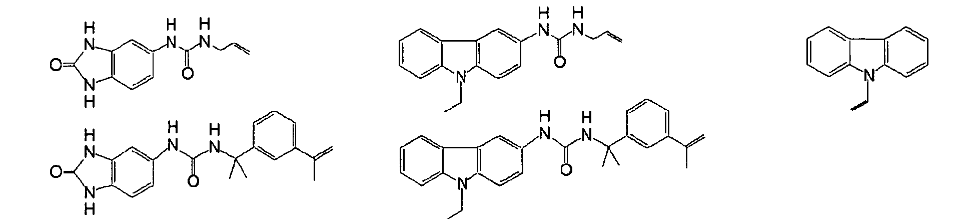

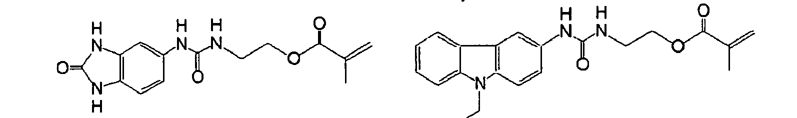

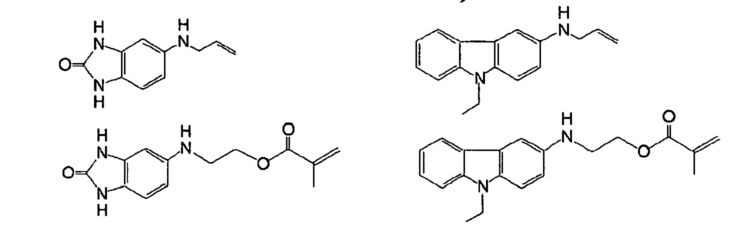

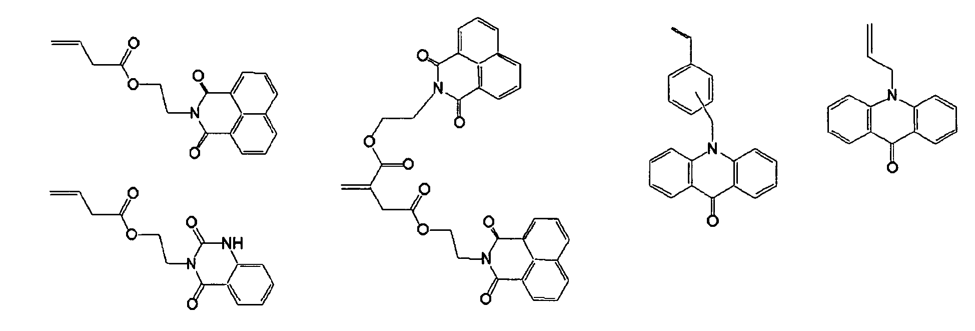

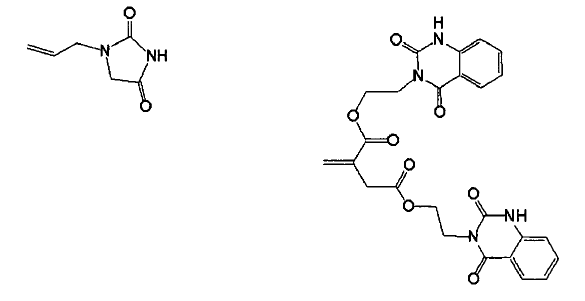

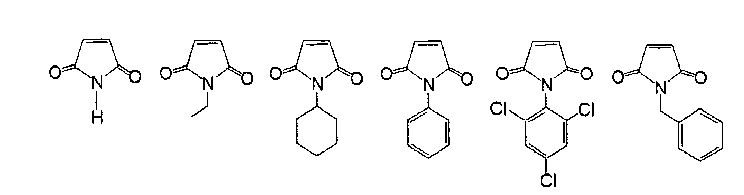

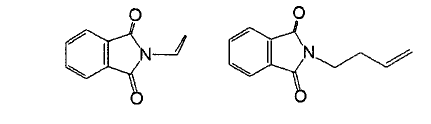

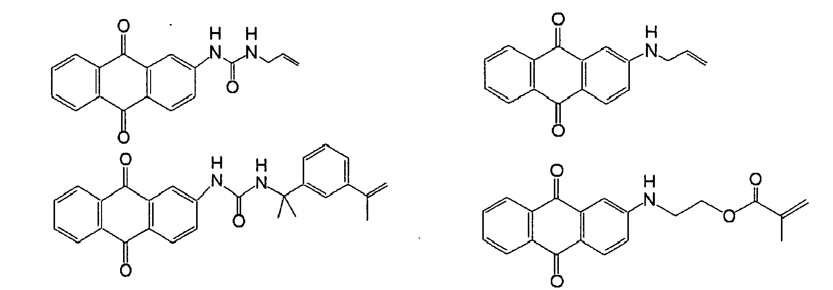

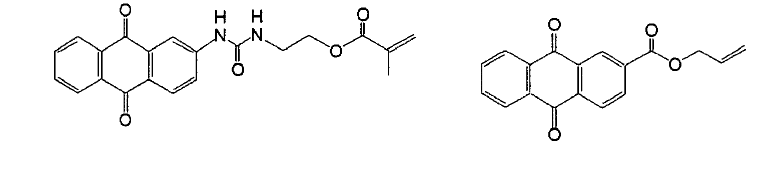

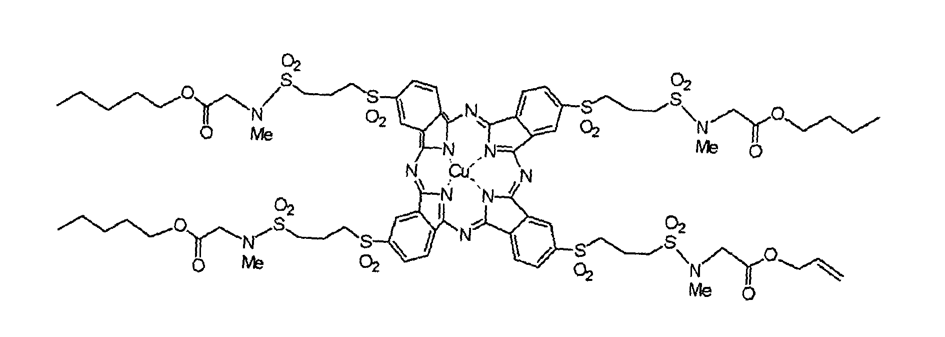

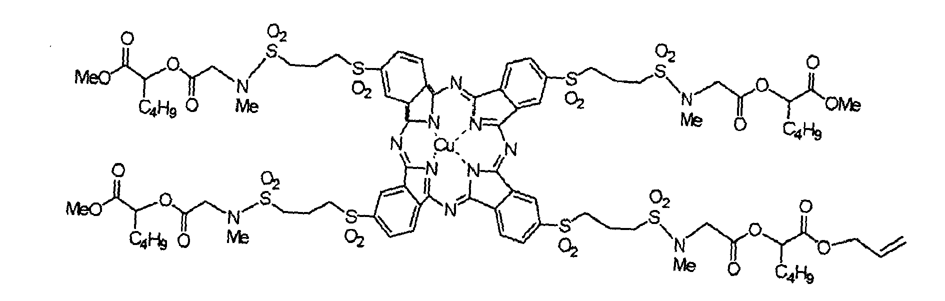

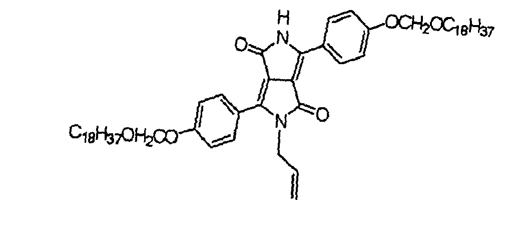

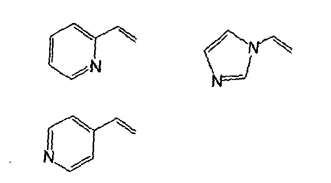

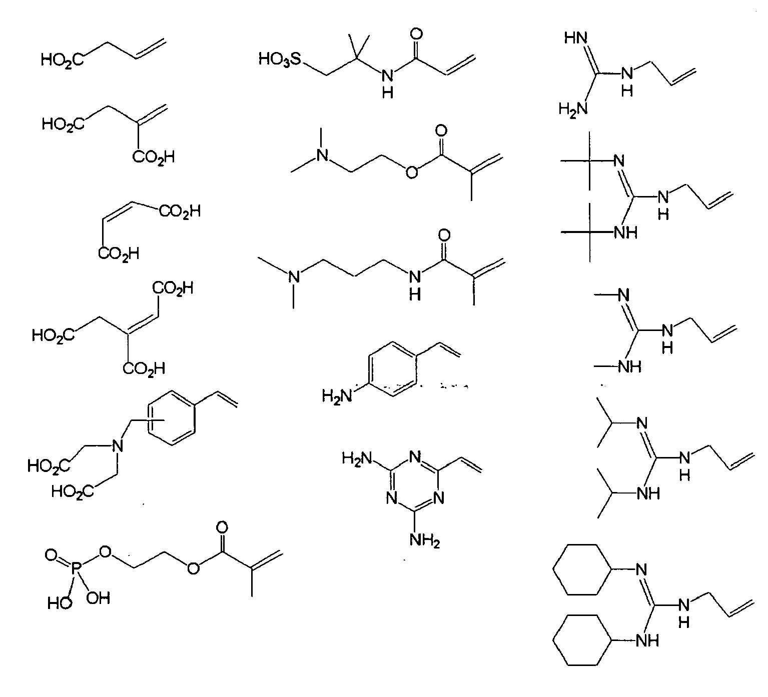

A radical reaction addition product of a compound having 3 to 10 mercaptan groups in a molecule and a compound having the pigment adsorption structure and also a carbon-carbon double bond can be obtained, for example, by a method (thiol-ene reaction method) according to which a compound having 3 to 10 mercaptan groups in a molecule and a compound having the pigment adsorption structure and also a carbon-carbon double bond are dissolved in an appropriate solvent and a radical generating agent is added thereto to induce an addition reaction at about 50°C to 100°C.

An appropriate solvent for use in the thiol-ene method can be randomly selected according to the compound having 3 to 10 mercaptan groups in a molecule, the compound having the pigment adsorption structure and also a carbon-carbon double bond, and the radical addition reaction product that is produced.

Examples of suitable solvents include methanol, ethanol, propanol, isopropanol, 1-methoxy-2-propanol, 1-methoxy-2-propylacetal, acetone, methyl ethyl ketone, methyl isobutyl ketone, methoxypropyl acetate, ethyl lactate, ethyl acetate, acetonitrile, tetrahydrofuran, dimethylformamide, chloroform, and toluene. These solvents may be used individually or in combinations of two or more thereof.

Examples of suitable radical generating agents include azo compounds such as 2,2'-azobis(isobutyronitrile) (AIBN), 2,2'-azobis(2,4'-dimethylvaleronitrile), and 2,2'-azobisisobutyric acid dimethyl, peroxides such as benzoyl peroxide, and persulfates such as potassium persulfate and ammonium persulfate.

No particular limitation is placed on the vinyl monomer used in the method (5). For example, a vinyl monomer identical to that used in obtaining the polymer skeleton represented by P¹ in Formula (3-1) can be used.

The vinyl monomer of only one kind may be polymerized, or vinyl monomers of two or more kinds may be copolymerized.

The polymer that is the B component in accordance with the present invention can be polymerized by the well-known method using the above-described vinyl monomer and the compound represented by Formula (3-3) (may be referred to hereinbelow as "chain transfer agent"). For example, the polymer can be obtained by dissolving these vinyl monomer and chain transfer agent in an appropriate solvent, adding a radical polymerization initiator, and conducting polymerization in a solvent at a temperature of about 50°C to 220°C (solution polymerization method).

The suitable solvent that can be used in the aforementioned solution polymerization method can be randomly selected according to the type of the monomers used and the solubility of the produced copolymer. Examples of suitable solvents include methanol, ethanol, propanol, isopropanol, 1-methoxy-2-propanol, 1-methoxy-2-propyl acetate, acetone, methyl ethyl ketone, methyl isobutyl ketone, methoxypropyl acetate, ethyl lactate, ethyl acetate, acetonitrile, tetrahydrofuran, dimethylformamide, chloroform, and toluene. These solvents may be used individually or in a combination of two or more thereof.

Examples of radical polymerization initiators include azo compounds such as 2,2'-azobis(isobutyronitrile) (AIBN), 2,2'-azobis(2,4'-dimethylvaleronitrile), and 2,2'-azobisisobutyric acid dimethyl, peroxides such as benzoyl peroxide, and persulfates such as potassium persulfate and ammonium persulfate.

In the present invention, one type of component (B) above may be used on its own, or two or more types thereof may be used in combination.

The content of component (B) above in the ink composition of the present invention is preferably 1 to 100 wt % relative to the amount of the above component (A) (organic pigment) added, and more preferably 5 to 50%.

It is preferable for the amount of the above component (B) added to be at least 1 wt % since good dispersibility is obtained and a dispersion is free from large (aggregated) particles. It is also preferable for it to be no greater than 100 wt % since viscosity increase due to extra component (C) does not occur

A well-known pigment dispersant can be used in addition to the B component in the ink composition in accordance with the present invention, as long as the effect of the invention is not degraded. The content ratio of such well-known pigment dispersant in the ink composition is preferably equal to or less than 50 wt.%, more preferably equal to or less than 30 wt.% with respect to the amount of the C component added to the ink composition.

Examples of such well-known dispersants (pigment dispersants) include polymer dispersants (for example, polyamidoamines and salts thereof, polycarboxylates and salts thereof, unsaturated acid esters with a high molecular weight, modified polyurethanes, modified polyesters, modified poly(meth)acrylates, (meth)acrylic copolymers, and naphthalenesulfonic acid formalin condensates), polyoxyethylene alkylphosphoric acid esters, polyoxyethylene alkylamine, alkanolamines, and pigment derivatives.

According to the structure thereof, the polymer dispersants can be classified into straight-chain polymers, end-modified polymers, graft polymers, and block polymers.

The polymer dispersant acts to be adsorbed by the pigment surface, thereby preventing re-aggregation. Accordingly, the preferred structure is that of end-modified polymers, graft polymers, and block polymers having an anchor site for the pigment surface. In contrast, the pigment derivatives demonstrate an effect of enhancing the adsorption of the polymer dispersant by modifying the pigment surface.

Specific examples of the well-known dispersants (pigment dispersants) include Disperbyk-101 (polyamidoamine phosphate), 107 (carboxylic acid ester), 110 (polymer containing an acidic group), 130 (polyamide), 161, 162, 163, 164, 165, 166, and 170 (high-molecular copolymer), BYK-P104 and P105 (high-molecular unsaturated polycarboxylic acids) (all of the above are manufactured by BYK Chemie Co.); EFKA 4047, 4050, 4010, 4165 (polyurethanes), EFKA 4330, 4340 (block copolymers), 4400, 4402 (modified polyacrylates), 5010 (polyesteramide), 5765 (high-molecular polycarbonate), 6220 (fatty acid polyester), 6745 (phthalocyanine derivative), 6750 (azo pigment derivative (all of the above are manufactured by EFKA Chemicals Co.); AJISPER PB821, PB822 (manufactured by Ajinomoto Fine-Techno Co.); FLORENE TG-710 (urethane oligomer) and POLYFLOW No. 50E, No. 300 (acrylic copolymer) (all of the above are manufactured by Kyoeisha Chemical Co., Ltd.); DISPERON KS-860, 873SN, 874, #2150 (aliphatic polyhydric carboxylic acid), #7004 (polyether ester type), DA-703-50, DA-705, DA-725 (all of the above are manufactured by Kusumoto Chemicals Co., Ltd.); DEMOL RN, N (naphthalenesulfonic acid formalin heavy condensates), MS, C, SN-B (aromatic sulfonic acid formalin heavy condensate), HOMOGENOL L-18 (polycarboxylic acid type polymer), EMULGEN 920, 930, 935, 985 (polyoxyethylene nonylphenyl ether), ACETAMINE 86 (stearylamine acetate) (all of the above are manufactured by Kao Corporation); SOLSPERSE 5000 (phthalocyanine derivative), 22000 (azo pigment derivative), 13240 (polyester amine), 3000, 17000, 27000 (polymer having a functional part at the terminal thereof), 24000, 28000, 32000, 38500 (graft copolymer) (all of the above are manufactured by Lubrizol Corp.); and NIKOL T106 (polyoxyethylene sorbitan monooleate) and MYS-IEX (polyoxyethylene monostearate) (all of the above are manufactured by Nikko Chemicals Co., Ltd.).

### (C) Actinic radiation-curable compound

The ink composition of the present invention comprises an actinic radiation-curable compound (hereinafter, also called a polymerizable compound). The actinic radiation-curable compound is not particularly limited as long as it is a compound that can undergo a polymerization reaction or a crosslinking reaction upon exposure to actinic radiation and cure, and can be selected appropriately according to an intended application.

It may be any of a monomer, an oligomer, and a polymer, but various types of known polymerizable monomers known as cationically photopolymerizable monomers or radically photopolymerizable monomers, in which a polymerization reaction is caused by a polymerization initiating species generated from a polymerization initiator, which is described later, are preferable.

The polymerizable compound that can be used in the present invention is preferably an addition-polymerizable compound, and is more preferably a radically polymerizable compound. Furthermore, the polymerizable compound that can be used in the present invention may employ a plurality of types of polymerizable compounds, and it is also preferable to use a radically polymerizable compound and a cationically polymerizable compound in combination.

The polymerizable compound of one kind may be used, or the polymerizable compounds of two or more kinds may be used together with the object of regulating the reaction rate, physical properties of the ink and physical properties of the cured film.

The polymerizable compound may be a monofunctional compound or a polyfunctional compound.

### Radically polymerizable compound

As the radically polymerizable compound that can be used in the present invention, an ethylenically unsaturated compound may preferably be used.

The ethylenically unsaturated compound is preferably selected from compounds (monofunctional or polyfunctional compounds) having at least one terminal ethylenically unsaturated bond, and more preferably at least two.

Specifically, it may be selected appropriately from those widely known in the industrial field to which the present invention pertains, and examples thereof include those having a chemical configuration such as a monomer, a prepolymer, that is, a dimer, trimer, or oligomer, a mixture thereof, or a copolymer thereof.

Specifically, the ethylenically unsaturated compound is preferably one having in its molecule a polymerizable group such as an acryloyl group, a methacryloyl group, an allyl group, a vinyl group, an internal double bonding group (maleic acid, etc.), etc., and among them, from the viewpoint of a curing reaction being caused at low energy, a compound having an acryloyl group or a methacryloyl group is preferable.

As the radically polymerizable compound, a cyclic group-containing ethylenically unsaturated compound is preferably used, and examples of the cyclic group include an aliphatic ring group, a heterocyclic group, and an aromatic ring group. It is more preferable to use as the aliphatic ring group a condensed polycyclic group in which two or more rings are condensed.

Furthermore, the radically polymerizable compound preferably contains as an ethylenically unsaturated group a polymerizable group selected from the group consisting of an acryloyloxy group, a methacryloyloxy group, an acrylamide group, a methacrylamide group, and an *N*-vinyl group.

### Heterocyclic group-containing ethylenically unsaturated compound

As the heterocyclic group-containing compound suitably used in the present invention, an *N*-vinyllactam can be cited as a preferred example.

Preferred examples of the *N*-vinyllactam that can be used in the present invention include compounds represented by Formula (A-1) below.

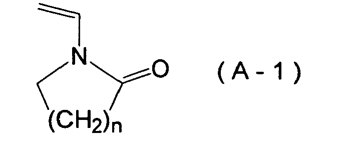

In Formula (A-1), n denotes an integer of 1 to 5; n is preferably an integer of 2 to 4 from the viewpoint of flexibility after the ink composition is cured, adhesion to a recording medium, and ease of availability of starting material, n is more preferably an integer of 2 or 4, and n is particularly preferably 4, which is *N-*vinylcaprolactam. *N*-vinylcaprolactam is preferable since it has excellent safety, is commonly used and easily available at a relatively low price, and gives particularly good ink curability and adhesion of a cured film to a recording medium.

The *N*-vinyllactam may have a substituent such as an alkyl group or an aryl group on the lactam ring, and may have a saturated or unsaturated ring structure bonded thereto.

Furthermore, *N*-vinylcaprolactam is more preferable.

The ink composition of the present invention preferably comprises the *N-*vinyllactam at 5 wt % or greater of the total ink composition, more preferably at least 5 wt % but no greater than 40 wt %, and yet more preferably at least 10 wt % but no greater than 40 wt %. It is preferable for the amount of *N*-vinyllactam used to be in the above-mentioned range since the curability, the flexibility and the adhesion to a recording medium are excellent.

The *N*-vinyllactam is a compound having a relatively high melting point. It is preferable for the content of the *N*-vinyllactam to be no greater than 40 wt % since good solubility is exhibited even at a low temperature of 0°C or less, and the temperature range in which the ink composition can be handled widens.

Only one type of *N*-vinyllactam above may be contained in the ink composition, or a plurality of types thereof may be contained therein. When two or more types of *N*-vinyllactams are used, the total amount of *N*-vinyllactams is preferably in the above-mentioned range.

### Aromatic ring group-containing ethylenically unsaturated compound and aliphatic ring group-containing ethylenically unsaturated compound

The aromatic ring group-containing radically polymerizable compound and aliphatic ring group-containing radically polymerizable compound that can suitably be used in the present invention are described in detail.

In the present invention, as the aromatic ring group- or aliphatic ring group-containing compound suitably used in the present invention, an ethylenically unsaturated compound represented by Formula (5') below can be cited.

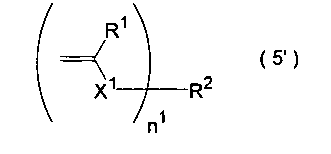

In Formula (5') above, R¹ denotes a hydrogen atom or a methyl group.

n¹ is an integer of at least 1, is preferably an integer of 1 to 4, is more preferably 1 or 2, and is yet more preferably 1.

X¹ in Formula (5') denotes a divalent linking group containing (-C(O)O-) or (-C(O)NH-) bonded to the ethylenically unsaturated double bond shown in Formula (5') via the carbon atom of the carbonyl group, and this divalent linking group may further have bonded thereto an ether bond (-O-), an ester bond (-C(O)O- or - OC(O)-), an amide bond (-C(O)NH- or -NHC(O)-), a carbonyl bond (-C(O)-), an optionally branched alkylene group having no greater than 20 carbons, or a group in which they are combined.

The divalent linking group is preferably -C(O)O-, -C(O)NH-, a group in which -C(O)O- or -C(O)NH- is linked to an ether bond, an ester bond, an alkylene group having no greater than 20 carbons, or a group combining two or more thereof.

R² in Formula (5') is a group containing at least one ring structure, and denotes a monocyclic aromatic group- and/or polycyclic aromatic group-containing aromatic group, or an alicyclic hydrocarbon group having a cycloalkane skeleton, an adamantane skeleton, or a norbornane skeleton. Furthermore, the ring structure of the aromatic group and the alicyclic hydrocarbon group may comprise a heteroatom such as O, N, or S.

Preferred examples of the aromatic group denoted by R² in Formula (5') include a phenyl group, which is monocyclic aromatic, and a polycyclic aromatic group having 2 to 4 rings.

Specific preferred examples of the polycyclic aromatic group include a naphthyl group, an anthryl group, a 1H-indenyl group, a 9H-fluorenyl group, a 1 H-phenalenyl group, a phenanthrenyl group, a triphenylenyl group, a pyrenyl group, a naphthacenyl group, a tetraphenyl group, a biphenylenyl group, an as-indacenyl group, an s-indacenyl group, an acenaphthylenyl group, a fluoranthenyl group, an acephenanthrylenyl group, an aceanthrylenyl group, a chrysenyl group, and a pleiadenyl group.

The aromatic group-containing ethylenically unsaturated compound includes phenoxyethyl (meth)acrylate.

These aromatic groups may be aromatic heterocyclic groups containing a heteroatom such as O, N, or S. Specific examples thereof include monocyclic aromatic heterocyclic groups such as a furyl group, a thienyl group, a 1H-pyrrolyl group, a 2H-pyrrolyl group, a 1H-pyrazolyl group, a 1H-imidazolyl group, an isooxazolyl group, an isothiazolyl group, a pyridyl group, a pyridazinyl group, a pyrimidinyl group, a pyrazinyl group, a triazoyl group, and a tetrazoyl group.

Examples further include polycyclic aromatic heterocyclic groups such as a thianthrenyl group, a benzofuranyl group, an isobenzofuranyl group, a chromenyl group, an isochromenyl group, a xanthenyl group, a phenoxathiinyl group, an indolizinyl group, an isoindolyl group, an indolyl group, an indazolyl group, a purinyl group, a quinolizinyl group, an isoquinolyl group, a quinolyl group, a phthalazinyl group, a naphthyridinyl group, a quinoxalinyl group, a quinazolinyl group, a cinnolinyl group, a pteridinyl group, a carbazolyl group, a β-carbolinyl group, a phenanthridinyl group, an acridinyl group, a perimidinyl group, a phenanthrolinyl group, a phenazinyl group, a phenothiazinyl group, a phenoxazinyl group, and a pyrrolizinyl group.

The aromatic group may have one or more substituents such as a halogen atom, a hydroxy group, an amino group, a mercapto group, a siloxane group, or a hydrocarbon group having no greater than 30 carbons. Two or more substituents of the aromatic group may form a ring structure containing a heteroatom such as O, N, or S as in, for example, phthalic anhydride or phthalimide.

Furthermore, R² in Formula (5') may be an alicyclic hydrocarbon group. Moreover, it may be a group having an alicyclic hydrocarbon group containing a heteroatom such as O, N, or S.

The alicyclic hydrocarbon group may be a group having a cycloalkane with 3 to 12 carbons or a ring structure in which two or more of the above cycloalkanes are condensed. Among them, preferred examples include a cyclohexyl group, a cyclopentyl group, a cycloheptyl group, an isobornyl group, a norbornyl group, an adamantyl group, a dicyclopentanyl group, a dicyclopentenyl group, and a tricyclodecanyl group.

Specific examples of the alicyclic hydrocarbon group containing a heteroatom such as O, N, or S include a tetrahydrofuryl group, a pyrrolidinyl group, a pyrazolidinyl group, an imidazolidinyl group, an isooxazolidinyl group, a pyranyl group, a thiopyranyl group, an isothiazolidinyl group, a piperidinyl group, a piperazinyl group, a morpholino group, and a thiomorpholino group.

These alicyclic hydrocarbon and heteromonocycle-containing alicyclic hydrocarbon groups are preferably an optionally substituted hydrocarbon group having a total of no greater than 30 carbons or a heterocyclic group containing a heteroatom such as O, N, or S, and may be optionally substituted by a halogen atom, a hydroxy group, an amino group, a thiol group, a siloxane group or an oxy group (=O).

Furthermore, R² in Formula (5') may be a group having an adamantane skeleton represented by Formula (I) below or an alicyclic hydrocarbon group having a norbornane skeleton represented by (II) below.

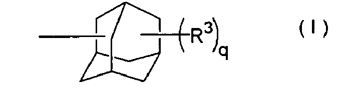

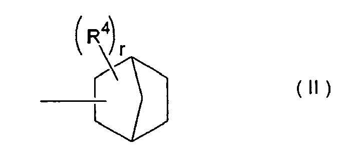

R³ and R⁴ in Formula (I) or Formula (II) independently denote a substituent, and may be bonded to any position of each alicyclic hydrocarbon structure. The q R³s and r R⁴s may be identical to or different from each other.

The q R³s and r R⁴s may independently be a monovalent or polyvalent substituent, and preferred examples of the monovalent substituent include a hydroxy group, a substituted or unsubstituted amino group, a thiol group, a siloxane group, or an optionally substituted hydrocarbon group or heterocyclic group having a total number of carbons of no greater than 30, and preferred examples of a divalent substituent include an oxy group (=O).

The substitution number q of R³ denotes an integer of 0 to 5, and the substitution number r of R⁴ denotes an integer of 0 to 5.

Furthermore, one carbon atom of the adamantane skeleton in Formula (I) may be replaced by a carbonyl bond (-C(O)-) and/or an ester bond (-C(O)O-), and one carbon atom of the norbornane skeleton in Formula (II) may be replaced by an ether bond (-O-) and/or an ester bond (-C(O)O-).

The norbornane skeleton represented by Formula (II) may have a cyclic hydrocarbon structure represented by (III). n in Formula (III) denotes a cyclic hydrocarbon structure, the two ends of which may substitute any positions of the norbornane skeleton; it may be a monocyclic structure or a polycyclic structure and, moreover, it may comprise a carbonyl bond (-C(O)-) and/or an ester bond (-C(O)O-) in addition to a hydrocarbon bond in the cyclic hydrocarbon structure.

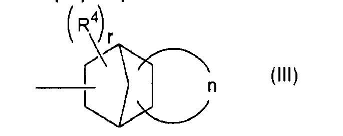

The alicyclic hydrocarbon group represented by Formula (III) above is preferably a structure represented by Formula (IV), Formula (V), or Formula (VI).

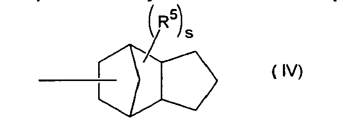

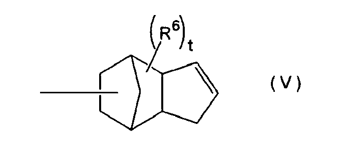

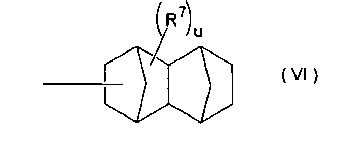

R⁵, R⁶, and R⁷ in Formula (IV), Formula (V), and Formula (VI) independently denote a substituent, k denotes an integer of 1 to 6, s, t, and u independently denote an integer of 0 to 5, and the s R⁵s, the t R⁶s, and the u R⁷s may be identical to or different from each other.

X¹ in Formula (5') may be bonded to any position of each alicyclic hydrocarbon structure, shown below, in Formula (IV), Formula (V), or Formula (VI).

R⁵, R⁶ and R⁷ in Formula (IV), Formula (V), or Formula (VI) independently denote a substituent, and may be bonded to any position on each of the alicyclic hydrocarbon structures, shown below, in Formula (IV), Formula (V), or Formula (VI). The substituents denoted by R⁵, R⁶ and R⁷ have the same meanings as for the substituents denoted by R³ and R⁴ in Formula (I) to Formula (III), and preferred ranges are also the same.

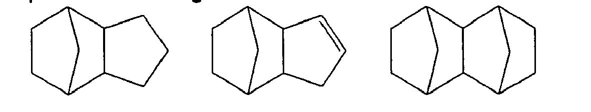

In the present invention, preferred examples of the radically polymerizable monomer include those having a group with a ring structure such as a phenyl group, a naphthyl group, an anthracenyl group, a pyridinyl group, a tetrahydrofurfuryl group, a piperidinyl group, a cyclohexyl group, a cyclopentyl group, a cycloheptyl group, an isobornyl group, or a tricyclodecanyl group.

Preferred examples of the radically polymerizable monomer, which can be used in the present invention, include norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, trimethylcyclohexyl (meth)acrylate, 4-*t*-butylcyclohexyl (meth)acrylate, acryloylmorpholine, 2-benzyl (meth)acrylate, phenoxyethyl (meth)acrylate, phenoxydiethylene glycol (meth)acrylate, phenoxytriethylene glycol (meth)acrylate, ethylene oxide (EO)-modified cresol (meth)acrylate, tetrahydrofurfuryl (meth)acrylate, caprolactone-modified tetrahydrofurfuryl (meth)acrylate, nonylphenoxy polyethylene glycol (meth)acrylate, neopentyl glycol benzoate (meth)acrylate, paracumylphenoxy ethylene glycol (meth)acrylate, *N-*phthalimidoethyl (meth)acrylate, pentamethylpiperidyl (meth)acrylate, tetramethylpiperidyl (meth)acrylate, *N*-cyclohexylacrylamide, *N*-(1,1-dimethyl-2-phenyl)ethyl(meth)acrylamide, *N*-diphenylmethyl(meth)acrylamide, *N-*phthalimidomethyl(meth)acrylamide, *N*-(1,1'-dimethyl-3-(1,2,4-triazol-1-yl))propyl(meth)acrylamide, and 5-(meth)acryloyloxymethyl-5-ethyl-1,3-dioxacyclohexane.

Furthermore, preferred examples of a radically polymerizable monomer include compounds (M-1) to (M-56) below.

In some of the compound examples below, the hydrocarbon chain is described by a simplified structural Formula in which symbols for carbon (C) and hydrogen (H) are omitted.

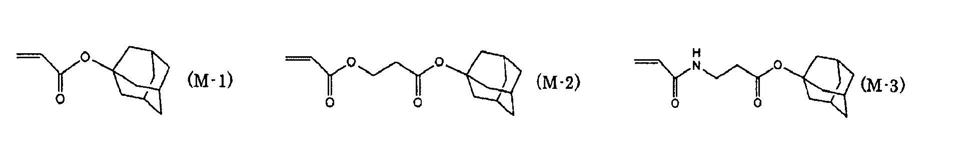

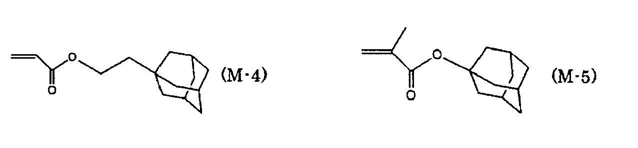

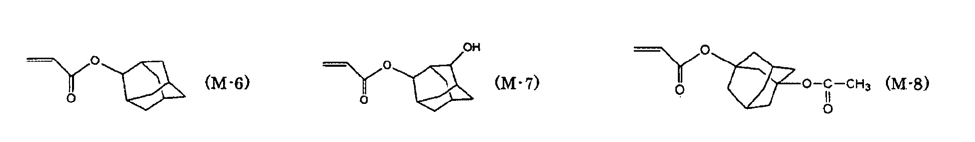

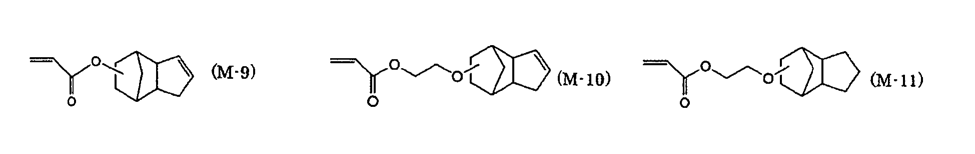

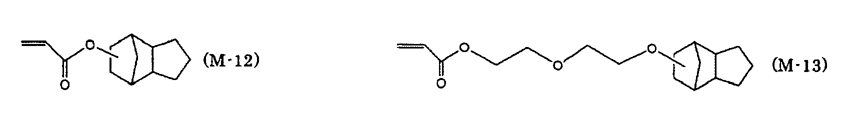

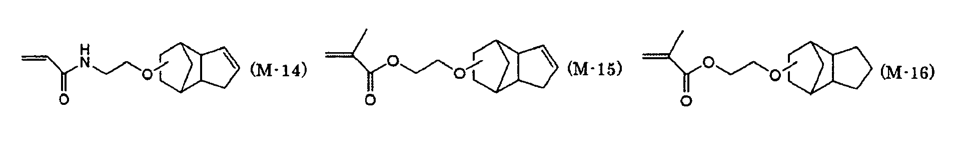

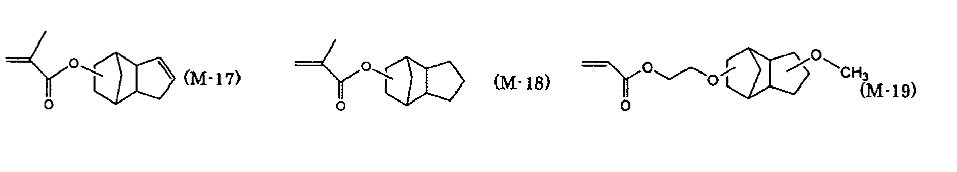

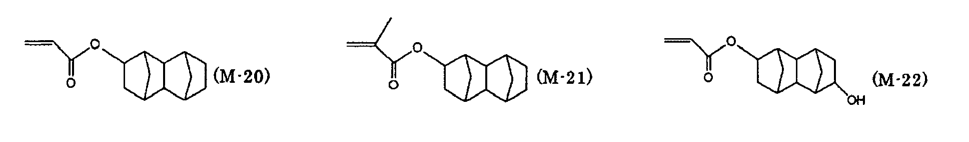

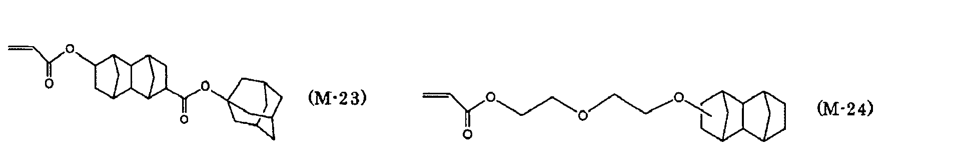

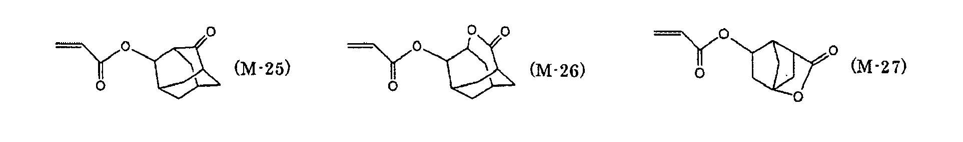

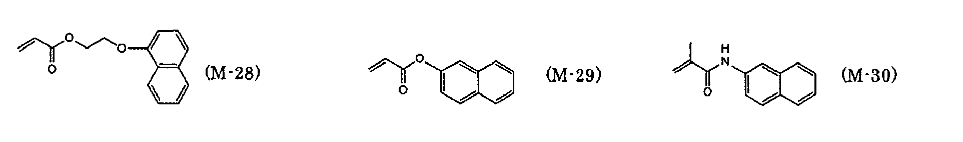

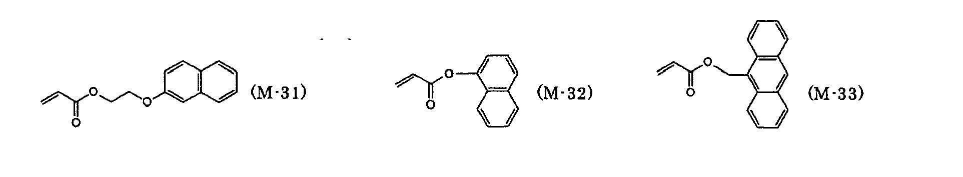

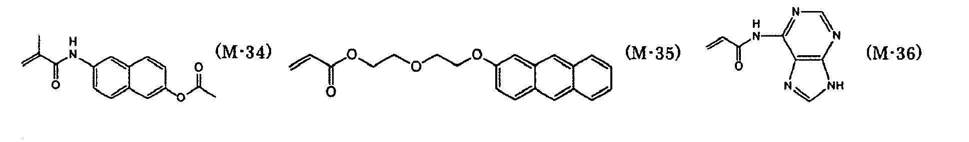

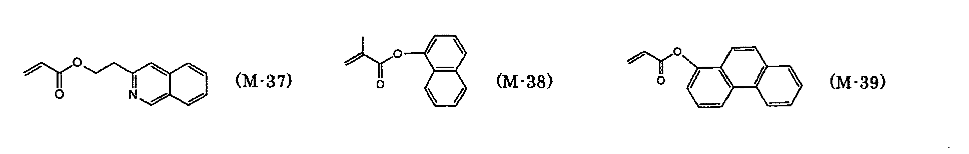

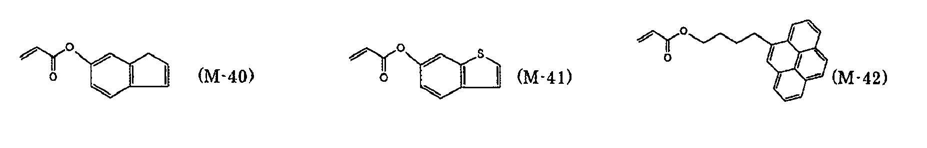

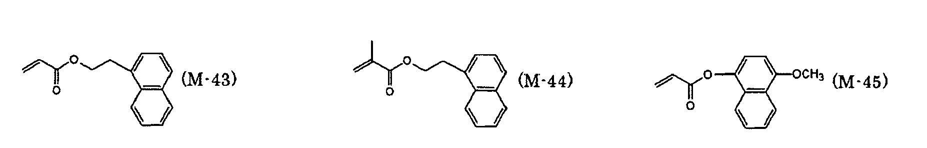

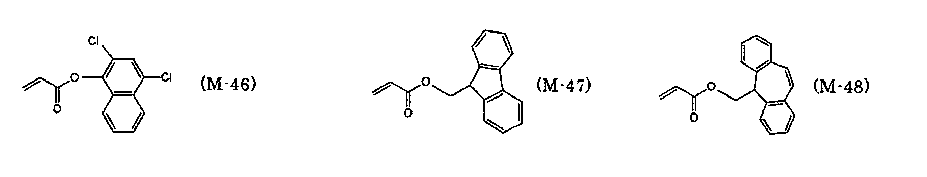

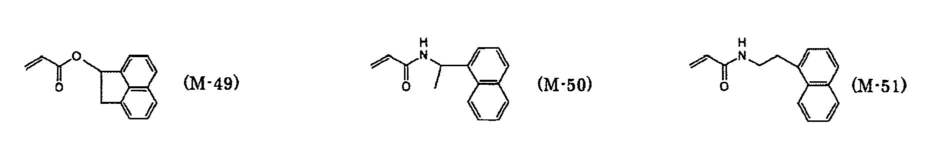

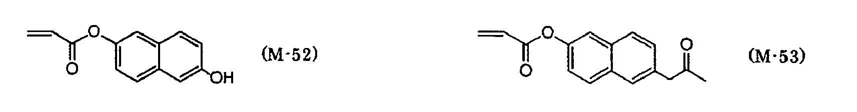

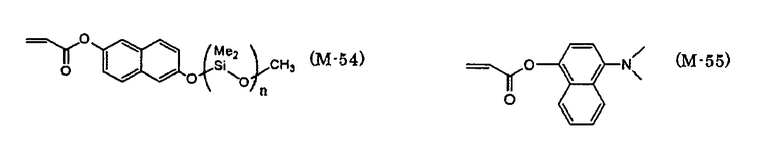

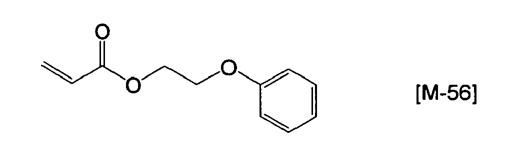

With regard to the cyclic group-containing radically polymerizable compound, one type thereof may be used on its own or two or more types thereof may be used in combination.

The inkjet ink composition of the present invention preferably employs at least a heterocyclic group-containing ethylenically unsaturated compound, and an *N*-vinyllactam is preferably used as the heterocyclic group-containing ethylenically unsaturated compound. Furthermore, it is preferable to further use an aromatic ring group-containing ethylenically unsaturated compound or an aliphatic ring group-containing ethylenically unsaturated compound in combination, and it is preferable to use a heterocyclic group-containing ethylenically unsaturated compound, an aromatic ring group-containing ethylenically unsaturated compound, and an aliphatic ring group-containing ethylenically unsaturated compound in combination.

The inkjet ink composition of the present invention preferably comprises at least one type from among compounds represented by Formula (C-1) to Formula (C-5) below, more preferably comprises compounds of at least two different groups selected from three different ethylenically unsaturated compound groups, that is, a compound represented by Formula (C-1), a compound represented by Formula (C-2), and a compound represented by Formula (C-3) to Formula (C-5), and particularly preferably comprises a compound represented by Formula (C-1), a compound represented by Formula (C-2), and a compound represented by Formula (C-3) to Formula (C-5).

Furthermore, as the compound represented by Formula (C-2), phenoxyethyl (meth)acrylate is preferable.

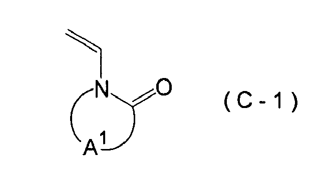

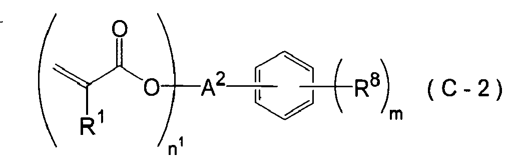

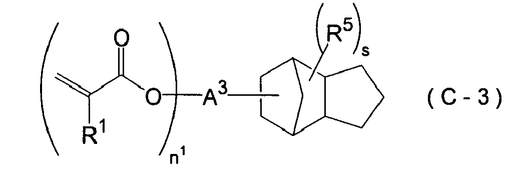

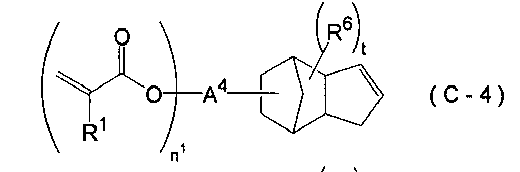

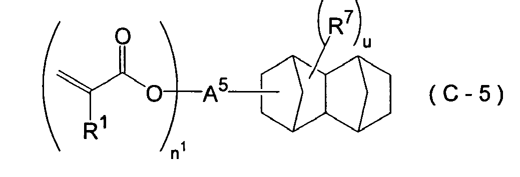

A¹ in Formula (C-1) denotes a divalent linking group forming, together with the nitrogen atom and the carbonyl group, a 4- to 8-membered ring, and is preferably an alkylene group or a group combining two or more groups selected from the group consisting of an alkylene group, an arylene group, -O-, and -NR'-, is more preferably an alkylene group or a group combining two or more groups selected from the group consisting of an alkylene group and an arylene group, and is yet more preferably an alkylene group. R' above denotes a hydrogen atom or a monovalent substituent. Furthermore, the alkylene group and the arylene group may have a substituent.

Specific examples of the substituent on the alkylene group, the arylene group, and R above include monovalent substituents such as an alkyl group, an alkenyl group, an alkynyl group, an aryl group, a hydroxy group, a halogen atom, a substituted or unsubstituted amino group, and a thiol group and, as a divalent substituent, an oxy group (=O).

R¹ in Formula (C-2) to Formula (C-5) denotes a hydrogen atom or a methyl group.

n¹ in Formula (C-2) to Formula (C-5) denotes an integer of 1 to 4, and is preferably 1 or 2, and more preferably 1.

m in Formula (C-2) denotes an integer of 0 to 5, and is preferably an integer of 0 to 3, more preferably an integer of 0 to 2, and yet more preferably 0.

R⁸ in Formula (C-2) denotes a halogen atom, a hydroxy group, an amino group, a mercapto group, a siloxane group, or a hydrocarbon group having no greater than 30 carbons. When m is 2 or greater, 2 or more R⁸s may be identical to or different from each other. Furthermore, 2 or more R⁸s may form a ring structure containing a hetero atom such as O, N, or S, as in phthalic anhydride or phthalimide.

A², A³, A⁴, and A⁵ in Formula (C-2) to Formula (C-5) independently denote a single bond or a divalent linking group.

As the divalent linking group, an alkylene group having no greater than 20 carbons or a group in which at least one ether bond and/or ester bond and at least one alkylene group having no greater than 20 carbons are combined is preferable, and an alkylene group having no greater than 20 carbons or a group in which at least one ether bond and at least one alkylene group having no greater than 20 carbons are combined is more preferable.

R⁵, R⁶, and R⁷ in Formula (C-3) to Formula (C-5) independently denote a substituent, and are preferably a hydroxy group, a substituted or unsubstituted amino group, a thiol group, a siloxane group, or an optionally substituted hydrocarbon or heterocyclic group having a total of no greater than 30 carbons.

s, t, and u in Formula (C-3) to Formula (C-5) independently denote an integer of 0 to 5, and are preferably an integer of 0 to 3, more preferably an integer of 0 to 2, and yet more preferably 0. Furthermore, the s R⁵s, the t R⁶s, and the u R⁷s may be identical to or different from each other. Moreover, when two of the R⁵s, R⁶s, or R⁷s are bonded to the same carbon atom, they may be an oxy group (=O) as a divalent substituent.

In the present invention, it is preferable that the content of the cyclic group-containing radically polymerizable compound is at least 10 wt % of the total ink composition, more preferably 10 wt % to 90 wt %, yet more preferably 30 wt % to 90 wt %, and particularly preferably 50 wt % to 85 wt %.

It is preferable that the content of the heterocyclic group-containing ethylenically unsaturated compound in the ink composition is at least 5 wt % but no greater than 40 wt %, and more preferably 10 to 40 wt %. Furthermore, it is preferable that the total content of the aliphatic ring group-containing ethylenically unsaturated compound and the aromatic ring group-containing ethylenically unsaturated compound in the ink composition is 5 to 90 wt %, more preferably 20 to 85 wt %, and yet more preferably 40 to 80 wt %.

A following radically polymerizable compound can be used.

A photocuring material is known that employs a photopolymerizable composition described in, for example, JP-A-7-159983, JP-B-7-31399, JP-A-8-224982, JP-A-10-863, etc. (JP-A denotes a Japanese unexamined patent publication application, and JP-B denotes a Japanese examined patent application publication).

Examples of the polymerizable compound having a radically polymerizable ethylenically unsaturated bond include unsaturated carboxylic acids such as acrylic acid, methacrylic acid, itaconic acid, crotonic acid, isocrotonic acid, and maleic acid, and esters and salts thereof, anhydrides having an ethylenically unsaturated group, acrylonitrile, styrene, and various types of radically polymerizable compounds such as unsaturated polyesters, unsaturated polyethers, unsaturated polyamides, unsaturated urethanes, (meth)acryl type monomer or prepolymer and (meth)acrylate esters of epoxy type monomer or prepolymer, urethane type monomer or prepolymer.

Specific examples thereof include (poly)ethylene glycol mono(meth)acrylate, (poly)ethylene glycol (meth)acrylate methyl ester, (poly)ethylene glycol (meth)acrylate ethyl ester, (poly)ethylene glycol (meth)acrylate phenyl ester, (poly)propylene glycol mono(meth)acrylate, (poly)propylene glycol mono(meth)acrylate phenyl ester, (poly)propylene glycol (meth)acrylate methyl ester, (poly)propylene glycol (meth)acrylate ethyl ester, (poly)propylene glycol diglycidyl ether acrylic acid adduct, neopentyl glycol diacrylate, (poly)ethylene glycol di(meth)acrylate, (poly)tetramethylene glycol di(meth)acrylate, bisphenol A PO (propylene oxide) adduct di(meth)acrylate, ethoxylated neopentyl glycol diacrylate, propoxylated neopentyl glycol diacrylate, bisphenol A EO (ethylene oxide) adduct di(meth)acrylate, EO-modified pentaerythritol tri(meth)acrylate, PO-modified pentaerythritol tri(meth)acrylate, EO-modified pentaerythritol tetra(meth)acrylate, PO-modified pentaerythritol tetra(meth)acrylate, EO-modified dipentaerythritol tetra(meth)acrylate, PO-modified dipentaerythritol tetra(meth)acrylate, EO-modified trimethylolpropane tri(meth)acrylate, PO-modified trimethylolpropane tri(meth)acrylate, EO-modified tetramethylolmethane tetra(meth)acrylate, and PO-modified tetramethylolmethane tetra(meth)acrylate, acrylic acid derivatives such as 2-ethylhexyl acrylate, *n*-octyl acrylate, *n*-nonyl acrylate, *n*-decyl acrylate, isooctyl acrylate, *n*-lauryl acrylate, *n-*tridecyl acrylate, cetyl acrylate, *n*-stearyl acrylate, isomyristyl acrylate, isostearyl acrylate, 2-hydroxyethyl acrylate, butoxyethyl acrylate, tetrahydrofurfuryl acrylate, benzyl acrylate, pentaerythritol triacrylate, pentaerythritol tetraacrylate, dipentaerythritol tetraacrylate, trimethylolpropane triacrylate, tetramethylolmethane tetraacrylate, oligoester acrylate, isoamyl acrylate, N-methylol acrylamide, diacetone acrylamide, epoxy acrylate, methacrylic acid derivatives such as methylmethacrylate, *n*-butyl methacrylate, 2-ethylhexyl methacrylate, *n*-octyl methacrylate, *n*-nonyl methacrylate, *n*-decyl methacrylate, isooctyl methacrylate, *n*-lauryl methacrylate, *n*-tridecyl methacrylate, *n*-cetyl methacrylate, *n*-stearyl methacrylate, allylmethacrylate, glycidyl methacrylate, benzyl methacrylate, dimethylaminomethyl methacrylate, trimethylolethane trimethacrylate, trimethylolpropane trimethacrylate and 2,2-bis(4-methacryloxypolyethoxyphenyl)propane, and allyl compound derivatives such as allyl glycidyl eter, diallyl phthalate and triallyltrimellitate, 1,6-hexanediol diacrylate, 1,9-nonanediol diacrylate, 1,10-decanediol diacrylate, 2-ethylhexyl-diglycol acrylate, 2-hydroxy-3-phenoxypropyl acrylate, 2-hydroxybutyl acrylate, neopentylglycol diacrylate hydroxypivalate, 2-acryloyloxyethylphthalic acid, EO-modified nonylphenol acrylate, methoxy-polyethyleneglycol acrylate, tetramethylolmethane triacrylate, 2-acryloyloxyethyl-2-hydroxyethylphthalic acid, dimethyloltricyclodecane diacrylate, ethoxylated phenylacrylate, 2-acryloyloxyethylsuccinic acid, modified glycerol triacrylate, bisphenol A diglycidyl ether acrylic acid adduct, modified bisphenol A diacrylate, phenoxy-polyethylene glycol acrylate, 2-acryloyloxyethylhexahydrophthalic acid, dipentaerythritol hexaacrylate, pentaerythritol triacrylate tolylenediisocyanate urethane prepolymer, lactone modified flexible acrylate, butoxyethyl acrylate, pentaerythritol triacrylate hexametylenediisocyanate urethane prepolymer, 2-hydroxyethyl acrylate, methoxydipropylene glycol acrylate, ditrimetylolpropane tetraacrylate, and pentaerythritol triacrylate hexametylenediisocyanate urethane prepolymer, etc.

More specifically, commercial products, radically polymerizable or crosslinking monomers, oligomers, and polymers known in the art such as those described in 'Kakyozai Handobukku' (Crosslinking Agent Handbook), Ed. S. Yamashita (Taiseisha, 1981); 'UV·EB Koka Handobukku' (UV·EB Curing Handbook (Starting Materials) Ed. K. Kato (Kobunshi Kankoukai, 1985); 'UV·EB Koka Gijutsu no Oyo to Shijyo' (Application and Market of UV·EB Curing Technology', p. 79, Ed. Rad Tech (CMC, 1989); and E. Takiyama 'Poriesuteru Jushi Handobukku' (Polyester Resin Handbook), (The Nikkan Kogyo Shimbun Ltd., 1988) can be used.

These acrylate compounds can be reduced viscosity, can be obtained stable ink dischargeability, and have high polymerizable sensitivity and good adhesion to a recording medium than a polymerizable compound having been used for conventional UV curing type ink, and that is preferable.

It is also preferable to use a vinyl ether compound as the radically polymerizable compound. Examples of vinyl ether compounds that are suitably used include di-, or tri-vinyl ether compounds such as ethylene glycol divinyl ether, diethylene glycol divinyl ether, triethylene glycol monovinyl ether, triethylene glycol divinyl ether, propylene glycol divinyl ether, dipropylene glycol divinyl ether, butanediol divinyl ether, hexanediol divinyl ether, cyclohexanedimethanol divinyl ether and trimethylolpropane trivinyl ether; and monovinyl ether compounds such as ethylene glycol monovinyl ether, hydroxyethyl monovinyl ether, hydroxynonyl monovinyl ether, ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, *n*-propyl vinyl ether, isopropyl vinyl ether, isopropenyl vinyl ether, dodecyl vinyl ether, diethylene glycol monovinyl ether, and octadecyl vinyl ether.

Among these vinyl ether compounds, from the viewpoint of curability, adhesion, and surface hardness, a divinyl ether compound and a trivinyl ether compound are preferable, and a divinyl ether compound is particularly preferable. The vinyl ether compounds may be used singly or in a combination of two or more types as appropriate.

Among them, from the viewpoint of curing speed, a (meth)acrylate and a (meth)acrylamide are preferable, and a tetra- or higher-functional (meth)acrylate is more preferable; from the viewpoint of the viscosity of the ink composition it is preferable to use in combination a polyfunctional (meth)acrylate, a mono- or difunctional (meth)acrylate, and a (meth)acrylamide.

The content of the polymerizable compound in the ink composition is preferably 50 to 95 wt % relative to the total solids content of the ink composition, more preferably 60 to 92 wt %, and particularly preferably 70 to 90 wt %.

### Cationically Polymerizable Monomers

Examples of preferred photocation polymerizable monomers that can be used as the polymerizable compound include epoxy compounds, vinyl ether compound, and oxetane compounds described in JP-A Nos. 6-9714, 2001-31892, 2001-40068, 2001-55507, 2001-310938, 2001-310937, and 2001-220526.

The epoxy compounds may be monofunctional compounds and polyfunctional compounds.

Examples of the monofunctional epoxy compounds include phenyl glycidyl ether, p-tert-butylphenyl glycidyl ether, butyl glycidyl ether, 2-ethylhexyl glycidyl ether, allyl glycidyl ether, 1,2-butylene oxide, 1,3-butadiene monoxide, 1,2-epoxydodecane, epichlorohydrin, 1,2-epoxydecane, styrene oxide, cyclohexane oxide, 3-methacryloyloxymethyl cyclohexene oxide, 3-acryloyloxymethyl cyclohexene oxide, and 3-vinyl cyclohexene oxide.

Examples of the polyfunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexane carboxylate, 2-(3,4-epoxycyclohexyl-5,5-spiro-3,4-epoxy)cyclohexane-metadioxane, bis(3,4-epoxycyclohexylmethyl)adipate, vinyl cyclohexane oxide, 4-vinyl epoxycyclohexane, bis(3,4-epoxy-6-methylcyclohexylmethyl) adipate, 3,4-epoxy-6-methylcyclohexyl-3',4'-epoxy-6'-methylcyclohexane carboxylate, methylenebis(3,4-epoxycyclohexane), dicyclopentadienediepoxide, di(3,4-epoxycyclohexylmethyl) ether of ethylene glycol, ethylenebis(3,4- epoxycyclohexyl carboxylate), dioctyl epoxyhexahydrophthalate, di-2-ethylhexyl epoxyhexahydrophthalate, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ethers, 1,1,3-tetradecadiene dioxide, limonene dioxide, 1,2,7,8-diepoxyoctane, and 1,2,5,6-diepoxycyclooctane.

Among these epoxy compounds, from the standpoint of curing rate, the aromatic epoxy compounds and alicyclic epoxy compounds are preferred, and the alicyclic epoxy compounds are especially preferred.

The above-described vinyl ether compounds may be monofunctional vinyl ether compounds or polyfunctional vinyl ether compounds.

Specific examples of monofunctional vinyl ether compounds include methyl vinyl ether, ether vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethyl cyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Examples of polyfunctional vinyl ether compounds include divinyl ethers such as ethylene glycol divinyl ether, diethylene glycol divinyl ether, polyethylene glycol divinyl ether, propylene glycol divinyl ether, butylene glycol divinyl ether, hexanediol divinyl ether, bisphenol A alkylene oxide divinyl ether, and bisphenol F alkylene oxide divinyl ether, and polyfunctional divinyl ethers such as trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, ethylene oxide adduct of trimethylolpropane trivinyl ether, propylene oxide adduct of trimethylolpropane trivinyl ether, ethylene oxide adduct of ditrimethylolpropane tetravinyl ether, propylene oxide adduct of ditrimethylolpropane tetravinyl ether, ethylene oxide adduct of pentaerythritol tetravinyl ether, propylene oxide adduct of pentaerythritol tetravinyl ether, ethylene oxide adduct of dipentaerythritol hexavinyl ether, and propylene oxide adduct of dipentaerythritol hexavinyl ether.

Among these vinyl ether compounds, from the standpoint of curability, adhesion to recording medium, and surface hardness of the formed image, di- or trivinyl ether compounds are preferred and divinyl ether compounds are especially preferred.

The oxetane compound means a compound having an oxetane ring and the preferred examples thereof are well-known oxetane compounds described in JP-A Nos. 2001-220526, 2001-310937, and 2003-341217.

In accordance with the present invention, compounds having 1 to 4 oxetane rings in the structure thereof are preferred as the oxetane compound. The advantage of using such compounds is in that the viscosity of the ink composition can be easily maintained with a range ensuring excellent handleability and a high adhesion of the cured ink to the recording medium can be obtained.

The oxetane compounds may be monofunctional oxetane compounds and polyfunctional oxetane compounds.

Examples of monofunctional oxetane compounds include 3-ethyl-3-hydroxymethyl oxetane, 3-(meth)acryloxymethyl-3-ethyl oxetane, (3-ethyl-3-oxycetanylmethoxy) methyl benzene, 4-fluoro-[1-(3-ethyl-3-oxetanylmethoxy)methyl]benzene, 4-methoxy-[1-(3-ethyl-3-oxetanylmethoxy)methyl]benzene, {1-(3-ethyl-3-oxetanylmethoxy)ethyl}phenyl ether, isobutoxymethyl(3-ethyl-3-oxetanylmethyl)ether, isobornyl oxyethyl(3-ethyl-3-oxetanylmethyl)ether, isobornyl(3-ethyl-3-oxetanylmethyl) ether, 2-ethylhexyl(3-ethyl-3-oxetanylmethyl) ether, ethyl diethylene glycol(3-ethyl-3-oxetanylmethyl) ether, dicyclopentadiene(3-ethyl-3-oxetanylmethyl) ether, dicyclopentenyl oxyethyl(3-ethyl-3-oxetanylmethyl) ether, dicyclopentenyl(3-ethyl-3-oxetanylmethyl) ether, tetrahydrofurfuryl(3-ethyl-3-oxetanylmethyl) ether, tetrabromophenyl(3-ethyl-3-oxetanylmethyl) ether, 2-tetrabromophenoxyethyl(3-ethyl-3-oxetanylmethyl) ether, tribromophenyl(3-ethyl-3-oxetanylmethyl) ether, 2-tribromophenoxyethyl(3-ethyl-3-oxetanylmethyl) ether, 2-hydroxyethyl(3-ethyl-3-oxetanylmethyl) ether, 2-hydroxypropyl(3-ethyl-3-oxetanylmethyl) ether, butoxyethyl(3-ethyl-3-oxetanylmethyl) ether, pentachlorophenyl(3-ethyl-3-oxetanylmethyl) ether, pentabromophenyl(3-ethyl-3-oxetanylmethyl) ether, and bornyl(3-ethyl-3-oxetanylmethyl) ether.

Examples of polyfunctional oxetane compounds include 3,7-bis(3-oxetanyl)-5-oxa-nonane, 3,3'-(1,3-(2-methylenyl)propanediylbis(oxymethylene))bis-(3-ethyloxetane), 1,4-bis[(3-ethyl-3-oxetanylmethoxy)methyl]benzene, 1,2-bis[(3-ethyl-3-oxetanlymethoxy)methyl]ethane, 1,3-bis[(3-ethyl-3-oxetanylmethoxy)methyl]propane, ethylene glycol bis(3-ethyl-3-oxetanylmethyl) ether, dicyclopentenyl bis(3-ethyl-3-oxetanylmethyl) ether, triethylene glycol bis(3-ethyl-3-oxetanylmethyl) ether, tetraethylene glycol bis(3-ethyl-3-oxetanylmethyl) ether, tricyclodecane diyldimethylene(3-ethyl-3-oxetanylmethyl) ether, trimethylol propane tris(3-ethyl-3-oxetanylmethyl) ether, 1,4-bis(3-ethyl-3-oxetanylmethoxy)butane, 1,6-bis(3-ethyl-3-oxetanylmethoxy)hexane, pentaerythritol tris(3-ethyl-3-oxetanylmethyl) ether, pentaerythritol tetrakis(3-ethyl-3-oxetanylmethyl) ether, polyethylene glycol bis(3-ethyl-3-oxetanylmethyl) ether, dipentaerythritol hexakis(3-ethyl-3-oxetanylmethyl) ether, dipentaerythritol pentakis(3-ethyl-3-oxetanylmethyl) ether, dipentaerythritol tetrakis(3-ethyl-3-oxetanylmethyl) ether, caprolactone-modified dipentaerythritol hexakis(3-ethyl-3-oxetanylmethyl) ether, caprolactone-modified dipentaerythritol pentakis (3-ethyl-3-oxetanylmethyl) ether, ditrimethylolpropane tetrakis(3-ethyl-3-oxetanylmethyl) ether, EO-modified bisphenol A bis(3-ethyl-3-oxetanylmethyl) ether, PO-modified bisphenol A bis(3-ethyl-3-oxetanylmethyl) ether, EO-modified hydrogenated bisphenol A bis (3-ethyl-3-oxetanylmethyl) ether, PO-modified hydrogenated bisphenol A bis(3-ethyl-3-oxetanylmethyl) ether, and EO-modified bisphenol F (3-ethyl-3-oxetanylmethyl) ether.

In addition to the above-described oxetane compounds, the compounds described in JP-A No. 2003-341217 (paragraphs 0021 to 0084) can be also advantageously used in accordance with the present invention.

Among the above-described oxetane compounds, in accordance with the present invention, from the standpoint of viscosity and adhesivity of the ink composition, the preferred oxetane compound has 1 to 2 oxetane rings.

When cationically polymerizable compounds are used, the ink composition in accordance with the present invention may use the above-described cationically polymerizable compound of one kind or of two or more kinds. From the standpoint of effectively suppressing the shrinkage during ink curing, it is preferred that at least one oxetane compound and at least one compound selected from epoxy compounds and vinyl ether compounds can be used together.

### Other Components

In addition to the above-described (A) to (C) component, the ink composition in accordance with the present invention can contain other components that are appropriately selected according to the object.

Examples of such other components include polymerization initiators, sensitizing dye, co-sensitizers (super sensitizers), resins, surfactants, ultraviolet radiation absorbers, antioxidants, fading preventing agents, discharge stabilizers, adhesion improving agents, leveling additives, and matting agents. These components may be used individually or in combinations of two or more thereof.

### Polymerization initiator

In the present invention, when the ink is cured using actinic radiation such as ultraviolet rays, it comprises a polymerization initiator. As a polymerization initiator that can be used in the present invention, a known polymerization initiator may be used, and it is preferable to use a radical polymerization initiator. The polymerization initiator that can be used in the present invention may be used singly or in a combination of two or more types. Furthermore, the radical polymerization initiator may be used in combination with a cationic polymerization initiator.

The polymerization initiator that can be used in the ink composition of the present invention is a compound that forms a polymerization initiating species by absorbing external energy. The external energy used for initiating polymerization can be broadly divided into heat and actinic radiation, and a thermal polymerization initiator and a photopolymerization initiator are used respectively. Examples of the actinic radiation include gamma rays, beta rays, an electron beam, ultraviolet rays, visible light, and infrared rays.

### Radical Polymerization initiator

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, (l) a compound having a carbon-halogen bond, and (m) an alkylamine compound. With regard to these radical polymerization initiators, the above-mentioned compounds (a) to (m) may be used singly or in combination. The radical polymerization initiator in the present invention may suitably be used singly or in a combination of two or more types.

Preferred examples of the aromatic ketone (a) and the thio compound (e) include a compound having a benzophenone skeleton (benzophenone compound) or a compound having a thioxanthone skeleton (thioxanthone compound) described in 'RADIATION CURING IN POLYMER SCIENCE AND TECHNOLOGY' J. P. FOUASSIER J. F. RABEK (1993), pp. 77 to 117. Preferred include an α-thiobenzophenone compound described in JP-B-47-6416, a benzoin ether compound described in JP-B-47-3981, an α-substituted benzoin compound described in JP-B-47-22326, a benzoin derivative described in JP-B-47-23664, an aroylphosphonic acid ester described in JP-A-57-30704, a dialkoxybenzophenone described in JP-B-60-26483, benzoin ethers described in JP-B-60-26403 and JP-A-62-81345, α-aminobenzophenones described in JP-B-1-34242, US Pat. No. 4,318,791, and EP No. 0284561A1, *p*-di(dimethylaminobenzoyl)benzene described in JP-A-2-211452, a thio-substituted aromatic ketone described in JP-A-61-194062, an acylphosphine sulfide described in JP-B-2-9597, an acylphosphine described in JP-B-2-9596, a thioxanthone described in JP-B-63-61950, and a coumarin described in JP-B-59-42864.

As the aromatic onium salt compound (c), there can be cited aromatic onium salts of elements of Groups 15, 16, and 17 of the periodic table, specifically, N, P, As, Sb, Bi, O, S, Se, Te, and I. Examples thereof include iodonium salts described in EP No. 104143, US Pat. No. 4837124, JP-A-2-150848, and JP-A-2-96514, diazonium salts (optionally substituted benzenediazoniums, etc.) described in EP Nos. 370693, 233567, 297443, 297442, 279210, and 422570, US Pat. Nos. 3902144, 4933377, 4760013, 4734444, and 2833827, diazonium salt resins (diazodiphenylamine formaldehyde resins, etc.), *N-*alkoxypyridinium salts, etc. (e.g. those described in US Pat. No. 4,743,528, JP-A-63-138345, JP-A-63-142345, JP-A-63-142346, and JP-B-46-42363; specific examples thereof include 1-methoxy-4-phenylpyridinium tetrafluoroborate); furthermore, compounds described in JP-B-52-147277, 52-14278, and 52-14279 may suitably be used. A radical or an acid is formed as an active species.

As the organic peroxide (d), almost all organic compounds having at least one oxygen-oxygen bond per molecule can be cited, and preferred examples thereof include peroxide ester compounds such as 3,3',4,4'-tetra(*t-*butylperoxycarbonyl)benzophenone, 3,3',4,4'-tetra(*t-*amylperoxycarbonyl)benzophenone, 3,3',4,4'-tetra(*t-*hexylperoxycarbonyl)benzophenone, 3,3',4,4'-tetra(*t-*octylperoxycarbonyl)benzophenone, 3,3',4,4'-tetra(cumylperoxycarbonyl)benzophenone, 3,3',4,4'-tetra(*p-*isopropylcumylperoxycarbonyl)benzophenone, and di-*t*-butyldiperoxyisophthalate.

As the hexaarylbiimidazole compound (f), there can be cited lophine dimers described in JP-B-45-37377 and JP-B-44-86516, and examples thereof include 2,2'-bis(*o*-chlorophenyl)-4,4',5,5'-tetraphenylbiimidazole, 2,2'-bis(*o*-bromophenyl)-4,4',5,5'-tetraphenylbiimidazole, 2,2'-bis(*o*,*p*-dichlorophenyl)-4,4',5,5'-tetraphenylbiimidazole, 2,2'-bis(*o*-chlorophenyl)-4,4',5,5'-tetra(*m-*methoxyphenyl)biimidazole, 2,2'-bis(*o*,*o*'-dichlorophenyl)-4,4',5,5'-tetraphenylbiimidazole, 2,2'-bis(*o*-nitrophenyl)-4,4',5,5'-tetraphenylbiimidazole, 2,2'-bis(*o*-methylphenyl)-4,4',5,5'-tetraphenylbiimidazole, and 2,2'-bis(*o-*trifluorophenyl)-4,4',5,5'-tetraphenylbiimidazole.

As the ketoxime ester compound (g), there can be cited 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-*p-*toluenesulfonyloxyiminobutan-2-one, and 2-ethoxycarbonyloxyimino-1-phenylpropan-l-one.

Examples of the borate compound (h) include compounds described in US Pat. Nos. 3,567,453 and 4,343,891, and EP Nos. 109,772 and 109,773.

Examples of the azinium salt compound (i) include N-O bond-containing compounds described in JP-A-63-138345, JP-A-63-142345, JP-A-63-142346, JP-A-63-143537, and JP-B-46-42363.

Examples of the metallocene compound (j) include titanocene compounds described in JP-A-59-152396, JP-A-61-151197, JP-A-63-41484, JP-A-2-249, and JP-A-2-4705, and iron-arene complexes described JP-A-1-304453 and JP-A-1-152109.

Specific examples of the titanocene compound include dicyclopentadienyl-Ti-dichloride, dicyclopentadienyl-Ti-bis-phenyl, di-cyclopentadienyl-Ti-bis-2,3,4,5,6-pentafluorophen-1-yl, dicyclopentadienyl-Ti-bis-2,3,5,6-tetrafluorophen-1-yl, dicyclopentadienyl-Ti-bis-2,4,6-trifluorophen-1-yl, dicyclopentadienyl-Ti-2,6-difluorophen-1-yl, dicyclopentadienyl-Ti-bis-2,4-difluorophen-1-yl, dimethylcyclopentadienyl-Ti-bis-2,3,4,5,6-pentafluorophen-1-yl, dimethylcyclopentadienyl-Ti-bis-2,3,5,6-tetrafluorophen-1-yl, dimethylcyclopentadienyl-Ti-bis-2,4-difluorophen-1-yl, bis(cyclopentadienyl)-bis(2,6-difluoro-3-(pyrr-1-yl)phenyl)titanium, bis(cyclopentadienyl)bis[2,6-difluoro-3-(methylsulfonamido)phenyl]titanium, and bis(cyclopentadienyl)bis[2,6-difluoro-3-(*N*-butylbiaroylamino)phenyl]titanium.

Examples of the active ester compound (k) include nitrobenzyl ester compounds described in EP Nos. 0290750, 046083, 156153, 271851, and 0388343, US Pat. Nos. 3901710 and 4181531, JP-A-60-198538, and JP-A-53-133022, iminosulfonate compounds described in EP Nos. 0199672, 84515, 199672, 044115, and 0101122, US Pat. Nos. 4618564, 4371605, and 4431774, JP-A-64-18143, JP-A-2-245756, and JP-A-4-365048, and compounds described in JP-B-62-6223, JP-B-63-14340, and JP-A-59-174831.

Preferred examples of the compound (I) having a carbon-halogen bond include a compound described in Wakabayashi et. al, Bull. Chem. Soc. Japan, 42, 2924 (1969), a compound described in British Patent No. 1388492, a compound described in JP-A-53-133428, and a compound described in German Patent No. 3337024.

Examples further include a compound described in F. C. Schaefer et al., J. Org. Chem., 29, 1527 (1964), a compound described in JP-A-62-58241, a compound described in JP-A-5-281728, a compound described in German Pat. No. 2641100, a compound described in German Pat. No. 3333450, compounds described in German Pat. No. 3021590, and compounds described in German Pat. No. 3021599.

### Cationic polymerization initiator

In the ink composition of the present invention, when a cationically polymerizable compound is used in combination, it is preferable to use a cationic polymerization initiator in combination.

Firstly, B(C₆F₅)₄⁻, PF₆⁻, AsF₆⁻, SbF₆⁻, and CF₃SO₃⁻ salts of diazonium, ammonium, iodonium, sulfonium, phosphonium, etc. aromatic onium compounds can be cited. Secondly, sulfonated materials that generate a sulfonic acid can be cited. Thirdly, halides that photogenerate a hydrogen halide can also be used. Fourthly, iron arene complexes can be cited.

In the ink composition of the present invention, the total amount of polymerization initiator used is preferably 0.01 to 35 wt % relative to the total amount of polymerizable compound, more preferably 0.5 to 20 wt %, and yet more preferably 1.0 to 15 wt %. The ink composition can be cured with 0.01 wt % or greater of the polymerization initiator, and a cured film having a uniform degree of curing can be obtained with 35 wt % or less.

Furthermore, when a sensitizing dye, which will be described later, is used in the ink composition of the present invention, the total amount of polymerization initiator used is preferably 200:1 to 1:200 relative to the sensitizing dye as a ratio by weight of polymerization initiator: sensitizing dye, more preferably 50:1 to 1:50, and yet more preferably 20:1 to 1:5.

### Sensitizing dye

The ink composition of the present invention may contain a sensitizing dye in order to promote decomposition of the above-mentioned polymerization initiator by absorbing specific actinic radiation, in particular when used for inkjet recording. The sensitizing dye absorbs specific actinic radiation and attains an electronically excited state. The sensitizing dye in the electronically excited state causes actions such as electron transfer, energy transfer, or heat generation upon contact with the polymerization initiator. This causes the polymerization initiator to undergo a chemical change and decompose, thus forming a radical, an acid, or a base.

Preferred examples of the sensitizing dye include those that belong to compounds below and have an adsorption wavelength in the region of 350 nm to 450 nm.

Polynuclear aromatic compounds (e.g. pyrene, perylene, triphenylene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin).

Preferred examples of the sensitizing dye include compounds represented by Formulae (IX) to (XIII) below.

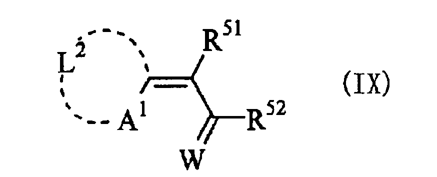

In Formula (IX), A¹ denotes a sulfur atom or NR⁵⁰, R⁵⁰ denotes an alkyl group having 1 to 8 carbon atoms or an aryl group having 6 to 15 carbon atoms, L² denotes a non-metallic atomic group forming a basic nucleus of a dye in cooperation with a neighboring A¹ and the neighboring carbon atom, R⁵¹ and R⁵² independently denote a hydrogen atom or a monovalent non-metallic atomic group, and R⁵¹ and R⁵² may be bonded together to form an acidic nucleus of a dye. W denotes an oxygen atom or a sulfur atom.

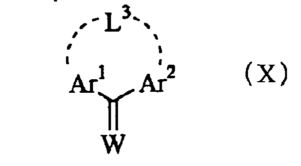

In Formula (X), Ar¹ and Ar² independently denote an aryl group having 6 to 15 carbon atoms and are connected to each other via a bond of -L³-. Here, L³ denotes -O- or -S-. W has the same meaning as that shown in Formula (IX).

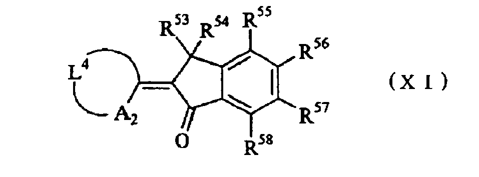

In Formula (XI), A₂ denotes a sulfur atom or NR⁵⁹, L⁴ denotes a non-metallic atomic group forming a basic nucleus of a dye in cooperation with the neighboring A₂ and carbon atom, R⁵³, R⁵⁴, R⁵⁵, R⁵⁶, R⁵⁷, and R⁵⁸ independently denote a monovalent non-metallic atomic group, and R⁵⁹ denotes an alkyl group having 1 to 8 carbon atoms or an aryl group having 6 to 15 carbon atoms.

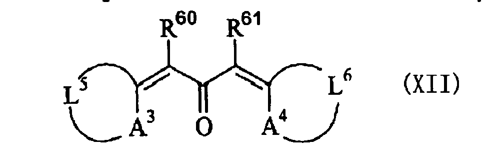

In Formula (XII), A³ and A⁴ independently denote -S-, -NR⁶²-, or -NR⁶³-, R⁶² and R⁶³ independently denote a substituted or unsubstituted alkyl group having 1 to 8 carbon atoms, or a substituted or unsubstituted aryl group having 6 to 15 carbon atoms, L⁵ and L⁶ independently denote a non-metallic atomic group forming a basic nucleus of a dye in cooperation with the neighboring A³ and A⁴ and neighboring carbon atom, and R⁶⁰ and R⁶¹ independently denote a hydrogen atom or a monovalent non-metallic atomic group, or are bonded to each other to form an aliphatic or aromatic ring.

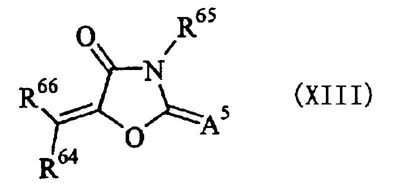

In Formula (XIII), R⁶⁶ denotes an aromatic ring or a hetero ring, which may have a substituent, and A⁵ denotes an oxygen atom, a sulfur atom, or -NR⁶⁷-. R⁶⁴, R⁶⁵, and R⁶⁷ independently denote a hydrogen atom or a monovalent non-metallic atomic group, and R⁶⁷ and R⁶⁴, and R⁶⁵ and R⁶⁷ may be bonded to each other to form an aliphatic or aromatic ring.

Specific examples of the compounds represented by Formulae (IX) to (XIII) include (E-1) to (E-20) listed below.

In some of the compound examples below, the hydrocarbon chain is described by a simplified structural Formula in which symbols for carbon (C) and hydrogen (H) are omitted.

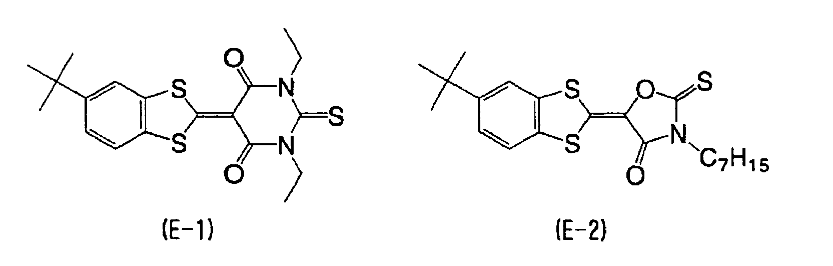

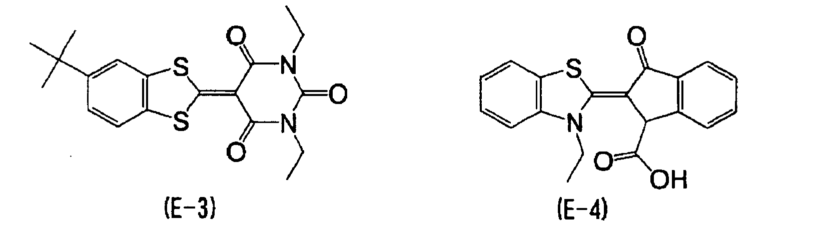

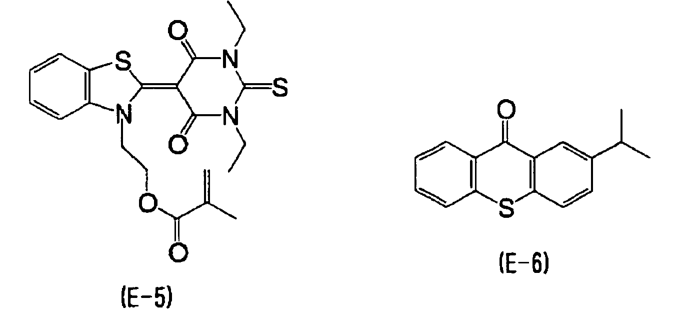

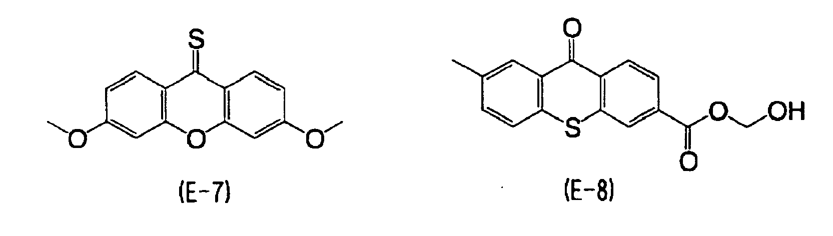

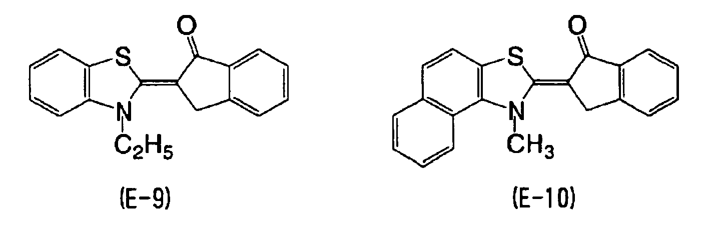

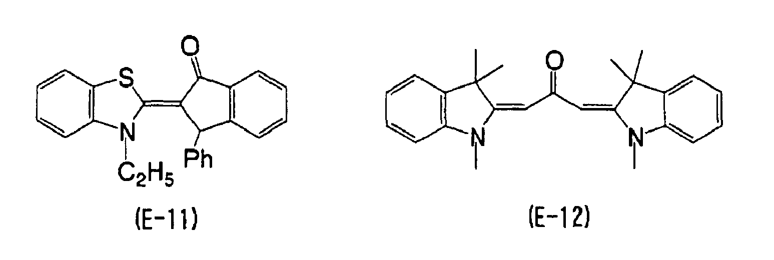

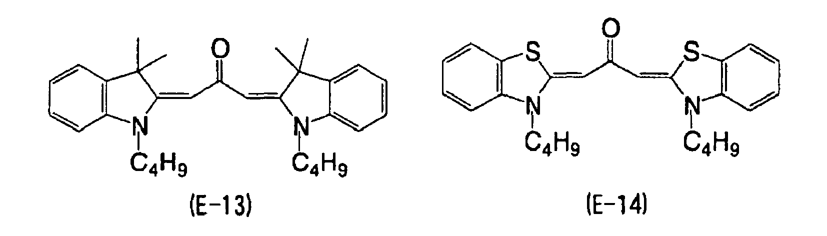

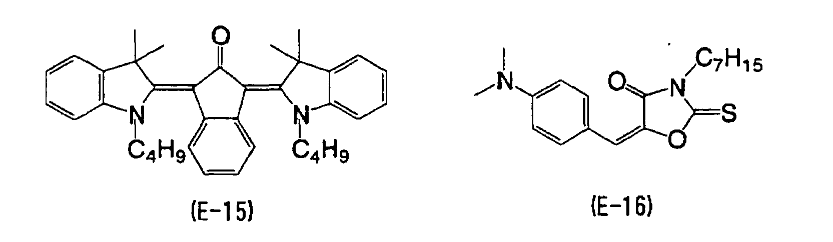

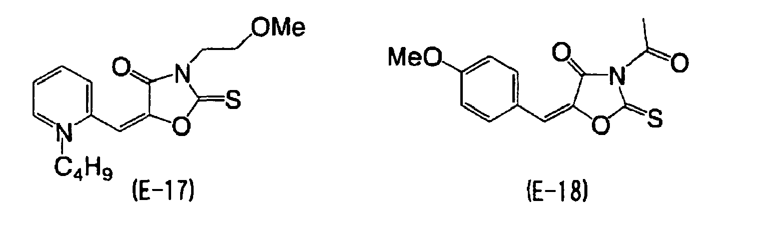

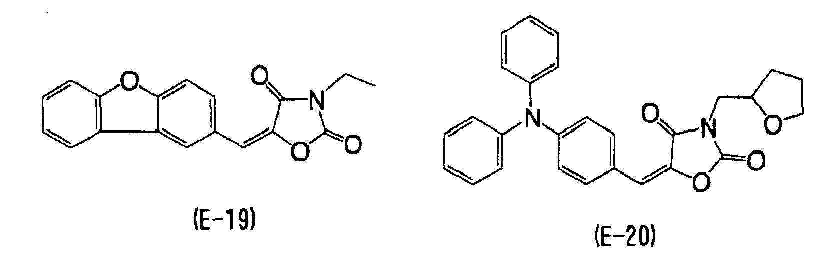

The content of the sensitizing dye in the ink composition of the present invention is appropriately selected according to the intended purpose, but it is preferably 0.05 to 4 wt % relative to the weight of the entire ink composition.

### Co-sensitizer (Super sensitizer)

The ink composition of the present invention preferably comprises a co-sensitizer. In the present invention, the co-sensitizer has the function of further improving the sensitivity of the sensitizing dye to actinic radiation or the function of suppressing inhibition by oxygen of polymerization of a polymerizable compound, etc.

Examples of such a co-sensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl p-dimethylaminobenzoate, p-formyldimethylaniline, and p-methylthiodimethylaniline.

Other examples of the co-sensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3H)-quinazoline, and beta-mercaptonaphthalene.

Yet other examples of the co-sensitizer include amino acid compounds (e.g. N-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H compounds and Ge-H compounds described in JP-A-8-54785.

The content of the co-sensitizer in the ink composition of the present invention is appropriately selected according to the intended purpose, but it is preferably 0.05 to 4 wt % relative to the weight of the entire ink composition.

### Surfactant

It is preferable to add a surfactant to the ink composition of the present invention in order to impart long-term discharge stability.

As the surfactant, those described in JP-A-62-173463 and 62-183457 can be cited. Examples thereof include anionic surfactants such as dialkylsulfosuccinic acid salts, alkylnaphthalene sulfonic acid salts, and fatty acid salts, nonionic surfactants such as polyoxyethylene alkyl ethers, polyoxyethylene alkyl aryl ethers, acetylene glycols, and polyoxyethylene/polyoxypropylene block copolymers, and cationic surfactants such as alkylamine salts and quaternary ammonium salts. An organofluoro compound may be used instead of the above-mentioned surfactant. The organofluoro compound is preferably hydrophobic. Examples of the organofluoro compound include fluorine-based surfactants, oillike fluorine-based compounds (e.g. fluorine oil), solid fluorine compound resins (e.g. tetrafluoroethylene resin), and those described in JP-B-57-9053 (paragraphs 8 to 17) and JP-A-62-135826.

The content of the surfactant in the ink composition of the present invention is appropriately selected according to the intended purpose and is preferably 0.0001 to 1 wt % relative to the weight of the entire ink composition.

### UV absorber

A UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (the term "JP-W" as used herein means an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is preferably on the order of 0.5 to 15 wt % on the basis of the solids content in the ink composition.

### Antioxidant

In order to improve the stability of the ink composition, an antioxidant may be added. Examples of the antioxidant include those described in Laid-open European Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is preferably on the order of 0.1 to 8 wt % on the basis of the solids content in the ink composition.

### Antifading agent

The ink composition of the present invention may employ various organic and metal complex antifading agents. The organic antifading agents include hydroquinones, alkoxyphenols, dialkoxyphenols, phenols, anilines, amines, indanes, chromans, alkoxyanilines, and heterocycles, and the metal complex antifading agents include nickel complexes and zinc complexes. More specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in general Formulae and compound examples of typical compounds described in JP-A-62-21572, pages 127 to 137.

The amount thereof added is appropriately selected according to the intended application, and it is preferably on the order of 0.1 to 8 wt % on the basis of the solids content in the ink composition.

### Conductive salt

The ink composition of the present invention may contain, for the purpose of controlling discharge properties, a conductive salt such as potassium thiocyanate, lithium nitrate, ammonium thiocyanate, or dimethylamine hydrochloride.

### Solvent

It is also effective to add a trace amount of organic solvent to the ink composition of the present invention in order to improve the adhesion to a recording medium.

With regard to the solvent that can be used in the ink composition of the present invention, when a resin is used in the internal structure of the polymerizable particles, it is preferable for a difference in the solubility parameter value (SP value) between the resin and the solvent used to be 2 or greater, and more preferably 3 or greater.

Examples of the solvent include ketone-based solvents such as acetone, methyl ethyl ketone, and diethyl ketone, alcohol-based solvents such as methanol, ethanol, 2-propanol, 1-propanol, 1-butanol, and tert-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 0.1 to 5 wt % relative to the total amount of the ink composition, and more preferably 0.1 to 3 wt %.

### High molecular weight compound

The ink composition may contain various types of high molecular weight compounds in order to adjust film physical properties. Examples of the high molecular weight compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinylic resins, acrylic resins, rubber-based resins, waxes, and other natural resins. They may be used in a combination of two or more types. Among these, a vinylic copolymer obtained by copolymerization of an acrylic monomer is preferable. Furthermore, as a copolymer component of the high molecular weight compound, a copolymer containing as a structural unit a 'carboxy group-containing monomer', an 'alkyl methacrylate ester', or an 'alkyl acrylate ester' may preferably be used.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### Properties of ink composition

In the present invention, the ink composition preferably has a viscosity at 25°C of no more than 50 mPa·s, more preferably 3 to 50 mPa·s, yet more preferably 5 to 40 mPa·s and most preferably 7 to 30 mPa·s. Furthermore, the viscosity of the ink composition at the discharge temperature (e.g. 25°C to 80°C, and preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, uncured monomer can be reduced, and the odor can be reduced. Furthermore, ink spreading when ink droplets have landed can be suppressed, and as a result there is the advantage that the image quality is improved.

The viscosity may be measured using, for example, a cone and plate rotational viscometer (type E viscometer) or Brookfield LVDV-I type B viscometer (manufactured by Brookfield).

The surface tension of the ink composition of the present invention at 25°C is preferably 20 to 35 mN/m, and yet more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

The surface tension may be measured using, for example, a surface tensiometer employing the Wilhelmy method or a Du Nouy surface tensiometer.

### Production

A process for producing the ink composition of the present invention is not particularly limited and may be selected appropriately according to the intended application; for example, the ink composition may be produced by mixing each of the above-mentioned components. Said mixing may be carried out using a known mixing machine, etc. in accordance with a known method.

### Application

The ink composition of the present invention may be used suitably as an ink for various types of image recording and may be used particularly suitably as an inkjet recording ink composition. In this case, image recording is carried out by printing the ink composition on a recording medium by an inkjet printer, and by subsequently irradiating the printed ink composition (recorded image) with actinic radiation so as to cure it.

With regard to an image recorded material (printed material) obtained using the ink composition of the present invention, since an image area is cured by irradiation with actinic radiation such as UV rays, the image area has excellent strength. Because of this, the ink composition may be used suitably for various applications other than image recording (image formation), such as formation of a lithographic printing plate ink-receiving layer (image area).

### Inkjet recording method and inkjet recording device

The ink composition of the present invention is used for inkjet recording. The inkjet recording method of the present invention is a method for forming an image by discharging the ink composition of the present invention onto a recording medium (support, recording material, etc.) for inkjet recording and curing the ink by irradiating the ink composition so discharged onto the recording medium with actinic radiation.

More particularly, the inkjet recording method of the present invention comprises (a¹) a step of discharging the ink composition of the present invention onto a recording medium and (b¹) a step of curing the ink composition by irradiating the ink composition so discharged with actinic radiation,

The inkjet recording method of the present invention comprises the steps (a¹) and (b¹) above and thus forms an image from the ink composition cured on the recording medium.

The step (a¹) of the inkjet recording method of the present invention may employ an inkjet recording device that will be described in detail below.

### Inkjet recording device

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink onto a recording medium in step (a¹) of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of 1 to 100 pL, and preferably 8 to 30 pL, at a resolution of 320 x 320 to 4,000 x 4,000dpi, preferably 400 x 400 to 1,600 x 1,600dpi, and more preferably 720 x 720 dpi. Here, dpi referred to in the present invention means the number of dots per 2.54 cm.

As described above, since it is desirable for the radiation curing type ink to be discharged at a constant temperature, a section from the ink supply tank to the inkjet head is thermally insulated and heated. A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition or the inkjet recording ink composition of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of no more than 50 mPa·s since a good discharge stability can be obtained. By employing this method, high discharge stability can be realized.

The radiation curing type ink composition such as the ink composition of the present invention generally has a viscosity that is higher than that of a normal ink composition or a water-based ink used for an inkjet recording ink, and variation in viscosity due to a change in temperature at the time of discharge is large. Viscosity variation in the ink has a large effect on changes in liquid droplet size and changes in liquid droplet discharge speed and, consequently, causes the image quality to be degraded. It is therefore necessary to maintain the ink discharge temperature as constant as possible. In the present invention, the control range for the temperature is desirably ±5°C of a set temperature, preferably ±2°C of the set temperature, and more preferably ±1°C of the set temperature.

The step (b¹) of curing the discharged ink composition by irradiating the ink composition with actinic radiation is now explained.

The ink composition discharged onto the recording medium cures upon exposure to actinic radiation. This is due to an initiating species such as a radical, an acid, or a base being generated by decomposition of the polymerization initiator contained in the ink composition of the present invention by irradiation with actinic radiation, the initiating species functioning so as to make a polymerization reaction of a radically polymerizable compound take place and to promote it. In this process, if a sensitizing dye is present together with the polymerization initiator in the ink composition, the sensitizing dye in the system absorbs actinic radiation, becomes excited, and promotes decomposition of the polymerization initiator by contact with the polymerization initiator, thus enabling a curing reaction with higher sensitivity to be achieved.

The actinic radiation used in this process may include alpha rays, gamma rays, an electron beam, X rays, UV rays, visible light, and IR rays. Although it depends on the absorption characteristics of the sensitizing dye, the peak wavelength of the actinic radiation is, for example, 200 to 600 nm, preferably 300 to 450 nm, and more preferably 350 to 420 nm.

Furthermore, in the present invention, the polymerization initiation system has sufficient sensitivity for low output actinic radiation. The actinic radiation is applied therefore so that the illumination intensity on the exposed surface is, for example, 10 to 4,000 mW/cm², and preferably 20 to 2,500 mW/cm².

As an actinic radiation source, a mercury lamp, a gas/solid laser, etc. are mainly used, and for UV photocuring inkjet a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another violet LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mJ/cm².

The ink composition of the present invention is desirably exposed to such actinic radiation for, for example, 0.01 to 120 sec., and preferably 0.1 to 90 sec.

Irradiation conditions and a basic method for irradiation with actinic radiation are disclosed in JP-A-60-132767. Specifically, a light source is provided on either side of a head unit that includes an ink discharge device, and the head unit and the light source are made to scan by a so-called shuttle system. Irradiation with actinic radiation is carried out after a certain time (e.g. 0.01 to 0.5 sec., preferably 0.01 to 0.3 sec., and more preferably 0.01 to 0.15 sec.) has elapsed from when the ink has landed. By controlling the time from ink landing to irradiation so as to be a minimum in this way, it becomes possible to prevent the ink that has landed on a recording medium from spreading before being cured. Furthermore, since the ink can be exposed before it reaches a deep area of a porous recording medium that the light source cannot reach, it is possible to prevent monomer from remaining unreacted, and as a result the odor can be reduced.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing such a recording method, it is possible to maintain a uniform dot diameter for landed ink even for various types of recording media having different surface wettability, thereby improving the image quality. In order to obtain a color image, it is preferable to superimpose colors in order from those with a low lightness. By superimposing inks in order from one with low lightness, it is easy for radiation to reach a lower ink, the curing sensitivity is good, the amount of residual monomer decreases, odor is reduced, and an improvement in adhesion can be expected. Furthermore, although it is possible to discharge all colors and then expose them at the same time, it is preferable to expose one color at a time from the viewpoint of promoting curing.

In this way, the ink composition of the present invention is cured by irradiation with actinic radiation in high sensitivity to thus form an image on the surface of the recording medium.

### Recording medium

A recording medium on which an image is recorded by discharging the ink composition of the present invention is not particularly limited and may be selected appropriately according to the intended application, and examples thereof include papers such as normal non-coated paper and coated paper, various types of non-absorbing resin materials used in so-called flexible packaging, and resin films formed by molding the materials into a film shape. Examples of the resin films include PET film, OPS film, OPP film, ONy film, PVC film, PE film, TAC film, polycarbonate film, acrylic film, ABS film, polyacetal film, PVA film, and rubber film. Metal, glass, etc. may also be used as the recording medium.

### Printed material

The printed material of the present invention is one obtained by curing the ink composition of the present invention, and as the printed material one obtained by discharging the ink composition of the present invention onto the above recording medium and curing it is preferable. In this process, said discharging is carried out by inkjet recording using an inkjet printer.

The printed material of the present invention is one in which an ink composition used in image recording is the ink composition of the present invention, and since it contains fine pigment particles dispersed uniformly and stably, the resulting printed material has excellent coloring properties and sharpness, high image quality, and excellent weatherability, and can be applied suitably in a wide variety of fields.

The present invention can provide an ink composition that excels in dispersivity and stability of a fine pigment, can form high-quality images with a good color reproduction, a bright color tone and a high tinting strength, can be cured by irradiation with active radiation, and is suitable for ink-jet recording applications, and also provide an image recording method and image recording matter using the ink composition.

### Examples

The present invention is explained in further detail by reference to Examples and Comparative Examples. However, the present invention should not be construed as being limited to these Examples.

'Parts' described below means 'parts by weight' unless otherwise specified.

Materials used in the present invention are as follows.
·HEUCO GREEN 600703K (C.I.Pigment Green 7, manufactured by Heubach)
·Monastral GREEN GN-C 600703K (C.I.Pigment Green 7, manufactured by Heubach)
·Monastral GREEN GNX-C (C.I.Pigment Green 7, manufactured by Heubach)
·Monastral GREEN GBX-C (C.I.Pigment Green 7, manufactured by Heubach)
·HOSTAPERM GREEN GG01 (C.I.Pigment Green 7, manufactured by Clariant)
·HOSTAPERM GREEN GNX-D (C.I.Pigment Green 7, manufactured by Clariant)
·HOSTAPERM GREEN GNX-TS (C.I.Pigment Green 7, manufactured by Clariant)
·PV Fast GREEN GNX (C.I.Pigment Green 7, manufactured by Clariant)
·Novotex GREEN GNX (C.I.Pigment Green 7, manufactured by Clariant)
·Fastogen GREEN S (C.I.Pigment Green 7, manufactured by DIC Corporation)
·Fastogen GREEN SF (C.I.Pigment Green 7, manufactured by DIC Corporation)
·Phthalocyanine GREEN B308 (C.I.Pigment Green 7, manufactured by Sanyo Color Works Ltd.)
·Phthalocyanine GREEN SAX (C.I.Pigment Green 7, manufactured by Sanyo Color Works Ltd.)
·Cyanine GREEN 2G-550-D (C.I.Pigment Green 7, manufactured by Dainichiseika Color & Chemicals Mfg. Co., Ltd.)
·Cyanine GREEN 2GO (C.I.Pigment Green 7, manufactured by Dainichiseika Color & Chemicals Mfg. Co., Ltd.)
·Cyanine GREEN PBN-1 (C.I.Pigment Green 7, manufactured by TOYO INK Mfg. Co., Ltd.)
·HELIOGEN BLUE L8605 (C.I.Pigment Green 7, manufactured by BASF)
·HELIOGEN BLUE K8730 (C.I.Pigment Green 7, manufactured by BASF)
·HELIOGEN BLUE D8725 (C.I.Pigment Green 7, manufactured by BASF)
·HELIOGEN BLUE L9361 (C.I.Pigment Green 36, manufactured by BASF)
·Irgalite GREEN 6G (C.I.Pigment Green 36, manufactured by Ciba Specialty Chemicals)
·HOSTAPERM GREEN 8G (C.I.Pigment Green 36, manufactured by Clariant)
·Fastogen GREEN 2KY (C.I.Pigment Green 36, manufactured by DIC Corporation) ·Lionol GREEN 2YS (C.I.Pigment Green 36, manufactured by TOYO INK Mfg. Co., Ltd.)
·Lionol GREEN 6YK (C.I.Pigment Green 36, manufactured by TOYO INK Mfg. Co., Ltd.)
·HOSTAPERM VIOLET RL-NF (C.I.Pigment Violet 23, manufactured by Clariant)
·HOSTAPERM VIOLET RL02 (C.I.Pigment Violet 23, manufactured by Clariant)
·HOSTAPERM VIOLET BL (C.I.Pigment Violet 23, manufactured by Clariant)
·HOSTAPERM VIOLET P-RL (C.I.Pigment Violet 23, manufactured by Clariant)
·HOSTAPERM VIOLET RLspec (C.I.Pigment Violet 23, manufactured by Clariant)
·HOSTAPERM VIOLET RLspec-TS (C.I.Pigment Violet 23, manufactured by Clariant)
·PV Fast Violet RL (C.I.Pigment Violet 23, manufactured by Clariant)
·PV Fast Violet BLP (C.I.Pigment Violet 23, manufactured by Clariant)
·Novotex Violet BL-PC VP 2429 (C.I.Pigment Violet 23, manufactured by Clariant)
·Novotex Violet BL VP 2435 (C.I.Pigment Violet 23, manufactured by Clariant)
·Fastogen Super Violet RN (C.I.Pigment Violet 23, manufactured by DIC Corporation)
·Fastogen Super Violet RNS (C.I.Pigment Violet 23, manufactured by DIC Corporation)
·Fastogen Super Violet RN-SU-02 (C.I.Pigment Violet 23, manufactured by DIC Corporation)
·Fastogen Super Violet RVS (C.I.Pigment Violet 23, manufactured by DIC Corporation)
·Fastogen Super Violet RXE (C.I.Pigment Violet 23, manufactured by DIC Corporation)
·Fastogen Super Violet RXS (C.I.Pigment Violet 23, manufactured by DIC Corporation)
·Lionogen Violet R6100 (C.I.Pigment Violet 23, manufactured by TOYO INK Mfg. Co., Ltd.)
·Lionogen Violet R6200 (C.I.Pigment Violet 23, manufactured by TOYO INK Mfg. Co., Ltd.)
·Oriental Fast Violet BL (C.I.Pigment Violet 23, manufactured by TOYO INK Mfg. Co., Ltd.)
·Paliogen Violet L 5890 (C.I.Pigment Violet 23, manufactured by BASF)
·Crommophtal Violet GT (C.I.Pigment Violet 23, manufactured by Ciba Specialty Chemicals)
·Crommophtal Violet B (C.I.Pigment Violet 37, manufactured by Ciba Specialty Chemicals)
·Novoperm Orange HL (C.I.Pigment Orange 36, manufactured by Clariant)
·Symuler Fast Orange 4183H (C.I.Pigment Orange 36, manufactured by DIC Corporation)
·Chromofine Orange 3700L (C.I.Pigment Orange 36, manufactured by Dainichiseika Color & Chemicals Mfg. Co., Ltd.)
·Lionogen Orange R-F (C.I.Pigment Orange 36, manufactured by Dainichiseika Color & Chemicals Mfg. Co., Ltd.)
·Novoperm Red HFG (C.I.Pigment Orange 38, manufactured by Clariant)
·Hostaperm Orange HGL (C.I.Pigment Orange 60, manufactured by Clariant)
·DisperBYK-168 (dispersant, manufactured by BYK Chemie)
·Solseperse 32000 (dispersant, manufactured by Noveon)
·FANCRYL-512A (corresponding to compound example M-11, manufactured by Hitachi Chemical Co., Ltd.)
·N-Vinylcaprolactam (NVC, manufactured by Aldrich)
·Actilane 421 (propoxylated neopentyl glycol diacrylate, manufactured by Akcros)
·NK ester AMP-10G (phenoxyethyl acrylate, manufactured by Shin-Nakamura Chemical Co., Ltd.)
·FIRSTCURE ST-1 (polymerization inhibitor, manufactured by ChemFirst)
·Lucirin TPO (photopolymerization initiator, manufactured by BASF)
· Benzophenone (photopolymerization initiator, manufactured by Wako Pure Chemical Industries, Ltd.)
·IRGACURE 184 (photopolymerization initiator, manufactured by Ciba Specialty Chemicals)
·BYK-307 (surfactant, manufactured by BYK Chemie)
·FIRSTCURE ITX (sensitizer, manufactured by ChemFirst)

### Example 1-1

### Synthesis of polymerizable compound and polymer thereof

### Synthesis of M1-1

355.0 parts of 1,8-naphthalimide was dissolved in 1,500 parts of N-methylpyrrolidone, and 0.57 parts of nitrobenzene was added at 25°C. 301.4 parts of diazabicycloundecene (DBU) was added dropwise to the mixture. After stirring for 30 minutes, 412.1 parts of chloromethylstyrene was added dropwise to the mixture, which was then heated at 60°C with stirring for 4 hours. 2,700 parts of isopropanol and 900 parts of distilled water were added to this reaction solution and stirred while cooling to 5°C. The resulting precipitates were separated by filtration and washed with isopropanol to obtain 544.0 parts of polymerizable compound M1-1.

From NMR data shown below, the compound obtained was confirmed to be polymerizable compound M1-1.

¹H-NMR (300MHz, CDCl₃, δ): 8.61 (d,2H), 8.21 (d,2H), 7.75 (t,2H), 7.25-7.60 (m,4H), 6.66 (m, 1H), 5.73 (dd,1H), 5.38 (s,2H), 5.20 (dd, 1H).

### Synthesis of M1-3

19.7 parts of 1,8-naphthalimide was dissolved in 100 parts of N-methylpyrrolidone, 11.1 parts of triethylamine was added and stirred. 20.2 parts of 4-vinylbenzene sulfonyl chloride was added dropwise to the mixture and stirred for 2 hours. 500 parts of distilled water was added to this reaction solution and stirred while cooling to 5°C. The resulting precipitates were separated by filtration and washed with methanol to obtain 20.0 parts of polymerizable compound M1-3.

From NMR data shown below, the compound obtained was confirmed to be polymerizable compound M1-3.

¹H-NMR (300MHz, CDCl₃, δ): 8.61 (d, 2H), 8.21 (d, 2H), 8.01 (d, 2H), 7.75 (t, 2H), 7.60 (d, 2H), 6.76 (m, 1H), 5.93 (dd, 1H), 5.58 (dd, 1H), 5.40 (d, 2H).

### Synthesis of graft copolymer 1-1

2.0 parts of M1-1, 18.0 parts of polymethyl methacrylate having a methacryloyl group at one terminal (AA-6, manufactured by Toagosei Co., Ltd.), and 20 parts of methyl ethyl ketone were introduced into a three-neck flask in which the atmosphere was substituted with nitrogen, stirred with a stirrer (Three-one Motor, manufactured by Shinto Scientific Co., Ltd.) and heated to raise the temperature to 78°C with nitrogen flowing in the flask. 0.027 parts of 2,2-azobis(2,4-dimethylvaleronitrile) (V-65, manufactured by Wako Pure Chemical Industries, Ltd.) was added to the above solution and heated at 78°C with stirring for 2 hours. After 2 hours, 0.027 parts of V-65 was further added and heated with stirring for 3 hours. The resulting reaction solution was poured into 1,000 parts of hexane with stirring, and the precipitates produced were heated and dried to obtain a graft copolymer 1-1 (the above listed graft copolymer 1-1: A copolymer of the monomer represented by M1-1, and polymethylmethacrylate having a methacryloyl group at its terminal).

The weight average molecular mass (polystyrene standard) of the graft copolymer 1-1, determined by GPC, was 31,500. Thus, it was confirmed that polymer was obtained.

For GPC, Shodex GPC KF-804 (manufactured by Showa Denko K.K.) was used as a column, and THF was used as an eluent. Measurement was performed at a flow rate of 0.8 mL/min and a column temperature of 40°C, and refractive index (RI) detection was used.

### Synthesis of graft copolymer 1-2

2.0 parts of M1-1, 2.0 parts of 3-(N,N-dimethylaminopropyl acrylamide), 16.0 parts of polymethyl methacrylate having a methacryloyl group at one terminal (AA-6, manufactured by Toagosei Co., Ltd.), and 20 parts of methyl ethyl ketone were introduced into a three-neck flask in which the atmosphere was substituted with nitrogen, stirred with a stirrer (Three-one Motor, manufactured by Shinto Scientific Co., Ltd.) and heated to raise the temperature to 78°C with nitrogen flowing in the flask. 0.027 parts of 2,2-azobis(2,4-dimethylvaleronitrile) (V-65, manufactured by Wako Pure Chemical Industries, Ltd.) was added to the above solution and heated at 78°C with stirring for 2 hours. After 2 hours, 0.027 parts of V-65 was further added and heated with stirring for 3 hours. The resulting reaction solution was poured into 1,000 parts of hexane with stirring, and the precipitates produced were heated and dried to obtain a graft copolymer 1-2 (the above listed graft copolymer 1-8: A copolymer of the monomer represented by M1-1, 3-(N,N-dimethylamino)propyl acrylamide, and polymethylmethacrylate having a methacryloyl group at its terminal).

The weight average molecular mass (polystyrene standard) of the graft copolymer 1-2, determined by GPC, was 56,600. Thus, it was confirmed that polymer was obtained.

### Synthesis of graft copolymer 1-3

A graft copolymer 1-3 (the above listed graft copolymer 1-2: A copolymer of the monomer represented by M1-1, and polyethylene glycol mono(meth)acrylate) was obtained in the same way as in the synthetic example of graft copolymer 1-1 except that the "polymethyl methacrylate having a methacryloyl group at one terminal" of the synthetic example of graft copolymer 1-1 was changed to "methoxypolyethylene glycol methacrylate" (NK ESTER M-230G, manufactured by Shin-Nakamura Chemical Co., Ltd.).

The weight average molecular mass (polystyrene standard) of the graft copolymer 1-3, determined by GPC, was 24,500. Thus, it was confirmed that polymer was obtained.

### Synthesis of graft copolymer 1-4

A graft copolymer 1-4 (the above listed graft copolymer 1-4: A copolymer of the monomer represented by M1-1, and polybutyl acrylate having a methacryloyl group at its terminal) was obtained in the same way as in the synthetic example of graft copolymer 1-1 except that the "polymethyl methacrylate having a methacryloyl group at one terminal" of the synthetic example of graft copolymer 1-1 was changed to "polybutyl acrylate having a methacryloyl group at one terminal" (AB-6, manufactured by Toagosei Co., Ltd.).

The weight average molecular mass (polystyrene standard) of the graft copolymer 1-4, determined by GPC, was 28,800. Thus, it was confirmed that polymer was obtained.

### Synthesis of graft copolymer 1-5

A graft copolymer 1-5 (the above listed graft copolymer 1-5: A copolymer of the monomer represented by M1-3, and polymethylmethacrylate having a methacryloyl group at its terminal) was obtained in the same way as in the synthetic example of graft copolymer 1-1 except that M1-1 of the synthetic example of graft copolymer 1-1 was changed to M1-3.

The weight average molecular mass (polystyrene standard) of the graft copolymer 1-5, determined by GPC, was 18,700. Thus, it was confirmed that polymer was obtained.

### Synthesis of graft copolymer 1-6

A graft copolymer 1-6 (the above listed graft copolymer 1-16: A copolymer of the monomer represented by M1-1, methacrylic acid, and polymethylmethacrylate having a methacryloyl group at its terminal) was obtained in the same way as in the synthetic example of graft copolymer 1-2 except that the "3-(N,N-dimethylaminopropyl acrylamide)" of the synthetic example of graft copolymer 1-2 was changed to "methacrylic acid".

The weight average molecular mass (polystyrene standard) of the graft copolymer 1-6, determined by GPC, was 19,800. Thus, it was confirmed that polymer was obtained.

### Preparation of mill base A1-1

300 parts by weight of HEUCO GREEN 600703K, 500 parts by weight of Actilane 421 (acrylate monomer, manufactured by Akcros), and 200 parts by weight of graft copolymer 1-1 were mixed by stirring to give a pigment ink. Preparation of a pigment mill base was carried out by putting the pigment ink into an M50 disperser motor mill (manufactured by Eiger) and by using zirconia beads having a diameter of 0.65 mm at a peripheral speed of 9 m/s for 4 hours.

### Preparation of mill bases A1-2 to A1-30

Mill bases A1-2 to A1-30 were prepared in the same manner as for mill base A1-1 except that the pigment and the graft polymer were changed to a pigment and a graft polymer shown in Table 1 below.

**(Table 1)**

| Mill base | Pigment | Graft copolymer |
|---|---|---|
| A1-2 | HEUCO GREEN 600703K | 1-2 |
| A1-3 | HEUCO GREEN 600703K | 1-3 |
| A1-4 | HEUCO GREEN 600703K | 1-4 |
| A1-5 | Monastral GREEN GN-C | 1-1 |
| A1-6 | Monastral GREEN GNX-C | 1-2 |
| A1-7 | Monastral GREEN GBX-C | 1-3 |
| A1-8 | HOSTAPERM GREEN GG01 | 1-1 |
| A1-9 | HOSTAPERM GREEN GNX-D | 1-1 |
| A1-10 | HOSTAPERM GREEN GNX-TS | 1-2 |
| A1-11 | PV Fast GREEN GNX | 1-3 |
| A1-12 | Novotex GREEN GNX | 1-5 |
| A1-13 | Fastogen GREEN S | 1-3 |
| A1-14 | Fastogen GREEN SF | 1-4 |
| A1-15 | Phthalocyanine GREEN B308 | 1-5 |
| A1-16 | Phthalocyanine GREEN SAX | 1-2 |
| A1-17 | Cyanine GREEN 2G-550-D | 1-1 |
| A1-18 | Cyanine GREEN 2GO | 1-2 |
| A1-19 | Cyanine GREEN PBN-1 | 1-4 |
| A1-20 | HELIOGEN BLUE L8605 | 1-1 |
| A1-21 | HELIOGEN BLUE K8730 | 1-5 |
| A1-22 | HELIOGEN BLUE D8725 | 1-1 |
| A1-23 | HELIOGEN BLUE L9361 | 1-6 |
| A1-24 | Irgalite GREEN 6G | 1-2 |
| A1-25 | HOSTAPERM GREEN 8G | 1-6 |
| A1-26 | Fastogen GREEN 2KY | 1-1 |
| A1-27 | Lionol GREEN 2YS | 1-2 |
| A1-28 | Lionol GREEN 6YK | 1-6 |
| A1-29 | HEUCO GREEN 600703K | DisperBYK-168 |
| A1-30 | HEUCO GREEN 600703K | Solsperse 32000 |

### Preparation of mill base B1-1

300 parts by weight of HOSTAPERM VIOLET RL-NF, 500 parts by weight of Actilane 421 (acrylate monomer, manufactured by Akcros), and 200 parts by weight of graft copolymer 1-1 were mixed by stirring to give a pigment ink. Preparation of a pigment mill base was carried out by putting the pigment ink into an M50 disperser motor mill (manufactured by Eiger) and by using zirconia beads having a diameter of 0.65 mm at a peripheral speed of 9 m/s for 4 hours.

### Preparation of mill bases B1-2 to B1-27

Mill bases B1-2 to B1-27 were prepared in the same manner as for mill base B1-1 except that the pigment and the graft polymer were changed to a pigment and a graft polymer shown in Table 2 below.

**(Table 2)**

| Mill base | Pigment | Graft copolymer |
|---|---|---|
| B1-2 | HOSTAPERM VIOLET RL-NF | 1-2 |
| B1-3 | HOSTAPERM VIOLET RL-NF | 1-3 |
| B1-4 | HOSTAPERM VIOLET RL-NF | 1-4 |
| B1-5 | HOSTAPERM VIOLET RL02 | 1-1 |
| B1-6 | HOSTAPERM VIOLET BL | 1-2 |
| B1-7 | HOSTAPERM VIOLET P-RL | 1-3 |
| B1-8 | HOSTAPERM VIOLET RLspec | 1-1 |
| B1-9 | HOSTAPERM VIOLET RLspec-TS | 1-1 |
| B1-10 | PV Fast Violet RL | 1-2 |
| B1-11 | PV Fast Violet BLP | 1-3 |
| B1-12 | Novotex Violet BL-PC VP 2429 | 1-5 |
| B1-13 | Novotex Violet BL VP 2435 | 1-3 |
| B1-14 | Fastogen Super Violet RN | 1-4 |
| B1-15 | Fastogen Super Violet RNS | 1-6 |
| B1-16 | Fastogen Super Violet RN-SU-02 | 1-2 |
| B1-17 | Fastogen Super Violet RVS | 1-1 |
| B1-18 | Fastogen Super Violet RXE | 1-2 |
| B1-19 | Fastogen Super Violet RXS | 1-4 |
| B1-20 | Lionogen Violet R6100 | 1-1 |
| B1-21 | Lionogen Violet R6200 | 1-5 |
| B1-22 | Oriengtal Fast Violet BL | 1-1 |
| B1-23 | Paliogen Violet L 5890 | 1-1 |
| B1-24 | Crommophtal Violet GT | 1-2 |
| B1-25 | Crommophtal Violet B | 1-6 |
| B1-26 | HOSTAPERM VIOLET RL-NF | DisperBYK-168 |
| B1-27 | HOSTAPERM VIOLET RL-NF | Solsperse 32000 |

### Preparation of mill base C1-1

300 parts by weight of Symuler Fast Orange 4183H, 500 parts by weight of Actilane 421 (acrylate monomer, manufactured by Akcros), and 200 parts by weight of graft copolymer 1-1 were mixed by stirring to give a pigment ink. Preparation of a pigment mill base was carried out by putting the pigment ink into an M50 disperser motor mill (manufactured by Eiger) and by using zirconia beads having a diameter of 0.65 mm at a peripheral speed of 9 m/s for 4 hours.

### Preparation of mill bases C1-2 to C1-19

Mill bases C1-2 to C1-19 were prepared in the same manner as for mill base C1-1 except that the pigment and the graft polymer were changed to a pigment and a graft polymer shown in Table 3 below.

**(Table 3)**

| Mill base | Pigment | Graft copolymer |
|---|---|---|
| C1-2 | Symuler Fast Orange 4183H | 1-2 |
| C1-3 | Symuler Fast Orange 4183H | 1-3 |
| C1-4 | Symuler Fast Orange 4183H | 1-4 |
| C1-5 | Symuler Fast Orange 4183H | 1-5 |
| C1-6 | Symuler Fast Orange 4183H | 1-6 |
| C1-7 | Novoperm Orange HL | 1-1 |
| C1-8 | Novoperm Orange HL | 1-2 |
| C1-9 | Novoperm Orange HL | 1-3 |
| C1-10 | Novoperm Orange HL | 1-4 |
| C1-11 | Novoperm Orange HL | 1-5 |
| C1-12 | Novoperm Orange HL | 1-6 |
| C1-13 | Chromofine Orange 3700L | 1-1 |
| C1-14 | LionogenOrange R-F | 1-2 |
| C1-15 | Novoperm Red HFG | 1-3 |
| C1-16 | Novoperm Red HFG | 1-4 |
| C1-17 | Novoperm Red HFG | 1-5 |
| C1-18 | Symuler Fast Orange 4183H | DisperBYK-168 |
| C1-19 | Symuler Fast Orange 4183H | Solsperse 32000 |

### Example 1-1-1

### Preparation of ink composition

The components below were stirred using a high-speed water-cooled stirrer to give an inkjet ink. The viscosity was 17 mPa·s.
- Mll base A1-1 6.0 parts
- FANCRYL-512A 35.4 parts
- *N*-Vinylcaprolactam 25.0 parts
- NK ester AMP-10G 20.0 parts
- FIRSTCURE ST-1 0.05 parts
- Lucirin TPO 8.5 parts
- Benzophenone 3.0 parts
- IRGACURE 184 2.0 parts
- BYK 307 0.05 parts
- dimethylaminoethylacrylate 0.1 parts

### Ink evaluation

Inkjet recording was carried out using the ink compositions thus obtained.

The curability, storage stability, dischargeability (continuous discharge reliability and nozzle clogging recovery), flexibility, and substrate adhesion were evaluated. The evaluation results are shown in Table 4.

### Storage stability

The ink compositions of Examples and Comparative Examples were stored at 60°C for 4 weeks.

The evaluation criteria are shown below.
4: Viscosity increase less than 5%, no change in pigment particle size.
3: Viscosity increase at least 5% but less than 10%, no change in pigment particle size.
2: Viscosity increase at least 10% but less than 30%, pigment particle size changed.
1: Viscosity increase at least 30%, pigment particle size changed.

### Inkjet image recording method

Recording onto a recording medium was carried out by using an experimental inkjet recorder having a piezo type inkjet nozzle and using each of the ink composition immediately after preparation and the ink composition stored at 60°C for 4 weeks. The ink supply system comprised a main tank, a supply pipe, an ink supply tank immediately before an inkjet head, a filter, and a piezo system inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 45°C ±2°C. The piezo system inkjet head was driven so as to discharge multisize dots of 8 to 30 pL at a resolution of 720 x 720 dpi. The exposure system, the main scanning speed, and the discharge frequency were adjusted so that, after landing, UV light was focused to give an exposure area illumination intensity of 1,630 mW/cm², and irradiation started 0.1 sec. after the ink landed on the recording medium. The cumulative amount of light applied to an image was adjusted so as to be 4,500 mJ/cm². The UV lamp employed a HAN250NL high-cure mercury lamp (manufactured by GS Yuasa Corporation). Here, dpi referred to in the present invention denotes the number of dots per 2.54 cm. The recording medium employed an E5000 ester film (film thickness 125 µm, manufactured by Toyobo Co., Ltd.).

### Method for measuring curing sensitivity (curability)

In accordance with the above-mentioned inkjet recording method, a solid printed image having an average film thickness of 12 µm was formed, the degree of tackiness of the image was evaluated by touch after the image was irradiated with UV rays, and the change between before and after aging was evaluated using the following criteria.
3: No change between before and after aging.
2: Slight change between before and after aging, slight tackiness after aging.
1: Large change between before and after aging, uncured ink after aging was not hardened, to the extent that it transferred to the hand.

### Flexibility evaluation method: bending test

In this examples, as a method for evaluating the flexibility of a cured film recorded by using the ink composition stored at 60°C for 4 weeks, a bending test was carried out.

In accordance with the above-mentioned inkjet image recording method, an E5000 ester film (film thickness 125 µm, manufactured by Toyobo Co., Ltd.) was used as a recording medium, and three solid printed images having an average image area film thickness of 12 µm, 24 µm, and 36 µm were formed. The bending test involved bending once at 25°C the recording medium on which an image had been formed, and an evaluation was carried out of the presence or absence of cracks in the image area. In general, when the average film thickness is large, the strain occurring in the image area when bending the image area becomes large, and cracks easily occur. That is, testing whether or not cracks occur in an image area having a larger film thickness gives a measure of the flexibility.

The evaluation criteria were as follows.
4: No cracks at all occurred in the bent portion of an image area for any of the samples having an average film thickness of 12 µm, 24 µm, and 36 µm.
3: No cracks occurred for samples having an average film thickness of 12 µm and 24 µm.
2: No cracks occurred for a sample having an average film thickness of 12 µm, but cracks occurred in the bent portion of an image area of samples having an average film thickness of 24 µm.
1: Cracks occurred in the bent portion of an image area for all the samples having an average film thickness of 12 µm, 24 µm, and 36 µm.

### Substrate adhesion evaluation method: crosshatch test (EN ISO2409)

As a recording medium, PET (E5000 ester film, film thickness 125 µm, manufactured by Toyobo Co., Ltd.) was used. In accordance with the above-mentioned inkjet recording method, a solid printed image having an average film thickness of 12 µm for a printed area was printed. Following this, each printed material was subjected to a crosshatch test (EN ISO2409).

The evaluation criteria were as follows.
1: 10% peeled.
0: No peeling.

### Viscosity measurement method

Measurement of viscosity in the examples was carried out using a Brookfield LVDV-I type B viscometer (manufactured by Brookfield) at 25°C with a rotor rotational speed of 20 rpm.

### Dischargeability

Two types of evaluation (A, B) below were carried out using the above-mentioned inkjet recording system.

### Evaluation A (continuous discharge reliability)

Before operating the inkjet recording system, the liquid of the present invention was repeatedly circulated for 15 minutes, thus removing ink remaining in the section of the system with which ink was in contact. Subsequently, the system was used continuously for 8 hours, and the number of nozzles that caused recording failure (misdischarge, twisting, etc.) was counted.
4: No discharge failure
3: Discharge failure no greater than 3 nozzles
2: Discharge failure at least 3 nozzles but less than 10 nozzles
1: Discharge failure 10 or more nozzles

Counting was carried out per head in all cases.

### Evaluation B (nozzle clogging recovery)

The liquid of the present invention was circulated and discharged repeatedly for 15 minutes using a head that showed 10 or more nozzles with discharge failure in evaluation A, recording was then carried out by supplying the ink again, and the number of nozzles with misdischarge was checked.
4: No discharge failure
3: Discharge failure no greater than 3 nozzles
2: Discharge failure at least 3 nozzles but less than 10 nozzles
1: Discharge failure 10 or more nozzles

Counting was carried out per head in all cases.

### Examples 1-1-2 to 1-1-28 and Comparative Examples 1-1-1 and 1-1-2

Inkjet inks were obtained by the same method as in Example 1-1-1 except that the mill base was changed to a mill base shown in Table 4 below. The viscosity was 17 to 22 mPa·s.

Furthermore, inkjet recording was carried out in the same manner as in Example 1-1-1, and evaluation was carried out in the same manner. The results are given in Table 4.

**(Table 4)**

| | Mill base | Curability | Storage stability | Dischargeability Evaluation A | Dischargeability Evaluation B | Flexibility | Substrate adhesion |
|---|---|---|---|---|---|---|---|
| Ex. 1-1-1 | A1-1 | 3 | 4 | 4 | 4 | 4 | 0 |
| Ex. 1-1-2 | A1-2 | 3 | 4 | 4 | 4 | 4 | 0 |
| Ex. 1-1-3 | A1-3 | 3 | 4 | 4 | 4 | 4 | 0 |
| Ex. 1-1-4 | A1-4 | 3 | 4 | 4 | 4 | 4 | 0 |
| Ex. 1-1-5 | A1-5 | 3 | 4 | 4 | 4 | 4 | 0 |
| Ex. 1-1-6 | A1-6 | 3 | 4 | 4 | 4 | 4 | 0 |
| Ex. 1-1-7 | A1-7 | 3 | 4 | 4 | 4 | 4 | 0 |
| Ex. 1-1-8 | A1-8 | 3 | 4 | 4 | 4 | 4 | 0 |
| Ex. 1-1-9 | A1-9 | 3 | 4 | 4 | 4 | 4 | 0 |
| Ex. 1-1-10 | A1-10 | 3 | 4 | 4 | 4 | 4 | 0 |
| Ex. 1-1-11 | A1-11 | 3 | 4 | 4 | 4 | 4 | 0 |
| Ex. 1-1-12 | A1-12 | 3 | 4 | 4 | 4 | 4 | 0 |
| Ex. 1-1-13 | A1-13 | 3 | 4 | 4 | 4 | 4 | 0 |
| Ex. 1-1-14 | A1-14 | 3 | 4 | 4 | 4 | 4 | 0 |
| Ex. 1-1-15 | A1-15 | 3 | 4 | 4 | 4 | 4 | 0 |
| Ex. 1-1-16 | A1-16 | 3 | 4 | 4 | 4 | 4 | 0 |
| Ex. 1-1-17 | A1-17 | 3 | 4 | 4 | 4 | 4 | 0 |
| Ex. 1-1-18 | A1-18 | 3 | 4 | 4 | 4 | 4 | 0 |
| Ex. 1-1-19 | A1-19 | 3 | 4 | 4 | 4 | 4 | 0 |
| Ex. 1-1-20 | A1-20 | 3 | 4 | 4 | 4 | 4 | 0 |
| Ex. 1-1-21 | A1-21 | 3 | 4 | 4 | 4 | 4 | 0 |
| Ex. 1-1-22 | A1-22 | 3 | 4 | 4 | 4 | 4 | 0 |
| Ex. 1-1-23 | A1-23 | 3 | 4 | 4 | 4 | 4 | 0 |
| Ex. 1-1-24 | A1-24 | 3 | 4 | 4 | 4 | 4 | 0 |
| Ex. 1-1-25 | A1-25 | 3 | 4 | 4 | 4 | 4 | 0 |
| Ex. 1-1-26 | A1-26 | 3 | 4 | 4 | 4 | 4 | 0 |
| Ex. 1-1-27 | A1-27 | 3 | 4 | 4 | 4 | 4 | 0 |
| Ex. 1-1-28 | A1-28 | 3 | 4 | 4 | 4 | 4 | 0 |
| Comp. Ex. 1-1-1 | A1-29 | 2 | 1 | 1 | 1 | 3 | 1 |
| Comp. Ex. 1-1-2 | A1-30 | 2 | 1 | 2 | 2 | 3 | 1 |

### Example 1-2-1

An inkjet ink was obtained by the same method as in Example 1-1-1 except that the mill base A1-1 was changed to mill base B1-1. The viscosity was 18 mPa·s.

Furthermore, inkjet recording was carried out in the same manner as in Example 1-1-1, and evaluation was carried out in the same manner. The results are given in Table 5.

### Examples 1-2-2 to 1-2-25 and Comparative Examples 1-2-1 and 1-2-2

Inkjet inks were obtained by the same method as in Example 1-2-1 except that the mill base was changed to a mill base shown in Table 5 below. The viscosity was 17 to 22 mPa·s.

Furthermore, inkjet recording was carried out in the same manner as in Example 1-2-1, and evaluation was carried out in the same manner. The results are given in Table 5.

**(Table 5)**

| | Mill base | Curability | Storage stability | Dischargeability Evaluation A | Dischargeability Evaluation B | Flexibility | Substrate adhesion |
|---|---|---|---|---|---|---|---|
| Ex. 1-2-1 | B1-1 | 3 | 4 | 4 | 4 | 4 | 0 |
| Ex. 1-2-2 | B1-2 | 3 | 4 | 4 | 4 | 4 | 0 |
| Ex. 1-2-3 | B1-3 | 3 | 4 | 4 | 4 | 4 | 0 |
| Ex. 1-2-4 | B1-4 | 3 | 4 | 4 | 4 | 4 | 0 |
| Ex. 1-2-5 | B1-5 | 3 | 4 | 4 | 4 | 4 | 0 |
| Ex. 1-2-6 | B1-6 | 3 | 4 | 4 | 4 | 4 | 0 |
| Ex. 1-2-7 | B1-7 | 3 | 4 | 4 | 4 | 4 | 0 |
| Ex. 1-2-8 | B1-8 | 3 | 4 | 4 | 4 | 4 | 0 |
| Ex. 1-2-9 | B1-9 | 3 | 4 | 4 | 4 | 4 | 0 |
| Ex. 1-2-10 | B1-10 | 3 | 4 | 4 | 4 | 4 | 0 |
| Ex. 1-2-11 | B1-11 | 3 | 4 | 4 | 4 | 4 | 0 |
| Ex. 1-2-12 | B1-12 | 3 | 4 | 4 | 4 | 4 | 0 |
| Ex. 1-2-13 | B1-13 | 3 | 4 | 4 | 4 | 4 | 0 |
| Ex. 1-2-14 | B1-14 | 3 | 4 | 4 | 4 | 4 | 0 |
| Ex. 1-2-15 | B1-15 | 3 | 4 | 4 | 4 | 4 | 0 |
| Ex. 1-2-16 | B1-16 | 3 | 4 | 4 | 4 | 4 | 0 |
| Ex. 1-2-17 | B1-17 | 3 | 4 | 4 | 4 | 4 | 0 |
| Ex. 1-2-18 | B1-18 | 3 | 4 | 4 | 4 | 4 | 0 |
| Ex. 1-2-19 | B1-19 | 3 | 4 | 4 | 4 | 4 | 0 |
| Ex. 1-2-20 | B1-20 | 3 | 4 | 4 | 4 | 4 | 0 |
| Ex. 1-2-21 | B1-21 | 3 | 4 | 4 | 4 | 4 | 0 |
| Ex. 1-2-22 | B1-22 | 3 | 4 | 4 | 4 | 4 | 0 |
| Ex. 1-2-23 | B1-23 | 3 | 4 | 4 | 4 | 4 | 0 |
| Ex. 1-2-24 | B1-24 | 3 | 4 | 4 | 4 | 4 | 0 |
| Ex. 1-2-25 | B1-25 | 3 | 4 | 4 | 4 | 4 | 0 |
| Comp. Ex. 1-2-1 | B1-26 | 2 | 1 | 1 | 1 | 3 | 1 |
| Comp. Ex. 1-2-2 | B1-27 | 2 | 1 | 2 | 2 | 3 | 1 |

### Example 1-3-1

An inkjet ink was obtained by the same method as in Example 1-1-1 except that the "mill base A1-1" was changed to "mill base C1-1". The viscosity was 19 mPa·s.

Furthermore, inkjet recording was carried out in the same manner as in Example 1-1-1, and evaluation was carried out in the same manner. The results are given in Table 6.

### Examples 1-3-2 to 1-3-25 and Comparative Examples 1-3-1 and 1-3-2

Inkjet inks were obtained by the same method as in Example 1-3-1 except that the mill base was changed to a mill base shown in Table 6 below. The viscosity was 17 to 22 mPa·s.

Furthermore, inkjet recording was carried out in the same manner as in Example 1-2-1, and evaluation was carried out in the same manner. The results are given in Table 6.

**(Table 6)**

| | Mill base | Curability | Storage stability | Dischargeability Evaluation A | Dischargeability Evaluation B | Flexibility | Substrate adhesion |
|---|---|---|---|---|---|---|---|
| Ex. 1-3-1 | C1-1 | 3 | 4 | 4 | 4 | 4 | 0 |
| Ex. 1-3-2 | C1-2 | 3 | 4 | 4 | 4 | 4 | 0 |
| Ex. 1-3-3 | C1-3 | 3 | 4 | 4 | 4 | 4 | 0 |
| Ex. 1-3-4 | C1-4 | 3 | 4 | 4 | 4 | 4 | 0 |
| Ex. 1-3-5 | C1-5 | 3 | 4 | 4 | 4 | 4 | 0 |
| Ex. 1-3-6 | C1-6 | 3 | 4 | 4 | 4 | 4 | 0 |
| Ex. 1-3-7 | C1-7 | 3 | 4 | 4 | 4 | 4 | 0 |
| Ex. 1-3-8 | C1-8 | 3 | 4 | 4 | 4 | 4 | 0 |
| Ex. 1-3-9 | C1-9 | 3 | 4 | 4 | 4 | 4 | 0 |
| Ex. 1-3-10 | C1-10 | 3 | 4 | 4 | 4 | 4 | 0 |
| Ex. 1-3-11 | C1-11 | 3 | 4 | 4 | 4 | 4 | 0 |
| Ex. 1-3-12 | C1-12 | 3 | 4 | 4 | 4 | 4 | 0 |
| Ex. 1-3-13 | C1-13 | 3 | 4 | 4 | 4 | 4 | 0 |
| Ex. 1-3-14 | C1-14 | 3 | 4 | 4 | 4 | 4 | 0 |
| Ex. 1-3-15 | C1-15 | 3 | 4 | 4 | 4 | 4 | 0 |
| Ex. 1-3-16 | C1-16 | 3 | 4 | 4 | 4 | 4 | 0 |
| Ex. 1-3-17 | C1-17 | 3 | 4 | 4 | 4 | 4 | 0 |
| Ex. 1-3-18 | C1-18 | 3 | 4 | 4 | 4 | 4 | 0 |
| Ex. 1-3-19 | C1-19 | 3 | 4 | 4 | 4 | 4 | 0 |
| Ex. 1-3-20 | C1-20 | 3 | 4 | 4 | 4 | 4 | 0 |
| Ex. 1-3-21 | C1-21 | 3 | 4 | 4 | 4 | 4 | 0 |
| Ex. 1-3-22 | C1-22 | 3 | 4 | 4 | 4 | 4 | 0 |
| Ex. 1-3-23 | C1-23 | 3 | 4 | 4 | 4 | 4 | 0 |
| Ex. 1-3-24 | C1-24 | 3 | 4 | 4 | 4 | 4 | 0 |
| Ex. 1-3-25 | C1-25 | 3 | 4 | 4 | 4 | 4 | 0 |
| Comp. Ex. 1-3-1 | C1-26 | 2 | 1 | 1 | 1 | 3 | 1 |
| Comp. Ex. 1-3-2 | C1-27 | 2 | 1 | 2 | 2 | 3 | 1 |

### Example 1-4

The color reproduction of printed images using process inks and special color inks obtained in Example 1-1-1, Example 1-2-1, and Example 1-3-1 was evaluated.

As the process inks, cyan (EI, Sericol Group), magenta (EI, Sericol Group), yellow (EI, Sericol Group), and black (EI, Sericol Group) inks were used.

The hue (a^{*}, b^{*}) and lightness (L) were measured using an SPM100-II (Gretag).

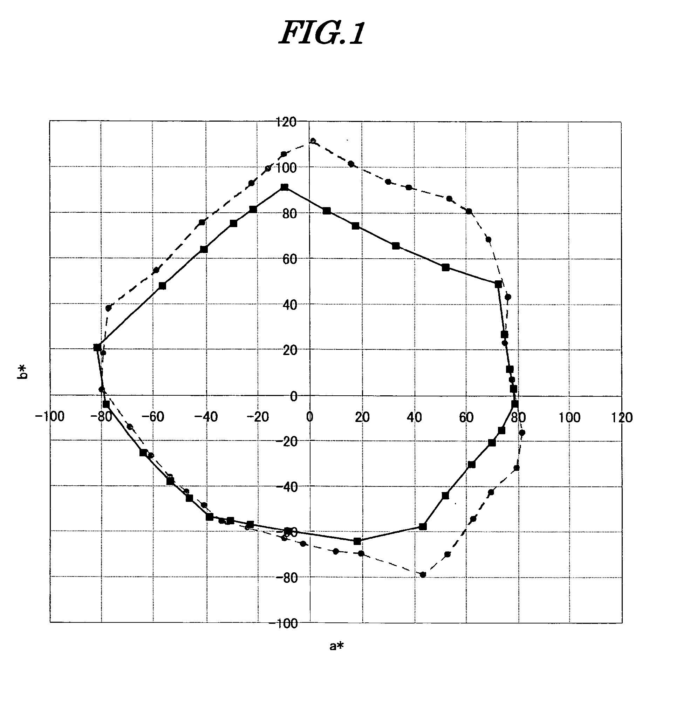

The solid line in FIG. 1 is printed image data from process colors, which were a total of 950 color patch data evenly distributed on a synthetic paper (manufactured by Ojitac Co., Ltd.) by the recording system using the process inks. This shows the maximum gamut of color reproduction (a^{*}, b^{*}).

The dotted line in FIG. 1 shows the maximum gamut of color reproduction (a^{*}, b^{*}) of a printed image obtained using an ink set comprising the process inks and green, violet, and orange special color inks prepared in Examples 1-1-1, 1-2-1, and 1-3-1.

From the results, it was clear that color reproduction was possible for a hue that was difficult to reproduce using a conventional process ink.

### Example 2-1

### Synthesis of polymerizable compound and its polymer

### Synthesis of M2-1

133.2 parts of 2-aminobenzimidazole was dissolved in 1,000 parts of N-methylpyrrolidone, and 0.29 parts of nitrobenzene was added thereto at 25°C. 155.2 parts of 2-methacryloyloxyethyl isocyanate were added dropwise thereto, stirring was carried out for 30 minutes, and stirring was then carried out at 80°C for 1 hour. 4,000 parts of methanol was added to this reaction mixture and stirred. A precipitate thus obtained was filtered and washed with 1,200 parts of methanol, thus giving 262.4 parts of polymerizable compound M2-1.

It was confirmed from the NMR data shown below that polymerizable compound M2-1 was obtained.
¹H-NMR (300 MHz, DMSO-d6, δ): 11.44 (br, 1H), 9.96 (br, 1H), 7.70 (br, 1H), 7.36 (m, 2H), 7.02 (m, 2H), 6.10 (s, 1H), 5.73 (s, 1H), 4.20 (t, 2H), 3.51 (t, 2H), 1.96 (s, 3H).

### Synthesis of M2-2

15.2 parts of 2-aminobenzothiazole was dissolved in 100 parts of N-methylpyrrolidone, and 0.029 parts of nitrobenzene was added thereto at 25°C. 15.5 parts of 2-methacryloyloxyethyl isocyanate were added dropwise thereto, stirring was carried out for 30 minutes, and stirring was then carried out at 80°C for 1 hour. 400 parts of methanol was added to this reaction mixture and stirred. A precipitate thus obtained was filtered and washed with 100 parts of methanol, thus giving 27.6 parts of polymerizable compound M2-2.

It was confirmed from the NMR data shown below that polymerizable compound M2-2 was obtained.
¹H-NMR (300 MHz, DMSO-d6, δ): 11.43 (br, 1H), 7.72 (br, 1H), 7.34 (m, 2H), 7.01 (m, 2H), 6.10 (s, 1H), 5.73 (s, 1H), 4.20 (t, 2H), 3.51 (t, 2H), 1.96 (s, 3H).

### Synthesis of graft copolymer 2-1

Graft copolymer 2-1 (graft copolymer example 2-1: monomer represented by M2-1 / terminal methacryloylated polymethyl methacrylate copolymer) was obtained in the same manner as in the synthetic example of graft copolymer 1-1 except that M1-1 in the synthetic example of graft copolymer 1-1 was changed to M2-1.

When the weight-average molecular weight (polystyrene basis) of graft copolymer 2-1 was measured by GPC, it was found to be 19,900, thus confirming that the polymer (polymer) was obtained.

### Synthesis of graft copolymer 2-2

Graft copolymer 2-2 (graft copolymer example 2-8: monomer represented by M2-1 / 3-(N,N-dimethylamino)propyl acrylamide / terminal methacryloylated polymethyl methacrylate copolymer) was obtained in the same manner as in the synthetic example of graft copolymer 1-2 except that M1-1 in the synthetic example of graft copolymer 1-2 was changed to M2-1.

When the weight-average molecular weight (polystyrene basis) of graft copolymer 2-2 was measured by GPC, it was found to be 54,000, thus confirming that the polymer (polymer) was obtained.

### Synthesis of graft copolymer 2-3

Graft copolymer 2-3 (graft copolymer example 2-2: monomer represented by M2-1 / polyethylene glycol mono(meth)acrylate copolymer) was obtained in the same manner as in the synthetic example of graft copolymer 2-1 except that the 'terminal methacryloyl group-containing polymethyl methacrylate' in the synthetic example of graft copolymer 2-1 was changed to 'methoxypolyethylene glycol methacrylate (NK ester M-230G, manufactured by Shin-Nakamura Chemical Co., Ltd.'.

When the weight-average molecular weight (polystyrene basis) of graft copolymer 2-3 was measured by GPC, it was found to be 26,700, thus confirming that the polymer (polymer) was obtained.

### Synthesis of graft copolymer 2-4

Graft copolymer 2-4 (graft copolymer example 2-5: monomer represented by M2-2 / terminal methacryloylated polymethyl methacrylate copolymer) was obtained in the same manner as in the synthetic example of graft copolymer 2-1 except that M2-1 in the synthetic example of graft copolymer 2-1 was changed to M2-2.

When the weight-average molecular weight (polystyrene basis) of graft copolymer 2-4 was measured by GPC, it was found to be 24,300, thus confirming that the polymer (polymer) was obtained.

### Synthesis of graft copolymer 2-5

Graft copolymer 2-5 (graft copolymer example 2-16: monomer represented by M2-1 / methacrylic acid / terminal methacryloylated polymethyl methacrylate copolymer) was obtained in the same manner as in the synthetic example of graft copolymer 2-2 except that 3-(*N*,*N*-dimethylamino)propylacrylamide in the synthetic example of graft copolymer 2-2 was changed to methacrylic acid.

When the weight-average molecular weight (polystyrene basis) of graft copolymer 2-5 was measured by GPC, it was found to be 19,400, thus confirming that the polymer (polymer) was obtained.

### Preparation of mill base A2-1

300 parts by weight of HEUCO GREEN 600703K, 500 parts by weight of Actilane 421 (acrylate monomer, manufactured by Akcros), and 200 parts by weight of graft copolymer 2-1 were mixed by stirring to give a pigment ink. Preparation of a pigment mill base was carried out by putting the pigment ink into an M50 disperser motor mill (manufactured by Eiger) and by using zirconia beads having a diameter of 0.65 mm at a peripheral speed of 9 m/s for 4 hours.

### Preparation of mill bases A2-2 to A2-30

Mill bases A2-2 to A2-30 were prepared in the same manner as for mill base A2-1 except that the pigment and the graft polymer were changed to a pigment and a graft polymer shown in Table 7 below.

**(Table 7)**

| Mill base | Pigment | Graft copolymer |
|---|---|---|
| A2-2 | HEUCO GREEN 600703K | 2-2 |
| A2-3 | HEUCO GREEN 600703K | 2-3 |
| A2-4 | HEUCO GREEN 600703K | 2-4 |
| A2-5 | Monastral GREEN GN-C | 2-1 |
| A2-6 | Monastral GREEN GNX-C | 2-2 |
| A2-7 | Monastral GREEN GBX-C | 2-3 |
| A2-8 | HOSTAPERM GREEN GG01 | 2-1 |
| A2-9 | HOSTAPERM GREEN GNX-D | 2-1 |
| A2-10 | HOSTAPERM GREEN GNX-TS | 2-2 |
| A2-11 | PV Fast GREEN GNX | 2-3 |
| A2-12 | Novotex GREEN GNX | 2-5 |
| A2-13 | Fastogen GREEN S | 2-3 |
| A2-14 | Fastogen GREEN SF | 2-4 |
| A2-15 | Phthalocyanine GREEN B308 | 2-5 |
| A2-16 | Phthalocyanine GREEN SAX | 2-2 |
| A2-17 | Cyanine GREEN 2G-550-D | 2-1 |
| A2-18 | Cyanine GREEN 2GO | 2-2 |
| A2-19 | Cyanine GREEN PBN-1 | 2-4 |
| A2-20 | HELIOGEN BLUE L8605 | 2-1 |
| A2-21 | HELIOGEN BLUE K8730 | 2-5 |
| A2-22 | HELIOGEN BLUE D8725 | 2-1 |
| A2-23 | HELIOGEN BLUE L9361 | 2-4 |
| A2-24 | Irgalite GREEN 6G | 2-1 |
| A2-25 | HOSTAPERM GREEN 8G | 2-5 |
| A2-26 | Fastogen GREEN 2KY | 2-1 |
| A2-27 | Lionol GREEN 2YS | 2-2 |
| A2-28 | Lionol GREEN 6YK | 2-4 |
| A2-29 | HEUCO GREEN 600703K | DisperBYK-168 |
| A2-30 | HEUCO GREEN 600703K | Solsperse 32000 |

### Preparation of mill base B2-1

300 parts by weight of HOSTAPERM VIOLET RL-NF, 500 parts by weight of Actilane 421 (acrylate monomer manufactured by Akcros), and 200 parts by weight of graft copolymer 2-1 were mixed by stirring to give a pigment ink. Preparation of a pigment mill base was carried out by putting the pigment ink into an M50 disperser motor mill (manufactured by Eiger) and by using zirconia beads having a diameter of 0.65 mm at a peripheral speed of 9 m/s for 4 hours.

### Preparation of mill bases B2-2 to B2-27

Mill bases B2-2 to B2-27 were prepared in the same manner as for mill base B1-1 except that the pigment and the graft polymer were changed to a pigment and a graft polymer shown in Table 8 below.

**(Table 8)**

| Mill base | Pigment | Graft copolymer |
|---|---|---|
| B2-2 | HOSTAPERM VIOLET RL-NF | 2-2 |
| B2-3 | HOSTAPERM VIOLET RL-NF | 2-3 |
| B2-4 | HOSTAPERM VIOLET RL-NF | 2-4 |
| B2-5 | HOSTAPERM VIOLET RL02 | 2-1 |
| B2-6 | HOSTAPERM VIOLET BL | 2-2 |
| B2-7 | HOSTAPERM VIOLET P-RL | 2-3 |
| B2-8 | HOSTAPERM VIOLET RLspec | 2-1 |
| B2-9 | HOSTAPERM VIOLET RLspec-TS | 2-1 |
| B2-10 | PV Fast Violet RL | 2-2 |
| B2-11 | PV Fast Violet BLP | 2-3 |
| B2-12 | Novotex Violet BL-PC VP 2429 | 2-5 |
| B2-13 | Novotex Violet BL VP 2435 | 2-3 |
| B2-14 | Fastogen Super Violet RN | 2-4 |
| B2-15 | Fastogen Super Violet RNS | 2-5 |
| B2-16 | Fastogen Super Violet RN-SU-02 | 2-2 |
| B2-17 | Fastogen Super Violet RVS | 2-1 |
| B2-18 | Fastogen Super Violet RXE | 2-2 |
| B2-19 | Fastogen Super Violet RXS | 2-4 |
| B2-20 | Lionogen Violet R6100 | 2-1 |
| B2-21 | Lionogen Violet R6200 | 2-5 |
| B2-22 | Oriengtal Fast Violet BL | 2-1 |
| B2-23 | Paliogen Violet L 5890 | 2-1 |
| B2-24 | Crommophtal Violet GT | 2-2 |
| B2-25 | Crommophtal Violet B | 2-4 |
| B2-26 | HOSTAPERM VIOLET RL-NF | DisperBYK-168 |
| B2-27 | HOSTAPERM VIOLET RL-NF | Solsperse 32000 |

### Preparation of mill base C2-1

300 parts by weight of Symuler Fast Orange 4183H, 500 parts by weight of Actilane 421 (acrylate monomer manufactured by Akcros), and 200 parts by weight of graft copolymer 2-1 were mixed by stirring to give a pigment ink. Preparation of a pigment mill base was carried out by putting the pigment ink into an M50 disperser motor mill (manufactured by Eiger) and by using zirconia beads having a diameter of 0.65 mm at a peripheral speed of 9 m/s for 4 hours.

### Preparation of mill bases C2-2 to C2-19

Mill bases C2-2 to C2-19 were prepared in the same manner as for mill base C2-1 except that the pigment and the graft polymer were changed to a pigment and a graft polymer shown in Table 9 below.

**(Table 9)**

| Mill base | Pigment | Graft copolymer |
|---|---|---|
| C2-2 | Symuler Fast Orange 4183H | 2-2 |
| C2-3 | Symuler Fast Orange 4183H | 2-3 |
| C2-4 | Symuler Fast Orange 4183H | 2-4 |
| C2-5 | Symuler Fast Orange 4183H | 2-5 |
| C2-6 | Novoperm Orange HL | 2-1 |
| C2-7 | Novoperm Orange HL | 2-2 |
| C2-8 | Novoperm Orange HL | 2-3 |
| C2-9 | Novoperm Orange HL | 2-4 |
| C2-10 | Novoperm Orange HL | 2-5 |
| C2-11 | Chromofine Orange 3700L | 2-1 |
| C2-12 | Chromofine Orange 3700L | 2-2 |
| C2-13 | Chromofine Orange 3700L | 2-3 |
| C2-14 | LionogenOrange R-F | 2-1 |
| C2-15 | Novoperm Red HFG | 2-3 |
| C2-16 | Novoperm Red HFG | 2-4 |
| C2-17 | Novoperm Red HFG | 2-5 |
| C2-18 | Symuler Fast Orange 4183H | DisperBYK-168 |
| C2-19 | Symuler Fast Orange 4183H | Solsperse 32000 |

### Example 2-1-1

An inkjet ink was obtained by the same method as in Example 1-1-1 except that the "mill base A1-1" was changed to "mill base B2-1".

### Ink evaluation

Inkjet recording was carried out using the ink compositions thus obtained. The curability, storage stability, dischargeability (continuous discharge reliability and nozzle clogging recovery), flexibility, and substrate adhesion were evaluated. The evaluation results are shown in Table 10.

### Examples 2-2-2 to 2-2-28 and Comparative Examples 2-2-1 and 2-2-2

Inkjet inks were obtained by the same method as in Example 2-2-1 except that the mill base was changed to a mill base shown in Table 10 below. The viscosity was 17 to 22 mPa·s.

Furthermore, inkjet recording was carried out in the same manner as in Example 2-2-1, and evaluation was carried out in the same manner. The results are given in Table 10.

**(Table 10)**

| | Mill base | Curability | Storage stability | Dischargeability Evaluation A | Dischargeability Evaluation B | Flexibility | Substrate adhesion |
|---|---|---|---|---|---|---|---|
| Ex. 2-1-1 | A2-1 | 3 | 4 | 4 | 4 | 4 | 0 |
| Ex. 2-1-2 | A2-2 | 3 | 4 | 4 | 4 | 4 | 0 |
| Ex. 2-1-3 | A2-3 | 3 | 4 | 4 | 4 | 4 | 0 |
| Ex. 2-1-4 | A2-4 | 3 | 4 | 4 | 4 | 4 | 0 |
| Ex. 2-1-5 | A2-5 | 3 | 4 | 4 | 4 | 4 | 0 |
| Ex. 2-1-6 | A2-6 | 3 | 4 | 4 | 4 | 4 | 0 |
| Ex. 2-1-7 | A2-7 | 3 | 4 | 4 | 4 | 4 | 0 |
| Ex. 2-1-8 | A2-8 | 3 | 4 | 4 | 4 | 4 | 0 |
| Ex. 2-1-9 | A2-9 | 3 | 4 | 4 | 4 | 4 | 0 |
| Ex. 2-1-10 | A2-10 | 3 | 4 | 4 | 4 | 4 | 0 |
| Ex. 2-1-11 | A2-11 | 3 | 4 | 4 | 4 | 4 | 0 |
| Ex. 2-1-12 | A2-12 | 3 | 4 | 4 | 4 | 4 | 0 |
| Ex. 2-1-13 | A2-13 | 3 | 4 | 4 | 4 | 4 | 0 |
| Ex. 2-1-14 | A2-14 | 3 | 4 | 4 | 4 | 4 | 0 |
| Ex. 2-1-15 | A2-15 | 3 | 4 | 4 | 4 | 4 | 0 |
| Ex. 2-1-16 | A2-16 | 3 | 4 | 4 | 4 | 4 | 0 |
| Ex. 2-1-17 | A2-17 | 3 | 4 | 4 | 4 | 4 | 0 |
| Ex. 2-1-18 | A2-18 | 3 | 4 | 4 | 4 | 4 | 0 |
| Ex. 2-1-19 | A2-19 | 3 | 4 | 4 | 4 | 4 | 0 |
| Ex. 2-1-20 | A2-20 | 3 | 4 | 4 | 4 | 4 | 0 |
| Ex. 2-1-21 | A2-21 | 3 | 4 | 4 | 4 | 4 | 0 |
| Ex. 2-1-22 | A2-22 | 3 | 4 | 4 | 4 | 4 | 0 |
| Ex. 2-1-23 | A2-23 | 3 | 4 | 4 | 4 | 4 | 0 |
| Ex. 2-1-24 | A2-24 | 3 | 4 | 4 | 4 | 4 | 0 |
| Ex. 2-1-25 | A2-25 | 3 | 4 | 4 | 4 | 4 | 0 |
| Ex. 2-1-26 | A2-26 | 3 | 4 | 4 | 4 | 4 | 0 |
| Ex. 2-1-27 | A2-27 | 3 | 4 | 4 | 4 | 4 | 0 |
| Ex. 2-1-28 | A2-28 | 3 | 4 | 4 | 4 | 4 | 0 |
| Comp. Ex. 2-1-1 | A2-29 | 2 | 1 | 1 | 1 | 3 | 1 |
| Comp. Ex. 2-1-2 | A2-30 | 2 | 1 | 2 | 2 | 3 | 1 |

### Example 2-2-1

An inkjet ink was obtained by the same method as in Example 2-1-1 except that the "mill base A2-1" was changed to "mill base B2-1". The viscosity was 18 mPa·s.

Furthermore, inkjet recording was carried out in the same manner as in Example 2-1-1, and evaluation was carried out in the same manner. The results are given in Table 11.

### Examples 2-2-2 to 2-2-25 and Comparative Examples 2-2-1 and 2-2-2

Inkjet inks were obtained by the same method as in Example 2-2-1 except that the mill base was changed to a mill base shown in Table 11 below. The viscosity was 17 to 22 mPa·s.

Furthermore, inkjet recording was carried out in the same manner as in Example 2-2-1, and evaluation was carried out in the same manner. The results are given in Table 11.

**(Table 11)**

| | Mill base | Curability | Storage stability | Dischargeability Evaluation A | Dischargeability Evaluation B | Flexibility | Substrate adhesion |
|---|---|---|---|---|---|---|---|
| Ex.2-2-1 | B2-1 | 3 | 4 | 4 | 4 | 4 | 0 |
| Ex. 2-2-2 | B2-2 | 3 | 4 | 4 | 4 | 4 | 0 |
| Ex. 2-2-3 | B2-3 | 3 | 4 | 4 | 4 | 4 | 0 |
| Ex. 2-2-4 | B2-4 | 3 | 4 | 4 | 4 | 4 | 0 |
| Ex. 2-2-5 | B2-5 | 3 | 4 | 4 | 4 | 4 | 0 |
| Ex. 2-2-6 | B2-6 | 3 | 4 | 4 | 4 | 4 | 0 |
| Ex. 2-2-7 | B2-7 | 3 | 4 | 4 | 4 | 4 | 0 |
| Ex. 2-2-8 | B2-8 | 3 | 4 | 4 | 4 | 4 | 0 |
| Ex. 2-2-9 | B2-9 | 3 | 4 | 4 | 4 | 4 | 0 |
| Ex. 2-2-10 | B2-10 | 3 | 4 | 4 | 4 | 4 | 0 |
| Ex. 2-2-11 | B2-11 | 3 | 4 | 4 | 4 | 4 | 0 |
| Ex. 2-2-12 | B2-12 | 3 | 4 | 4 | 4 | 4 | 0 |
| Ex. 2-2-13 | B2-13 | 3 | 4 | 4 | 4 | 4 | 0 |
| Ex. 2-2-14 | B2-14 | 3 | 4 | 4 | 4 | 4 | 0 |
| Ex. 2-2-15 | B2-15 | 3 | 4 | 4 | 4 | 4 | 0 |
| Ex. 2-2-16 | B2-16 | 3 | 4 | 4 | 4 | 4 | 0 |
| Ex. 2-2-17 | B2-17 | 3 | 4 | 4 | 4 | 4 | 0 |
| Ex. 2-2-18 | B2-18 | 3 | 4 | 4 | 4 | 4 | 0 |
| Ex. 2-2-19 | B2-19 | 3 | 4 | 4 | 4 | 4 | 0 |
| Ex. 2-2-20 | B2-20 | 3 | 4 | 4 | 4 | 4 | 0 |
| Ex. 2-2-21 | B2-21 | 3 | 4 | 4 | 4 | 4 | 0 |
| Ex. 2-2-22 | B2-22 | 3 | 4 | 4 | 4 | 4 | 0 |
| Ex. 2-2-23 | B2-23 | 3 | 4 | 4 | 4 | 4 | 0 |
| Ex. 2-2-24 | B2-24 | 3 | 4 | 4 | 4 | 4 | 0 |
| Ex. 2-2-25 | B2-25 | 3 | 4 | 4 | 4 | 4 | 0 |
| Comp. Ex. 2-2-1 | B2-26 | 2 | 1 | 1 | 1 | 3 | 1 |
| Comp. Ex. 2-2-2 | B2-27 | 2 | 1 | 2 | 2 | 3 | 1 |

### Example 2-3-1

An inkjet ink was obtained by the same method as in Example 2-1-1 except that the mill base A2-1 was changed to mill base C2-1. The viscosity was 19 mPa·s.

Furthermore, inkjet recording was carried out in the same manner as in Example 2-1-1, and evaluation was carried out in the same manner. The results are given in Table 12.

### Examples 2-3-2 to 2-3-25 and Comparative Examples 2-3-1 and 2-3-2

Inkjet inks were obtained by the same method as in Example 2-3-1 except that the mill base was changed to a mill base shown in Table 12 below. The viscosity was 17 to 22 mPa·s.

Furthermore, inkjet recording was carried out in the same manner as in Example 2-3-1, and evaluation was carried out in the same manner. The results are given in Table 12.

**(Table 12)**

| | Mill base | Curability | Storage stability | Dischargeability Evaluation A | Dischargeability Evaluation B | Flexibility | Substrate adhesion |
|---|---|---|---|---|---|---|---|
| Ex. 2-3-1 | C2-1 | 3 | 4 | 4 | 4 | 4 | 0 |
| Ex. 2-3-2 | C2-2 | 3 | 4 | 4 | 4 | 4 | 0 |
| Ex. 2-3-3 | C2-3 | 3 | 4 | 4 | 4 | 4 | 0 |
| Ex. 2-3-4 | C2-4 | 3 | 4 | 4 | 4 | 4 | 0 |
| Ex. 2-3-5 | C2-5 | 3 | 4 | 4 | 4 | 4 | 0 |
| Ex. 2-3-6 | C2-6 | 3 | 4 | 4 | 4 | 4 | 0 |
| Ex. 2-3-7 | C2-7 | 3 | 4 | 4 | 4 | 4 | 0 |
| Ex. 2-3-8 | C2-8 | 3 | 4 | 4 | 4 | 4 | 0 |
| Ex. 2-3-9 | C2-9 | 3 | 4 | 4 | 4 | 4 | 0 |
| Ex. 2-3-10 | C2-10 | 3 | 4 | 4 | 4 | 4 | 0 |
| Ex. 2-3-11 | C2-11 | 3 | 4 | 4 | 4 | 4 | 0 |
| Ex. 2-3-12 | C2-12 | 3 | 4 | 4 | 4 | 4 | 0 |
| Ex. 2-3-13 | C2-13 | 3 | 4 | 4 | 4 | 4 | 0 |
| Ex. 2-3-14 | C2-14 | 3 | 4 | 4 | 4 | 4 | 0 |
| Ex. 2-3-15 | C2-15 | 3 | 4 | 4 | 4 | 4 | 0 |
| Ex. 2-3-16 | C2-16 | 3 | 4 | 4 | 4 | 4 | 0 |
| Ex. 2-3-17 | C2-17 | 3 | 4 | 4 | 4 | 4 | 0 |
| Ex. 2-3-18 | C2-18 | 3 | 4 | 4 | 4 | 4 | 0 |
| Ex. 2-3-19 | C2-19 | 3 | 4 | 4 | 4 | 4 | 0 |
| Ex. 2-3-20 | C2-20 | 3 | 4 | 4 | 4 | 4 | 0 |
| Ex. 2-3-21 | C2-21 | 3 | 4 | 4 | 4 | 4 | 0 |
| Ex. 2-3-22 | C2-22 | 3 | 4 | 4 | 4 | 4 | 0 |
| Ex. 2-3-23 | C2-23 | 3 | 4 | 4 | 4 | 4 | 0 |
| Ex. 2-3-24 | C2-24 | 3 | 4 | 4 | 4 | 4 | 0 |
| Ex. 2-3-25 | C2-25 | 3 | 4 | 4 | 4 | 4 | 0 |
| Comp. Ex. 2-3-1 | C2-26 | 2 | 1 | 1 | 1 | 3 | 1 |
| Comp. Ex. 2-3-2 | C2-27 | 2 | 1 | 2 | 2 | 3 | 1 |

### Example 2-4

The color reproduction of printed images using process inks and special color inks obtained in Example 2-1-1, Example 2-2-1, and Example 2-3-1 was evaluated.

As the process inks, cyan (EI, Sericol Group), magenta (EI, Sericol Group), yellow (EI, Sericol Group), and black (EI, Sericol Group) inks were used.

The hue (a^{*}, b^{*}) and lightness (L) were measured using an SPM100-II (Gretag).

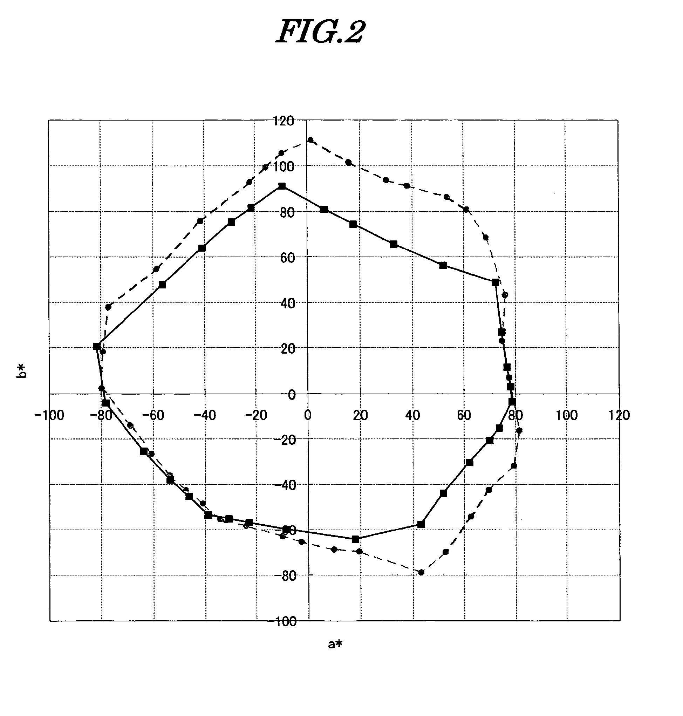

The solid line in FIG. 2 is printed image data from process colors, which were a total of 950 color patch data evenly distributed on a synthetic paper (manufactured by Ojitac Co., Ltd.) by the recording system using the process inks. This shows the maximum gamut of color reproduction (a^{*}, b^{*}).

The dotted line in FIG. 2 shows the maximum gamut of color reproduction (a^{*}, b^{*}) of a printed image obtained using an ink set comprising the process inks and green, violet, and orange special color inks prepared in Examples 2-1-1, 2-2-1, and 2-3-1.

From the results, it was clear that color reproduction was possible for a hue that was difficult to reproduce using a conventional process ink.

### Example 3-1

### Synthesis of chain transfer agents represented by Formula (3-3) and polymer thereof

Chain transfer agents T-1 to T-13 (mercaptan compounds represented by Formula (3-3)) were synthesized in the following manner.

### Synthesis Example T-1

A total of 7.83 parts of dipentaerythritol hexakis (3-mercaptopropionate) (DPMP, manufactured by Sakai Chemical Industry Co., Ltd.) and 15.57 parts of compound (A-1) having the below-described pigment adsorption structure and also having a carbon-carbon double bond were dissolved in 93.60 parts of dimethylformamide and heated to 70°C under a nitrogen flow. Then, 0.06 parts of 2,2'-azobis(2,4-dimethylvaleronitrile) (V-65, manufactured by Wako Pure Chemical Industries, Ltd.) were added thereto and heating was conducted for 3 hours. Then, 0.06 parts of V-65 were further added and the reaction was conducted for 3 hours at 70°C under a nitrogen flow. By cooling to room temperature, a 20% solution of the below-described mercaptan compound (chain transfer agent T-1) was obtained.

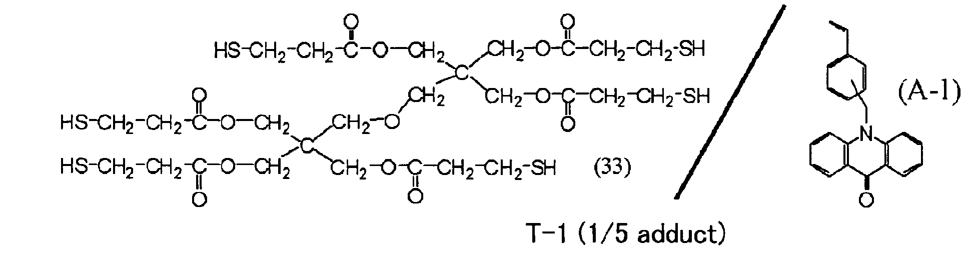

### Synthesis Example T-2

A 20% solution of the below-described mercaptan compound (chain transfer agent T-2) was obtained in the same manner as in the Synthesis Example T-1, except that 15.57 parts of compound (A-1) having the pigment adsorption structure and also having a carbon-carbon double bond and 93.60 parts of dimethylformamide in the Synthesis Example T-1 were replaced with 14.61 parts of compound (A-2) having the below-described pigment adsorption structure and also having a carbon-carbon double bond and 89.78 parts of dimethylformamide.

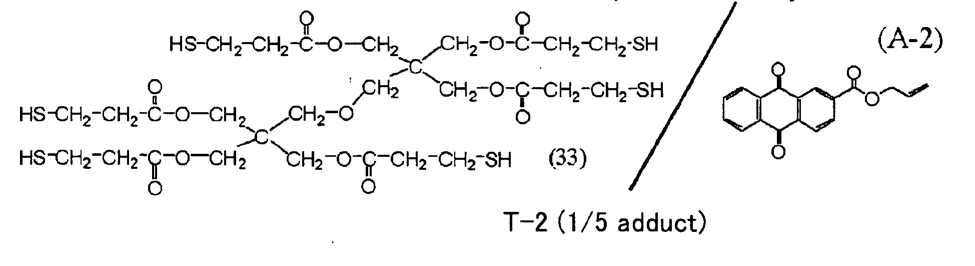

### Synthesis Example T-3

A 20% solution of the below-described mercaptan compound (chain transfer agent T-3) was obtained in the same manner as in the Synthesis Example T-1, except that 15.57 parts of compound (A-1) having the pigment adsorption structure and also having a carbon-carbon double bond and 93.60 parts of dimethylformamide in the Synthesis Example T-1 were replaced with 17.52 parts of compound (A-3) having the below-described pigment adsorption structure and also having a carbon-carbon double bond and 101.4 parts of dimethylformamide.

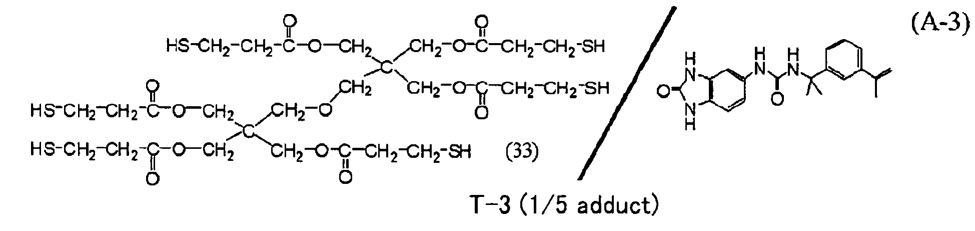

### Synthesis Example T-4

A total of 4.89 parts of pentaerythritol tetrakis(3-mercaptopropionate) (PEMP, manufactured by Sakai Chemical Industry Co., Ltd.) and 14.41 parts of compound (A-4) having the below-described pigment adsorption structure and also having a carbon-carbon double bond were dissolved in 77.20 parts of dimethylformamide and heated to 70°C under a nitrogen flow. Then, 0.04 parts of 2,2'-azobis(2,4-dimethylvaleronitrile) (V-65, manufactured by Wako Pure Chemical Industries, Ltd.) were added thereto and heating was conducted for 3 hours. Then, 0.04 parts of V-65 was further added and the reaction was conducted for 3 hours at 70°C under a nitrogen flow. By cooling to room temperature, a 20% solution of the below-described mercaptan compound (chain transfer agent T-4) was obtained.

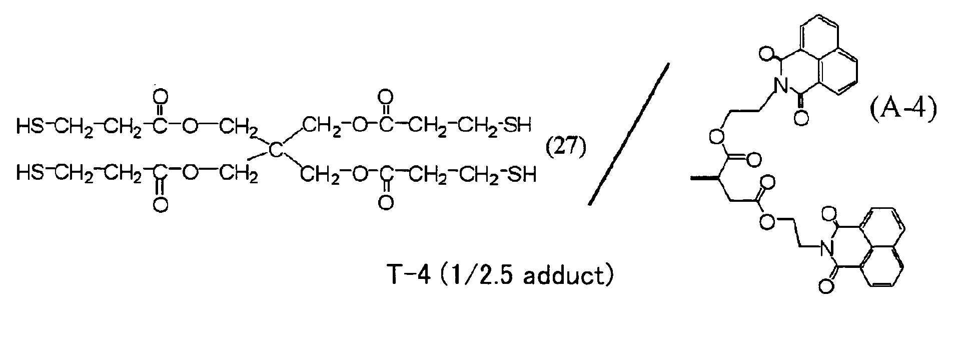

### Synthesis Example T-5

A 30% solution of the below-described mercaptan compound (chain transfer agent T-5) was obtained in the same manner as in the Synthesis Example T-1, except that 15.57 parts of compound (A-1) having the pigment adsorption structure and also having a carbon-carbon double bond and 93.60 parts of dimethylformamide in the Synthesis Example T-1 were replaced with 5.26 parts of compound (A-5) having the below-described pigment adsorption structure and also having a carbon-carbon double bond and 30.54 parts of 1-methoxy-2-propanol.

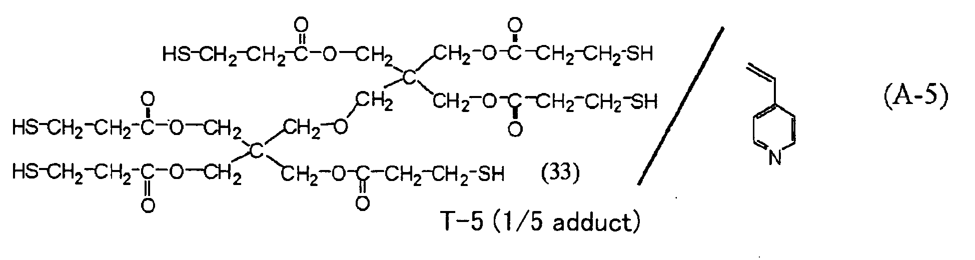

### Synthesis Example T-6

A 30% solution of the below-described mercaptan compound (chain transfer agent T-6) was obtained in the same manner as in the Synthesis Example T-1, except that 15.57 parts of compound (A-1) having the pigment adsorption structure and also having a carbon-carbon double bond and 93.60 parts of dimethylformamide in the Synthesis Example T-1 were replaced with 4.71 parts of compound (A-6) having the below-described pigment adsorption structure and also having a carbon-carbon double bond and 29.25 parts of 1-methoxy-2-propanol.

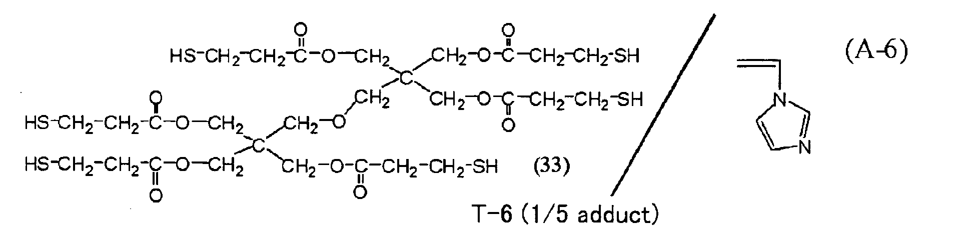

### Synthesis Example T-7

A total of 7.83 parts of dipentaerythritol hexakis(3-mercaptopropionate) (DPMP, manufactured by Sakai Chemical Industry Co., Ltd.) and 6.51 parts of compound (A-7) having the below-described pigment adsorption structure and also having a carbon-carbon double bond were dissolved in 33.45 parts of 1-methoxy-2-propanol and heated to 70°C under a nitrogen flow. Then, 0.06 part of 2,2'-azobis(2,4-dimethylvaleronitrile) (V-65, manufactured by Wako Pure Chemical Industries, Ltd.) was added thereto and heating was conducted for 3 hours. Then, 0.06 part of V-65 were further added and the reaction was conducted for 3 hours at 70°C under a nitrogen flow. By cooling to room temperature, a 30% solution of the below-described mercaptan compound (chain transfer agent T-7) was obtained.

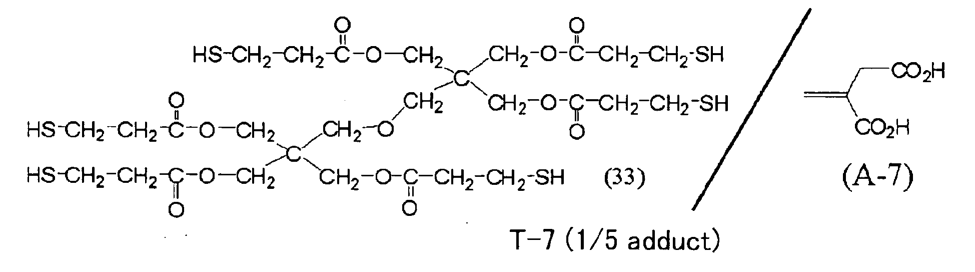

### Synthesis Example T-8

A 30% solution of the below-described mercaptan compound (chain transfer agent T-8) was obtained in the same manner as in the Synthesis Example T-7, except that 6.51 parts of compound (A-7) having the pigment adsorption structure and also having a carbon-carbon double bond and 33.45 parts of 1-methoxy-2-propanol in the Synthesis Example T-7 were replaced with 5.80 parts of compound (A-8) having the below-described pigment adsorption structure and also having a carbon-carbon double bond and 31.81 parts of 1-methoxy-2-propanol.

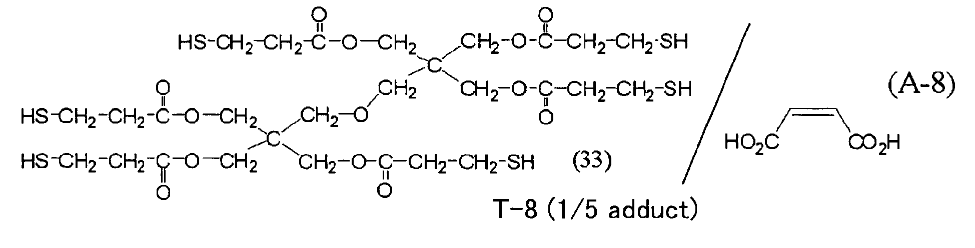

### Synthesis Example T-9

A 30% solution of the below-described mercaptan compound (chain transfer agent T-9) was obtained in the same manner as in the Synthesis Example T-7, except that 6.51 parts of compound (A-7) having the pigment adsorption structure and also having a carbon-carbon double bond and 33.45 parts of 1-methoxy-2-propanol in the Synthesis Example T-7 were replaced with 12.46 parts of compound (A-9) having the below-described pigment adsorption structure and also having a carbon-carbon double bond and 47.35 parts of dimethylformamide.

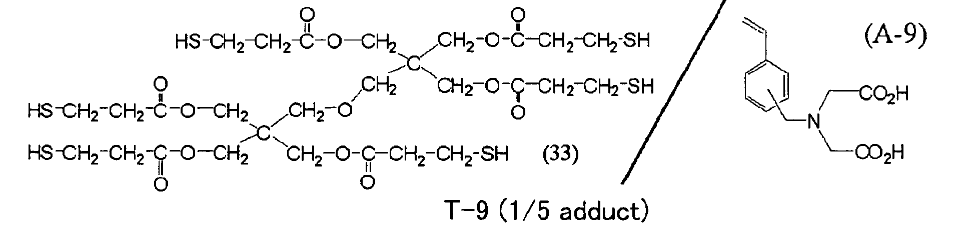

### Synthesis Example T-10

A 30% solution of the below-described mercaptan compound (chain transfer agent T-10) was obtained in the same manner as in the Synthesis Example T-7, except that 6.51 parts of compound (A-7) having the pigment adsorption structure and also having a carbon-carbon double bond and 33.45 parts of 1-methoxy-2-propanol in the Synthesis Example T-7 were replaced with 10.46 parts of compound (A-10) having the below-described pigment adsorption structure and also having a carbon-carbon double bond and 42.67 parts of dimethylformamide.

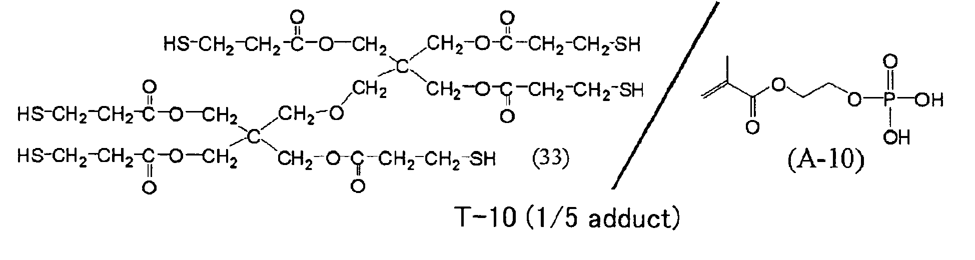

### Synthesis Example T-11

A 30% solution of the below-described mercaptan compound (chain transfer agent T-11) was obtained in the same manner as in the Synthesis Example T-7, except that 6.51 parts of compound (A-7) having the pigment adsorption structure and also having a carbon-carbon double bond and 33.45 parts of 1-methoxy-2-propanol in the Synthesis Example T-7 were replaced with 7.86 parts of compound (A-11) having the below-described pigment adsorption structure and also having a carbon-carbon double bond and 36.61 parts of 1-methoxy-2-propanol.

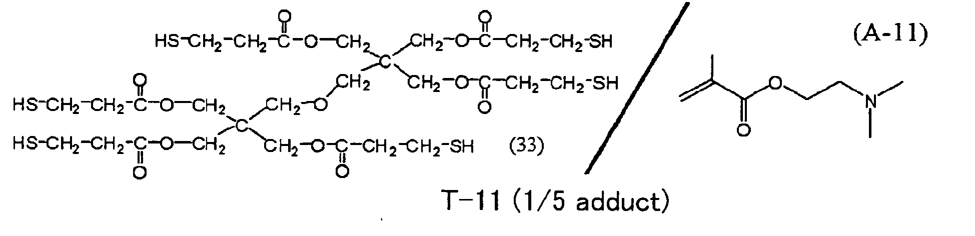

### Synthesis Example T-12

A total of 4.89 parts of pentaerythritol tetrakis(3-mercaptopropionate) (PEMP, manufactured by Sakai Chemical Industry Co., Ltd.) and 3.90 parts of compound (A-12) having the below-described pigment adsorption structure and also having a carbon-carbon double bond were dissolved in 20.51 parts of 1-methoxy-2-propanol and heated to 70°C under a nitrogen flow. Then, 0.04 parts of 2,2'-azobis(2,4-dimethylvaleronitrile) (V-65, manufactured by Wako Pure Chemical Industries, Ltd.) were added thereto and heating was conducted for 3 hours. Then, 0.04 parts of V-65 were further added and the reaction was conducted for 3 hours at 70°C under a nitrogen flow. By cooling to room temperature, a 30% solution of the below-described mercaptan compound (chain transfer agent T-12) was obtained.

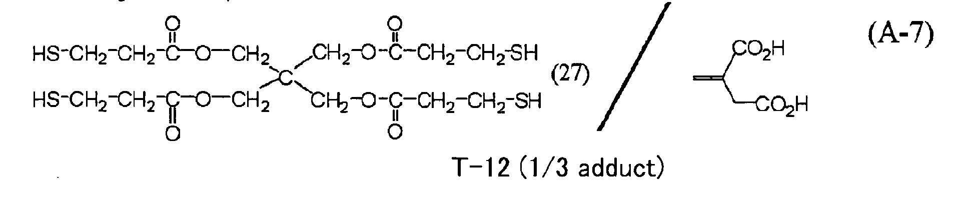

### Synthesis Example T-13

A total of 7.83 parts of dipentaerythritol hexakis(3-mercaptopropionate) (DPMP, manufactured by Sakai Chemical Industry Co., Ltd.) and 4.55 parts of compound (A-12) having the below-described pigment adsorption structure and also having a carbon-carbon double bond were dissolved in 28.90 parts of 1-methoxy-2-propanol and heated to 70°C under a nitrogen flow. Then, 0.04 parts of 2,2'-azobis(2,4-dimethylvaleronitrile) (V-65, manufactured by Wako Pure Chemical Industries, Ltd.) were added thereto and heating was conducted for 3 hours. Then, 0.04 parts of V-65 were further added and the reaction was conducted for 3 hours at 70°C under a nitrogen flow. By cooling to room temperature, a 30% solution of the below-described mercaptan compound (chain transfer agent T-13) was obtained.

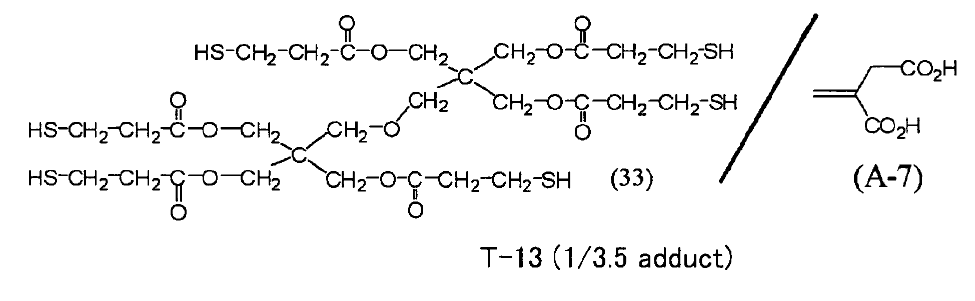

### Synthesis Example T-14

A 30% solution of the below-described mercaptan compound (chain transfer agent T-14) was obtained in the same manner as in the Synthesis Example T-7, except that 6.51 parts of compound (A-7) having the pigment adsorption structure and also having a carbon-carbon double bond and 33.45 parts of 1-methoxy-2-propanol in the Synthesis Example T-7 were replaced with 11.05 parts of compound (A-14) having the below-described pigment adsorption structure and also having a carbon-carbon double bond and 44.05 parts of dimethylformamide.

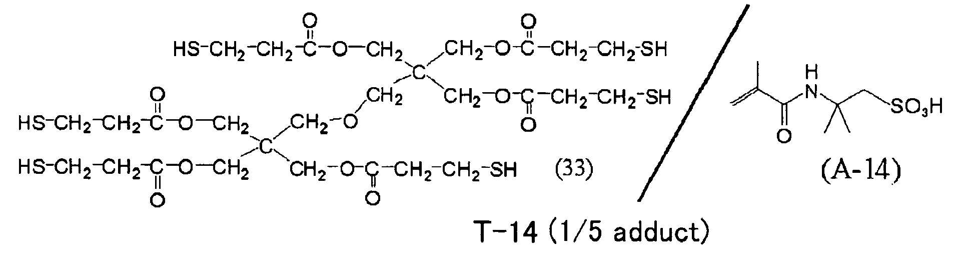

### Synthesis of P-1 to P-28

The C components (P-1 to P-28) were synthesized in the following manner. Synthesis Example P-1

A mixed solution containing 46.80 parts of 20% solution of the chain transfer agent T-1 obtained in the Synthesis Example T-1 and 20 parts of methyl methacrylate (MMA; monomer) was heated to 80°C under a nitrogen flow. A total of 0.013 part of 2,2'-azobis(isobutyronitrile) (AIBN, manufactured by Wako Pure Chemical Industries, Ltd.) was added thereto, and then again after 3 hours of heating, 0.013 parts of AIBN were added again and the reaction was conducted for 3 hours at a temperature of 80°C under a nitrogen flow. The product was cooled to room temperature and diluted with acetone. Re-precipitation was then performed by using a large amount of methanol and by subsequent vacuum drying yielded 19 parts (solid) of the following polymer (P-1: weight-average molecular weight 14,000 calculated as polystyrene).

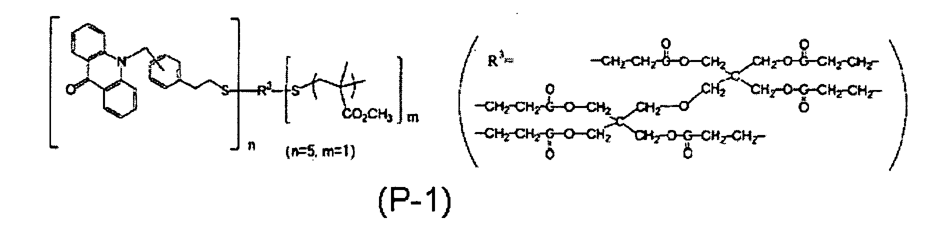

### Synthesis Example P-2

A total of 23 parts (solid) of the following polymer (P-2: weight-average molecular weight 30,000 calculated as polystyrene) was obtained in the same manner as in the Synthesis Example P-1, except that 46.80 parts of the 20% solution of the chain transfer agent T-1 in the Synthesis Example P-1 was changed to 23.40 parts, and 0.013 parts of AIBN were changed to 0.007 parts.

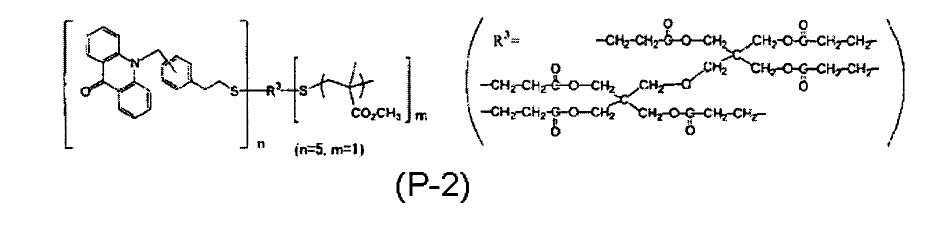

### Synthesis Example P-3

A total of 20 parts (solid) of the following polymer (P-3: weight-average molecular weight 15,000 calculated as polystyrene) was obtained in the same manner as in the Synthesis Example P-1, except that 20 parts of methyl methacrylate in the Synthesis Example P-1 was changed to 19.5 parts of butyl methacrylate and 8.5 parts of 2-hydroxyethyl methacrylate.

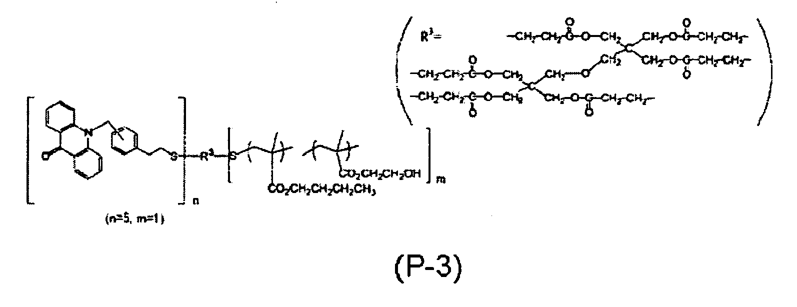

### Synthesis Examples P-4 to P-12

The following polymers (P-4 to P-12) were obtained in the same manner as in the Synthesis Example P-1, except that the amounts and types of the chain transfer agent and monomer, the amount of AIBN, and the re-precipitation method in the Synthesis Example P-1 were changed as shown in Table 13 below.

**(Table 13)**

| Synthetic example | Chain transfer agent | Monomer | AIBN | Reprecipitation method | Weight-average molecular weight | Yield of polymer compound |
|---|---|---|---|---|---|---|
| P-4 | T-2 solution 44.89 parts | MMA 20 parts | 0.013 parts | Reprecipitated using methanol | 15,000 | 24 parts |
| P-5 | T-2 solution 22.45 parts | MMA 20 parts | 0.007 parts | Reprecipitated using methanol | 30,000 | 22 parts |
| P-6 | T-3 solution 50.70 parts | BMA 19.5 parts HEMA 8.5 parts | 0.013 parts | Reprecipitated using methanol | 14,000 | 25 parts |
| P-7 | T-3 solution 25.35 parts | BMA 19.5 parts HEMA 8.5 parts | 0.007 parts | Reprecipitated using methanol | 28,000 | 22 parts |
| P-8 | T-4 solution 12.87 parts | BMA 19.5 parts HEMA 8.5 parts | 0.007 parts | Reprecipitated using methanol | 29,000 | 20 parts |
| P-9 | T-5 solution 17.45 parts | BMA 19.5 parts HEMA 8.5 parts | 0.013 parts | Reprecipitated using methanol | 14,000 | 17 parts |
| P-10 | T-5 solution 8.73 parts | MMA 20 parts | 0.007 parts | Reprecipitated using methanol | 24,000 | 15 parts |
| P-11 | T-6 solution 16.71 parts | MMA 20 parts | 0.013 parts | Reprecipitated using methanol | 15,000 | 17 parts |
| P-12 | T-6 solution 8.36 parts | MMA 20 parts | 0.007 parts | Reprecipitated using methanol | 31,000 | 18 parts |

| | | | | | | |
|---|---|---|---|---|---|---|
| MMA methyl methacrylate BMA n-butyl methacrylate HEMA 2-hydroxyethyl methacrylate | | | | | | |

The structures of the synthesized polymers are shown below. The indication such as (P-4) represents the number of the synthesis example in Tables 13 below.

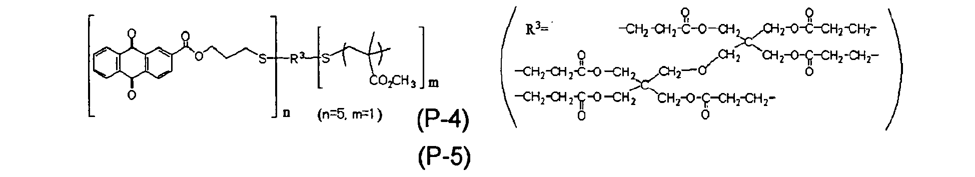

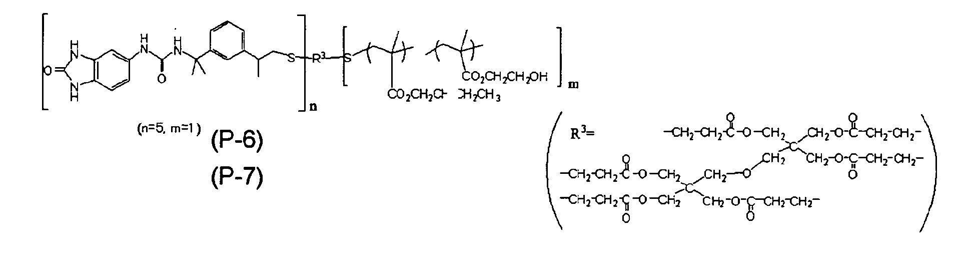

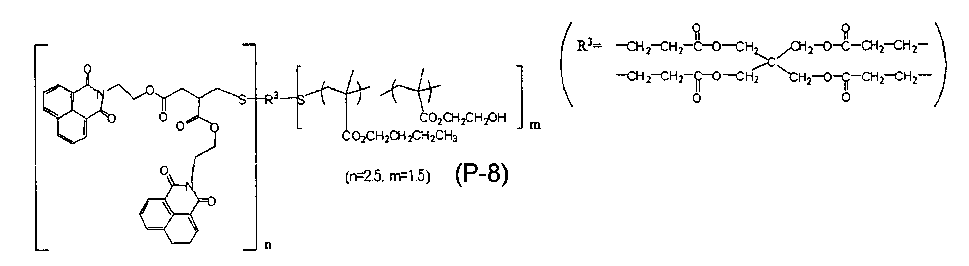

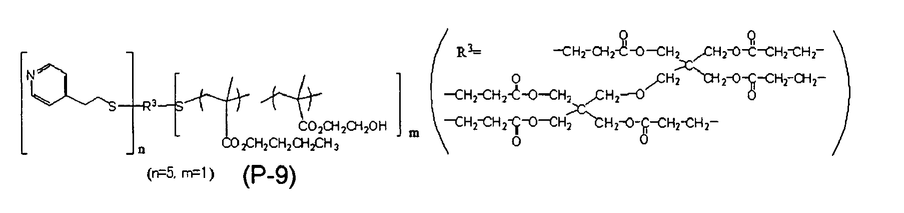

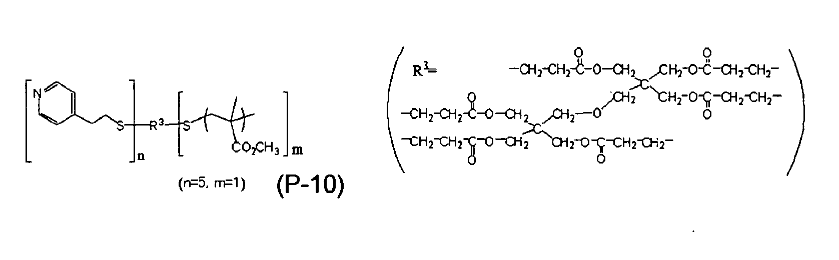

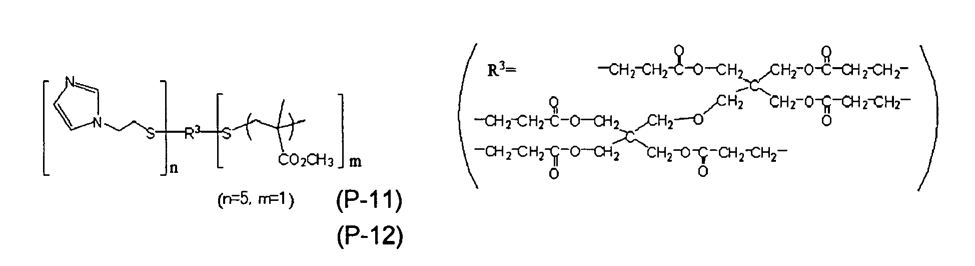

### Synthesis Example P-13

A mixed solution containing 19.11 parts of 30% solution of the chain transfer agent T-7 obtained in the Synthesis Example T-7 and 20 parts of methyl methacrylate was heated to 80°C under a nitrogen flow. A total of 0.013 parts of 2,2'-azobis(isobutyronitrile) (AIBN, manufactured by Wako Pure Chemical Industries, Ltd.) was added thereto, and then again after 3 hours of heating, 0.013 parts of AIBN were added again and the reaction was conducted for 3 hours at a temperature of 80°C under a nitrogen flow. The product was cooled to room temperature and diluted with acetone. Re-precipitation was then performed by using a large amount of methanol and by subsequent vacuum drying yielded 13 parts (solid) of the following polymer (P-13: weight-average molecular weight 12,000 calculated as polystyrene).

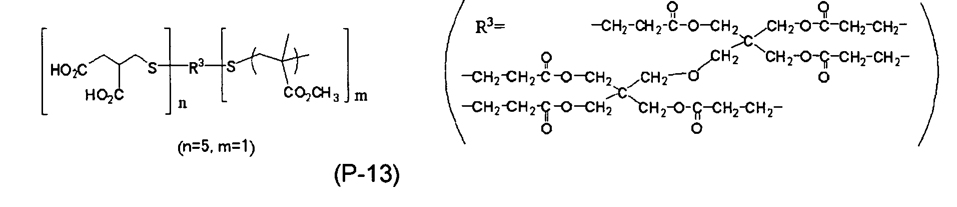

### Synthesis Example P-14

A total of 14 parts (solid) of the following polymer (P-14: weight-average molecular weight 20,000 calculated as polystyrene) was obtained in the same manner as in the Synthesis Example P-13, except that 19.11 parts of 30% solution of chain transfer agent T-7 in the Synthesis Example P-13 was changed to 9.56 parts and 0.013 parts of AIBN were changed to 0.007 parts.

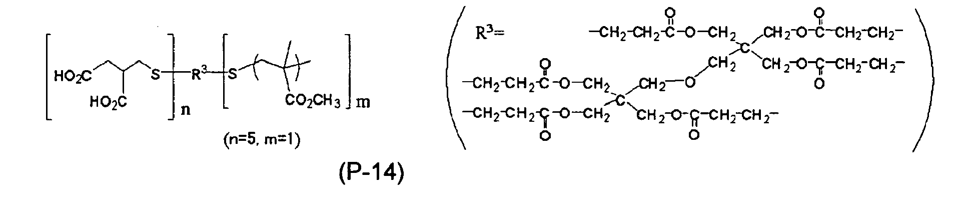

### Synthesis Example P-15

A total of 13 parts (solid) of the following polymer (P-15: weight-average molecular weight 13,000 calculated as polystyrene) was obtained in the same manner as in the Synthesis Example P-13, except that 20 parts of methyl methacrylate in the Synthesis Example P-13 was changed to 19.5 parts of butyl methacrylate and 8.5 parts of 2-hydroxyethyl methacrylate.

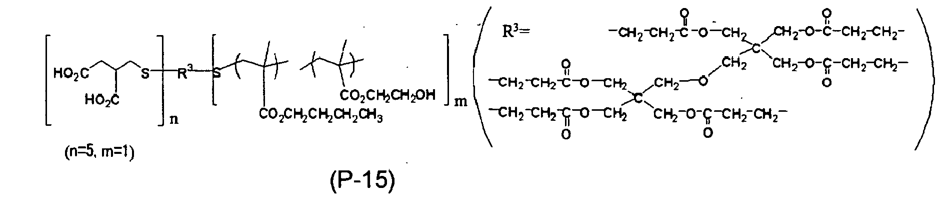

### Synthesis Examples P-16 to P-27

The following polymers (P-16 to P-27) were obtained in the same manner as in the Synthesis Example P-13, except that the amounts and types of the chain transfer agent and monomer, the amount of AIBN, and the re-precipitation method in the Synthesis Example P-13 were changed as shown in Table 14 below.

**(Table 14)**

| Synthetic example | Chain transfer agent | Monomer | AIBN | Reprecipitation method | Weight-average molecular weight | Yield of polymer compound |
|---|---|---|---|---|---|---|
| P-16 | T-7 solution 9.56 parts | MMA 19 parts MAA 1 parts | 0.007 parts | Reprecipitated using methanol/water(1/1) | 23,000 | 15 parts |
| P-17 | T-7 solution 9.03 parts | MMA 18 parts NK ester SA 2 parts | 0.007 parts | Reprecipitated using methanol/water(1/1) | 23,000 | 16 parts |
| P-18 | T-8 solution 18.18 parts | MMA 20 parts | 0.013 parts | Reprecipitated using methanol | 13,000 | 11 parts |
| P-19 | T-8 solution 9.09 parts | MMA 20 parts | 0.007 parts | Reprecipitated using methanol | 23,000 | 12 parts |
| P-20 | T-8 solution 18.18 parts | BMA 19.5 parts HEMA 8.5 parts | 0.013 parts | Reprecipitated using methanol | 16,000 | 11 parts |
| P-21 | T-9 solution 13.53 parts | MMA 20 parts | 0.007 parts | Reprecipitated using methanol | 27,000 | 13 parts |
| P-22 | T-10 solution 12.19 parts | MMA 20 parts | 0.007 parts | Reprecipitated using methanol | 26,000 | 11 parts |
| P-23 | T-14 solution 12.13 parts | MMA 20 parts | 0.007 parts | Reprecipitated using methanol | 28,000 | 10 parts |
| P-24 | T-11 solution 20.92 parts | MMA 20 parts | 0.013 parts | Reprecipitated using methanol | 15,000 | 18 parts |
| P-25 | T-11 solution 10.46 parts | MMA 20 parts | 0.007 parts | Reprecipitated using methanol | 32,000 | 19 parts |
| P-26 | T-11 solution 20.92 parts | BMA 19.5 parts HEMA 8.5 parts | 0.013 parts | Reprecipitated using methanol | 17.000 | 22 parts |
| P-27 | T-12 solution 11.72 parts | MMA 20 parts | 0.013 parts | Reprecipitated using methanol | 11,000 | 11 parts |

| | | | | | | |
|---|---|---|---|---|---|---|
| MMA methyl methacrylate MAA methacrylic acid BMA n-butyl methacrylate HEMA 2-hydroxyethyl methacrylate NK ester SA 2-Methacryloyloxyethyl succinate (manufactured by SHIN-NAKAMURA CHEMICAL CO.,LTD) | | | | | | |

The structure of the synthesized polymers is shown below. The indication such as (P-16) represents the number of the synthesis example in Table 14.

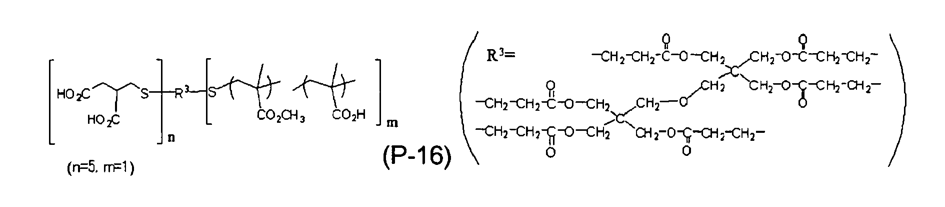

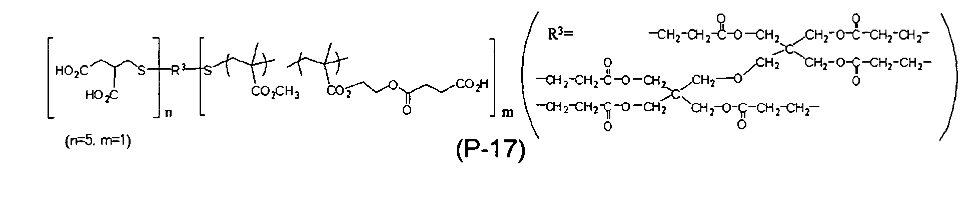

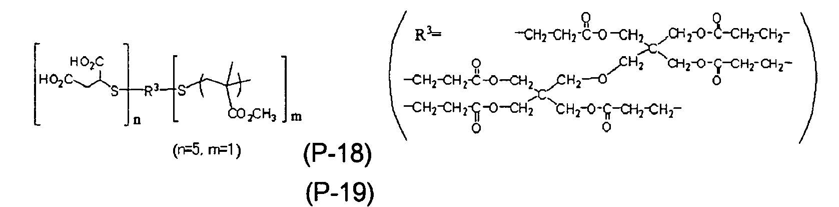

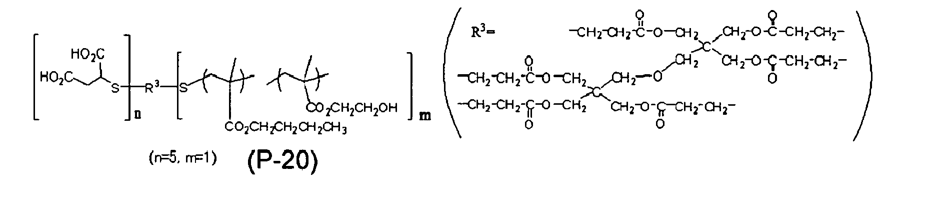

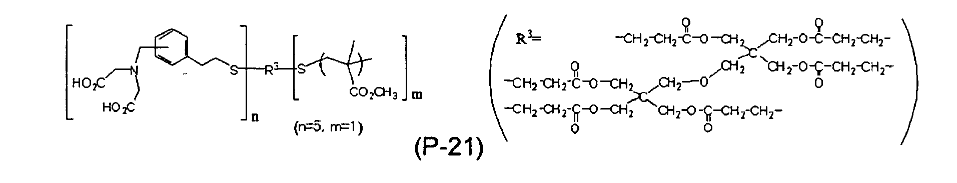

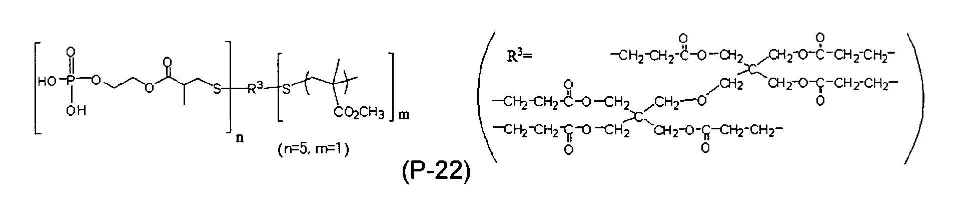

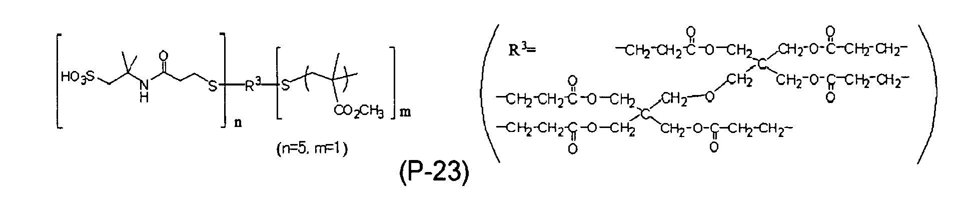

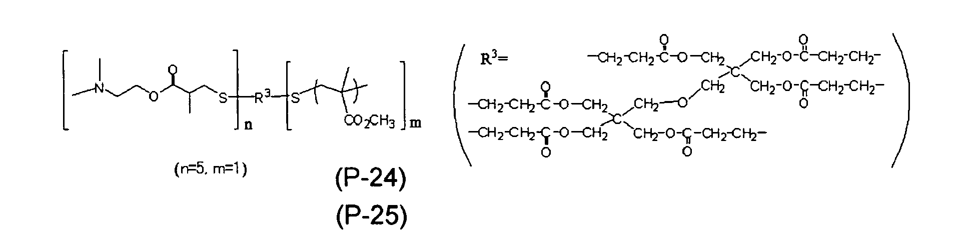

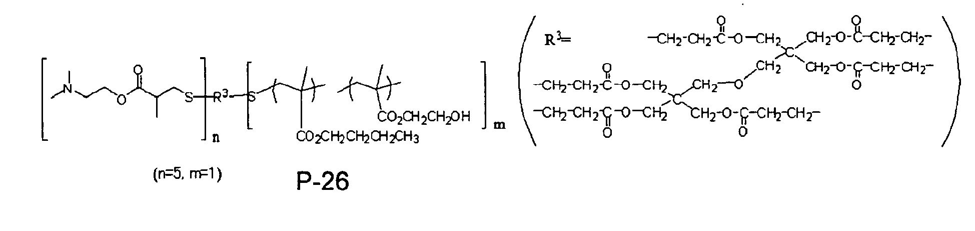

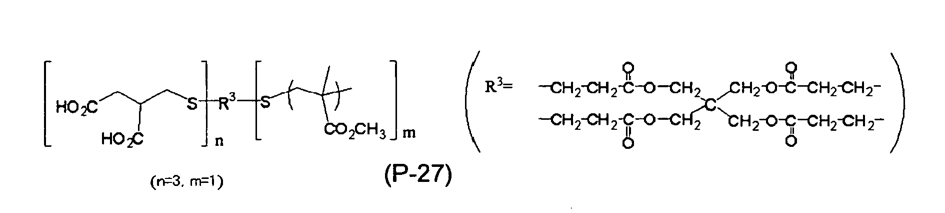

### Synthesis Example P-28

A mixed solution containing 4.99 parts of a 30% solution of the chain transfer agent T-13 described in the Synthesis Example T-13, 20.0 parts of methyl methacrylate, and 4.66 parts of 1-methoxy-2-propanol was heated to 90°C under a nitrogen flow. A mixed solution of 0.139 parts of dimethyl 2,2-azobisisobutyrate (V-601, manufactured by Wako Pure Chemical Industries, Ltd.), 5.36 parts of 1-methoxy-2-propanol and 9.40 parts of 1-methoxy-2-propyl acetate was dropwise added within 2.5 hours to the above-described mixed solution under stirring. Upon completion of the dropwise addition, the reaction was conducted for 2.5 hours at 90°C. Then, a mixed solution of 0.046 parts of dimethyl 2,2-azobisisobutyrate and 4.00 parts of 1-methoxy-2-propyl acetate was poured in and the reaction was further conducted for 2 hours. A total of 1.52 parts of 1-methoxy-2-propanol and 21.7 parts of 1-methoxy-2-propyl acetate were then added to the reaction liquid, followed by cooling to room temperature. Reprecipitation was then performed by using a large amount of methanol and by subsequent vacuum drying yielded the following solid polymer (P-28: weight-average molecular weight 25,000 calculated as polystyrene).

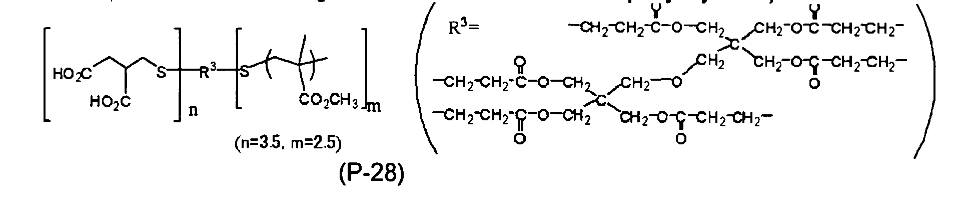

### Preparation of mill base A3-1

300 parts by weight of HEUCO GREEN 600703K, 500 parts by weight of Actilane 421 (acrylate monomer, manufactured by Akcros), and 200 parts by weight of polymer P-1 were mixed by stirring to give a pigment ink. Preparation of a pigment mill base was carried out by putting the pigment ink into an M50 disperser motor mill (manufactured by Eiger) and by using zirconia beads having a diameter of 0.65 mm at a peripheral speed of 9 m/s for 4 hours.

### Preparation of mill bases A3-2 to A3-30

Mill bases A3-2 to A3-30 were prepared in the same manner as for mill base A3-1 except that the pigment and the polymer were changed to a pigment and a polymer shown in Table 15 below.

**(Table 15)**

| Mill base | Pigment | Polymer |
|---|---|---|
| A3-2 | HEUCO GREEN 600703K | P-2 |
| A3-3 | HEUCO GREEN 600703K | P-3 |
| A3-4 | HEUCO GREEN 600703K | P-4 |
| A3-5 | Monastral GREEN GN-C | P-5 |
| A3-6 | Monastral GREEN GNX-C | P-6 |
| A3-7 | Monastral GREEN GBX-C | P-7 |
| A3-8 | HOSTAPERM GREEN GG01 | P-8 |
| A3-9 | HOSTAPERM GREEN GNX-D | P-9 |
| A3-10 | HOSTAPERM GREEN GNX-TS | P-10 |
| A3-11 | PV Fast GREEN GNX | P-11 |
| A3-12 | Novotex GREEN GNX | P-12 |
| A3-13 | Fastogen GREEN S | P-13 |
| A3-14 | Fastogen GREEN SF | P-14 |
| A3-15 | Phthalocyanine GREEN B308 | P-15 |
| A3-16 | Phthalocyanine GREEN SAX | P-16 |
| A3-17 | Cyanine GREEN 2G-550-D | P-17 |
| A3-18 | Cyanine GREEN 2GO | P-18 |
| A3-19 | Cyanine GREEN PBN-1 | P-19 |
| A3-20 | HELIOGEN BLUE L8605 | P-20 |
| A3-21 | HELIOGEN BLUE K8730 | P-21 |
| A3-22 | HELIOGEN BLUE D8725 | P-22 |
| A3-23 | HELIOGEN BLUE L9361 | P-23 |
| A3-24 | Irgalite GREEN 6G | P-24 |
| A3-25 | HOSTAPERM GREEN 8G | P-25 |
| A3-26 | Fastogen GREEN 2KY | P-26 |
| A3-27 | Lionol GREEN 2YS | P-27 |
| A3-28 | Lionol GREEN 6YK | P-28 |
| A3-29 | HEUCO GREEN 600703K | DisperBYK-168 |
| A3-30 | HEUCO GREEN 600703K | Solsperse 32000 |

### Preparation of mill base B3-1

300 parts by weight of HOSTAPERM VIOLET RL-NF, 500 parts by weight of Actilane 421 (acrylate monomer, manufactured by Akcros), and 200 parts by weight of polymer P-1 were mixed by stirring to give a pigment ink. Preparation of a pigment mill base was carried out by putting the pigment ink into an M50 disperser motor mill (manufactured by Eiger) and by using zirconia beads having a diameter of 0.65 mm at a peripheral speed of 9 m/s for 4 hours.

### Preparation of mill bases B3-2 to B3-27

Mill bases B3-2 to B3-27 were prepared in the same manner as for mill base B3-1 except that the pigment and the polymer were changed to a pigment and a polymer shown in Table 16 below.

**(Table 16)**

| Mill base | Pigment | Polymer |
|---|---|---|
| B3-2 | HOSTAPERM VIOLET RL-NF | P-2 |
| B3-3 | HOSTAPERM VIOLET RL-NF | P-4 |
| B3-4 | HOSTAPERM VIOLET RL-NF | P-5 |
| B3-5 | HOSTAPERM VIOLET RL02 | P-1 |
| B3-6 | HOSTAPERM VIOLET BL | P-2 |
| B3-7 | HOSTAPERM VIOLET P-RL | P-4 |
| B3-8 | HOSTAPERM VIOLET RLspec | P-5 |
| B3-9 | HOSTAPERM VIOLET RLspec-TS | P-6 |
| B3-10 | PV Fast Violet RL | P-7 |
| B3-11 | PV Fast Violet BLP | P-10 |
| B3-12 | Novotex Violet BL-PC VP 2429 | P-11 |
| B3-13 | Novotex Violet BL VP 2435 | P-12 |
| B3-14 | Fastogen Super Violet RN | P-13 |
| B3-15 | Fastogen Super Violet RNS | P-14 |
| B3-16 | Fastogen Super Violet RN-SU-02 | P-15 |
| B3-17 | Fastogen Super Violet RVS | P-18 |
| B3-18 | Fastogen Super Violet RXE | P-19 |
| B3-19 | Fastogen Super Violet RXS | P-20 |
| B3-20 | Lionogen Violet R6100 | P-21 |
| B3-21 | Lionogen Violet R6200 | P-24 |
| B3-22 | Oriengtal Fast Violet BL | P-25 |
| B3-23 | Paliogen Violet L 5890 | P-26 |
| B3-24 | Crommophtal Violet GT | P-27 |
| B3-25 | Crommophtal Violet B | P-28 |
| B3-26 | HOSTAPERM VIOLET RL-NF | DisperBYK-168 |
| B3-27 | HOSTAPERM VIOLET RL-NF | Solsperse 32000 |

### Preparation of mill base C3-1

300 parts by weight of Symuler Fast Orange 4183H, 500 parts by weight of Actilane 421 (acrylate monomer, manufactured by Akcros), and 200 parts by weight of polymer P-1 were mixed by stirring to give a pigment ink. Preparation of a pigment mill base was carried out by putting the pigment ink into an M50 disperser motor mill (manufactured by Eiger) and by using zirconia beads having a diameter of 0.65 mm at a peripheral speed of 9 m/s for 4 hours.

### Preparation of mill bases C3-2 to C3-19

Mill bases C3-2 to C3-19 were prepared in the same manner as for mill base C3-1 except that the pigment and the polymer were changed to a pigment and a polymer shown in Table 17 below.

**(Table 17)**

| Mill base | Pigment | Polymer |
|---|---|---|
| C3-2 | Symuler Fast Orange 4183H | P-2 |
| C3-3 | Symuler Fast Orange 4183H | P-4 |
| C3-4 | Symuler Fast Orange 4183H | P-5 |
| C3-5 | Symuler Fast Orange 4183H | P-6 |
| C3-6 | Symuler Fast Orange 4183H | P-7 |
| C3-7 | Novoperm Orange HL | P-1 |
| C3-8 | Novoperm Orange HL | P-11 |
| C3-9 | Novoperm Orange HL | P-12 |
| C3-10 | Novoperm Orange HL | P-13 |
| C3-11 | Novoperm Orange HL | P-14 |
| C3-12 | Novoperm Orange HL | P-15 |
| C3-13 | Chromofine Orange 3700L | P-18 |
| C3-14 | LionogenOrange R-F | P-19 |
| C3-15 | Novoperm Red HFG | P-20 |
| C3-16 | Novoperm Red HFG | P-21 |
| C3-17 | Novoperm Red HFG | P-28 |
| C3-18 | Symuler Fast Orange 4183H | DisperBYK-168 |
| C3-19 | Symuler Fast Orange 4183H | Solsperse 32000 |

### Examples 3-1-1

An Inkjet ink was obtained by the same method as in Example 1-1-1 except that the mill base A1-1 was changed to mill base A3-1. The viscosity was 17 mPa·s.

Furthermore, inkjet recording was carried out in the same manner as in Example 1-1-1, and evaluation was carried out in the same manner. The results are given in Table 18.

### Examples 3-1-2 to 3-2-28 and Comparative Examples 3-1-1 and 3-2-2

Inkjet inks were obtained by the same method as in Example 3-1-1 except that the mill base A3-1 was changed to a mill base shown in Table 18 below. The viscosity was 17 to 22 mPa·s.

Furthermore, inkjet recording was carried out in the same manner as in Example 3-1-1, and evaluation was carried out in the same manner. The results are given in Table 18.

**(Table 18)**

| | Mill base | Curability | Storage stability | Dischargeability Evaluation A | Dischargeability Evaluation B | Flexibility | Substrate adhesion |
|---|---|---|---|---|---|---|---|
| Ex.3-1-1 | A3-1 | 3 | 4 | 4 | 4 | 4 | 0 |
| Ex.3-1-2 | A3-2 | 3 | 4 | 4 | 4 | 4 | 0 |
| Ex. 3-1-3 | A3-3 | 3 | 4 | 4 | 4 | 4 | 0 |
| Ex. 3-1-4 | A3-4 | 3 | 4 | 4 | 4 | 4 | 0 |
| Ex. 3-1-5 | A3-5 | 3 | 4 | 4 | 4 | 4 | 0 |
| Ex. 3-1-6 | A3-6 | 3 | 4 | 4 | 4 | 4 | 0 |
| Ex. 3-1-7 | A3-7 | 3 | 4 | 4 | 4 | 4 | 0 |
| Ex. 3-1-8 | A3-8 | 3 | 4 | 4 | 4 | 4 | 0 |
| Ex. 3-1-9 | A3-9 | 3 | 4 | 4 | 4 | 4 | 0 |
| Ex. 3-1-10 | A3-10 | 3 | 4 | 4 | 4 | 4 | 0 |
| Ex. 3-1-11 | A3-11 | 3 | 4 | 4 | 4 | 4 | 0 |
| Ex. 3-1-12 | A3-12 | 3 | 4 | 4 | 4 | 4 | 0 |
| Ex. 3-1-13 | A3-13 | 3 | 4 | 4 | 4 | 4 | 0 |
| Ex. 3-1-14 | A3-14 | 3 | 4 | 4 | 4 | 4 | 0 |
| Ex.3-1-15 | A3-15 | 3 | 4 | 4 | 4 | 4 | 0 |
| Ex. 3-1-16 | A3-16 | 3 | 4 | 4 | 4 | 4 | 0 |
| Ex.3-1-17 | A3-17 | 3 | 4 | 4 | 4 | 4 | 0 |
| Ex.3-1-18 | A3-18 | 3 | 4 | 4 | 4 | 4 | 0 |
| Ex. 3-1-19 | A3-19 | 3 | 4 | 4 | 4 | 4 | 0 |
| Ex.3-1-20 | A3-20 | 3 | 4 | 4 | 4 | 4 | 0 |
| Ex.3-1-21 | A3-21 | 3 | 4 | 4 | 4 | 4 | 0 |
| Ex.3-1-22 | A3-22 | 3 | 4 | 4 | 4 | 4 | 0 |
| Ex.3-1-23 | A3-23 | 3 | 4 | 4 | 4 | 4 | 0 |
| Ex.3-1-24 | A3-24 | 3 | 4 | 4 | 4 | 4 | 0 |
| Ex.3-1-25 | A3-25 | 3 | 4 | 4 | 4 | 4 | 0 |
| Ex.3-1-26 | A3-26 | 3 | 4 | 4 | 4 | 4 | 0 |
| Ex. 3-1-27 | A3-27 | 3 | 4 | 4 | 4 | 4 | 0 |
| Ex. 3-1-28 | A3-28 | 3 | 4 | 4 | 4 | 4 | 0 |
| Comp. Ex. 3-1-1 | A3-29 | 2 | 1 | 1 | 1 | 3 | 1 |
| Comp. Ex. 3-1-2 | A3-30 | 2 | 1 | 2 | 2 | 3 | 1 |

### Examples 3-2-1

An inkjet ink was obtained by the same method as in Example 3-1-1 except that the mill base A3-1 was changed to mill base B3-1. The viscosity was 18 mPa·s.

Furthermore, inkjet recording was carried out in the same manner as in Example 3-1-1, and evaluation was carried out in the same manner. The results are given in Table 19.

### Examples 3-2-2 to 3-2-25 and Comparative Examples 3-2-1 and 3-2-2

Inkjet inks were obtained by the same method as in Example 3-2-1 except that the mill base B3-1 was changed to a mill base shown in Table 19 below. The viscosity was 17 to 22 mPa·s.

Furthermore, inkjet recording was carried out in the same manner as in Example 3-2-1, and evaluation was carried out in the same manner. The results are given in Table 19.

**(Table 19)**

| | Mill base | Curability | Storage stability | Dischargeability Evaluation A | Dischargeability Evaluation B | Flexibility | Substrate adhesion |
|---|---|---|---|---|---|---|---|
| Ex. 3-2-1 | B3-1 | 3 | 4 | 4 | 4 | 4 | 0 |
| Ex. 3-2-2 | B3-2 | 3 | 4 | 4 | 4 | 4 | 0 |
| Ex. 3-2-3 | B3-3 | 3 | 4 | 4 | 4 | 4 | 0 |
| Ex. 3-2-4 | B3-4 | 3 | 4 | 4 | 4 | 4 | 0 |
| Ex. 3-2-5 | B3-5 | 3 | 4 | 4 | 4 | 4 | 0 |
| Ex. 3-2-6 | B3-6 | 3 | 4 | 4 | 4 | 4 | 0 |
| Ex.3-2-7 | B3-7 | 3 | 4 | 4 | 4 | 4 | 0 |
| Ex. 3-2-8 | B3-8 | 3 | 4 | 4 | 4 | 4 | 0 |
| Ex. 3-2-9 | B3-9 | 3 | 4 | 4 | 4 | 4 | 0 |
| Ex. 3-2-10 | B3-10 | 3 | 4 | 4 | 4 | 4 | 0 |
| Ex. 3-2-11 | B3-11 | 3 | 4 | 4 | 4 | 4 | 0 |
| Ex. 3-2-12 | B3-12 | 3 | 4 | 4 | 4 | 4 | 0 |
| Ex. 3-2-13 | B3-13 | 3 | 4 | 4 | 4 | 4 | 0 |
| Ex. 3-2-14 | B3-14 | 3 | 4 | 4 | 4 | 4 | 0 |
| Ex. 3-2-15 | B3-15 | 3 | 4 | 4 | 4 | 4 | 0 |
| Ex. 3-2-16 | B3-16 | 3 | 4 | 4 | 4 | 4 | 0 |
| Ex. 3-2-17 | B3-17 | 3 | 4 | 4 | 4 | 4 | 0 |
| Ex.3-2-18 | B3-18 | 3 | 4 | 4 | 4 | 4 | 0 |
| Ex. 3-2-19 | B3-19 | 3 | 4 | 4 | 4 | 4 | 0 |
| Ex. 3-2-20 | B3-20 | 3 | 4 | 4 | 4 | 4 | 0 |
| Ex. 3-2-21 | B3-21 | 3 | 4 | 4 | 4 | 4 | 0 |
| Ex. 3-2-22 | B3-22 | 3 | 4 | 4 | 4 | 4 | 0 |
| Ex. 3-2-23 | B3-23 | 3 | 4 | 4 | 4 | 4 | 0 |
| Ex. 3-2-24 | B3-24 | 3 | 4 | 4 | 4 | 4 | 0 |
| Ex. 3-2-25 | B3-25 | 3 | 4 | 4 | 4 | 4 | 0 |
| Comp. Ex. 3-2-1 | B3-26 | 2 | 1 | 1 | 1 | 3 | 1 |
| Comp. Ex. 3-2-2 | B3-27 | 2 | 1 | 2 | 2 | 3 | 1 |

### Examples 3-3-1

An inkjet ink was obtained by the same method as in Example 3-1-1 except that the mill base A3-1 was changed to mill base C3-1. The viscosity was 19 mPa·s.

Furthermore, inkjet recording was carried out in the same manner as in Example 3-1-1, and evaluation was carried out in the same manner. The results are given in Table 20.

### Examples 3-3-2 to 3-3-25 and Comparative Examples 3-3-1 and 3-3-2

Inkjet inks were obtained by the same method as in Example 3-3-1 except that the mill base C3-1 was changed to a mill base shown in Table 20 below. The viscosity was 17 to 22 mPa·s.

Furthermore, inkjet recording was carried out in the same manner as in Example 3-3-1, and evaluation was carried out in the same manner. The results are given in Table 20.

**(Table 20)**

| | Mill base | Curability | Storage stability | Dischargeability Evaluation A | Dischargeability Evaluation B | Flexibility | Substrate adhesion |
|---|---|---|---|---|---|---|---|
| Ex. 3-3-1 | C3-1 | 3 | 4 | 4 | 4 | 4 | 0 |
| Ex. 3-3-2 | C3-2 | 3 | 4 | 4 | 4 | 4 | 0 |
| Ex. 3-3-3 | C3-3 | 3 | 4 | 4 | 4 | 4 | 0 |
| Ex. 3-3-4 | C3-4 | 3 | 4 | 4 | 4 | 4 | 0 |
| Ex. 3-3-5 | C3-5 | 3 | 4 | 4 | 4 | 4 | 0 |
| Ex. 3-3-6 | C3-6 | 3 | 4 | 4 | 4 | 4 | 0 |
| Ex. 3-3-7 | C3-7 | 3 | 4 | 4 | 4 | 4 | 0 |
| Ex. 3-3-8 | C3-8 | 3 | 4 | 4 | 4 | 4 | 0 |
| Ex. 3-3-9 | C3-9 | 3 | 4 | 4 | 4 | 4 | 0 |
| Ex.3-3-10 | C3-10 | 3 | 4 | 4 | 4 | 4 | 0 |
| Ex. 3-3-11 | C3-11 | 3 | 4 | 4 | 4 | 4 | 0 |
| Ex. 3-3-12 | C3-12 | 3 | 4 | 4 | 4 | 4 | 0 |
| Ex. 3-3-13 | C3-13 | 3 | 4 | 4 | 4 | 4 | 0 |
| Ex. 3-3-14 | C3-14 | 3 | 4 | 4 | 4 | 4 | 0 |
| Ex. 3-3-15 | C3-15 | 3 | 4 | 4 | 4 | 4 | 0 |
| Ex.3-3-16 | C3-16 | 3 | 4 | 4 | 4 | 4 | 0 |
| Ex.3-3-17 | C3-17 | 3 | 4 | 4 | 4 | 4 | 0 |
| Ex. 3-3-18 | C3-18 | 3 | 4 | 4 | 4 | 4 | 0 |
| Ex. 3-3-19 | C3-19 | 3 | 4 | 4 | 4 | 4 | 0 |
| Ex. 3-3-20 | C3-20 | 3 | 4 | 4 | 4 | 4 | 0 |
| Ex. 3-3-21 | C3-21 | 3 | 4 | 4 | 4 | 4 | 0 |
| Ex. 3-3-22 | C3-22 | 3 | 4 | 4 | 4 | 4 | 0 |
| Ex. 3-3-23 | C3-23 | 3 | 4 | 4 | 4 | 4 | 0 |
| Ex. 3-3-24 | C3-24 | 3 | 4 | 4 | 4 | 4 | 0 |
| Ex. 3-3-25 | C3-25 | 3 | 4 | 4 | 4 | 4 | 0 |
| Comp. Ex. 3-3-1 | C3-26 | 2 | 1 | 1 | 1 | 3 | 1 |
| Comp. Ex. 3-3-2 | C3-27 | 2 | 1 | 2 | 2 | 3 | 1 |

### Example 3-4

The color reproduction of printed images using process inks and special color inks obtained in Example 3-1-1, Example 3-2-1, and Example 3-3-1 was evaluated.

As the process inks, cyan (EI, Sericol Group), magenta (EI, Sericol Group), yellow (EI, Sericol Group), and black (EI, Sericol Group) inks were used.

The hue (a^{*}, b^{*}) and lightness (L) were measured using an SPM100-II (Gretag).

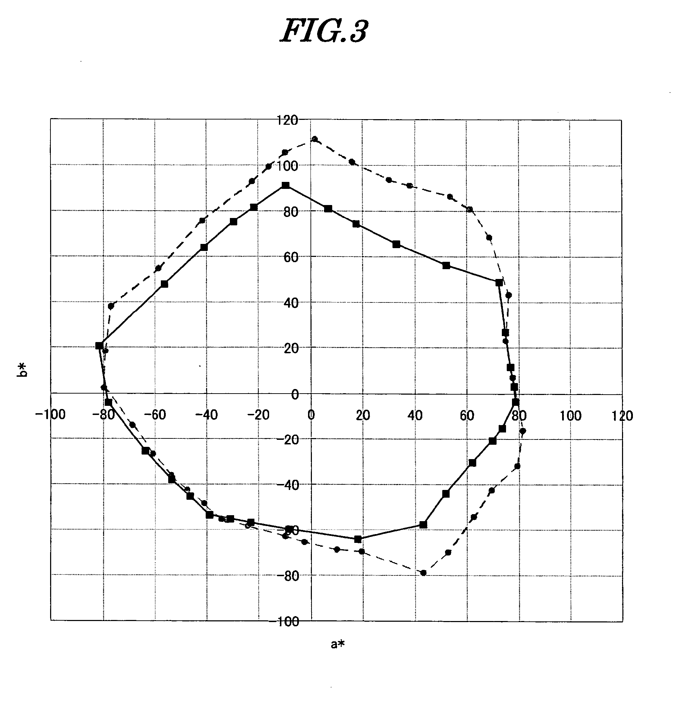

The solid line in FIG. 3 is printed image data from process colors, which were a total of 950 color patch data evenly distributed on a synthetic paper (manufactured by Ojitac Co., Ltd.) by the recording system using the process inks. This shows the maximum gamut of color reproduction (a^{*}, b^{*}).

The dotted line in FIG. 3 shows the maximum gamut of color reproduction (a^{*}, b^{*}) of a printed image obtained using an ink set comprising the process inks and green, violet, and orange special color inks prepared in Examples 3-1-1, 3-2-1, and 3-3-1.

From the results, it was clear that color reproduction was possible for a hue that was difficult to reproduce using a conventional process ink.

## Claims

1. An inkjet ink composition comprising:
(i) at least one type of organic pigment exhibiting an orange, violet, or green color;
(ii) at least one of a polymer compound derived from a monomer of formula (1-1), a polymer compound derived from a monomer of formula (2-1), and a polymer of formula (3-1): 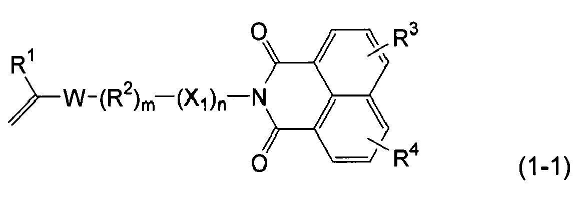 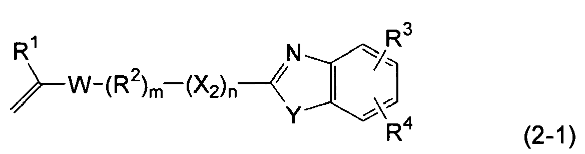 wherein
R¹ is H or optionally substituted alkyl
R² is alkylene,
W is -CO-, -C(=O)O-, -CONH-, -OC(=O)- or phenylene,
X₁ is -CO-, -NHCO-, -OC(=O)-, -CH(OH)CH₂- or -SO₂-,
X₂ is -O-, -S-, -C(=O)O-, -CONH-, -C(=O)S-, -NHCONH-, -NHC(=O)O-, -NHC(=O)S-, -OC(=O)-, -OC(=O)NH-, -CO-, -SO₂-, -CH(OH)CH₂NH-, -CH(OH)CH₂S-, -SO₂NH- or -NHCO-,
Y is -NR⁵-, -O- or -S-, wherein R⁵ is H, alkyl or aryl
R³ and R⁴ each are a monovalent substituent, and both may be linked to each other to form a ring structure, and
m and n are independently 0 or 1;
(A¹-R²)ₙ-R¹-(P¹)ₘ (3-1)
wherein
R¹ is a (m + n)-valent organic linking group,
R² each individually is a single bond or a divalent organic linking group,
A¹ each individually is a pigment adsorption structure-containing monovalent organic group comprising at least one type selected from an organic dye structure, a heterocyclic structure, an acidic group, a basic nitrogen atom-containing group, a urea group, a urethane group, a coordinating oxygen atom-containing group, a hydrocarbon group having at least 4 carbons, an alkoxysilyl group, an epoxy group, an isocyanate group, and a hydroxy group,
m is 1-8, n is 2-9, and (m+n) is 3-10, and
P¹ each individually is a polymer skeleton; and
(iii) an actinic radiation-curable compound.

2. The inkjet ink composition of Claim 1, wherein the monomer of formula (1-1) is a monomer of formula (1-2), wherein R³ and R⁴ are as defined in claim 1:

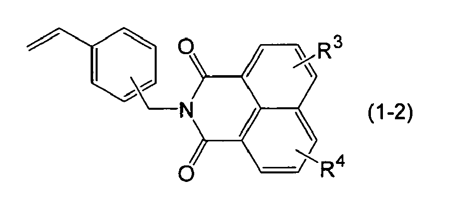

3. The inkjet ink composition of Claim 1 or 2, wherein the monomer of Formula (2-1) above is a monomer of Formula (2-2) 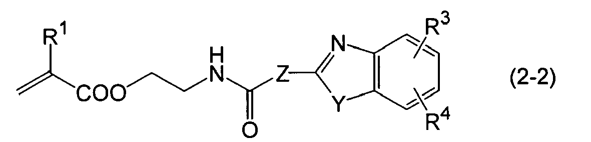 wherein R¹, R³ ,R⁴, R⁵ and Y are as defined in claim 1, and Z is -NR⁵-, -O-or -S-, wherein R⁵ is H, alkyl or aryl.

4. The inkjet ink composition of any of claims 1-3, wherein the polymer of Formula (3-1) is a polymer of Formula (3-2)
(A²-R⁴-S)ₙ-R³-(S-R⁵-P²)ₘ (3-2)
wherein
R³ is a (m+n)-valent organic linking group,
R⁴ and R⁵ each independently denote a single bond or a divalent organic linking group,
A² each independently is a pigment adsorption structure-containing monovalent organic group comprising at least one of an organic dye structure, a heterocyclic structure, an acidic group, a basic nitrogen atom-containing group, a urea group, a urethane group, a coordinating oxygen atom-containing group, a hydrocarbon group having at least 4 carbons, an alkoxysilyl group, an epoxy group, an isocyanate group, and a hydroxy group,
m is 1-8, n is 2-9, (m+n) is 3-10, and
P² each independently are a polymer skeleton.

5. The inkjet ink composition of claim 4, wherein in Formula (3-2) the polymer skeleton P² is derived from at least one of a polymer or copolymer of a vinyl monomer, an ester polymer, an ether polymer, a urethane polymer, an amide polymer, an epoxy polymer, a silicone polymer, a modified substance thereof, and a copolymer thereof.

6. The inkjet ink composition of any of claims 1-5, wherein the organic pigment is at least one selected from C.I. Pigment Orange 36, 38, 43, 71, C.I. Pigment Violet 23, 32, 37, 39, and C.I. Pigment Green 7, 36, 37.

7. The inkjet ink composition of any of claims 1-6, wherein the organic pigment is a dioxazine type compound of Formula (A), 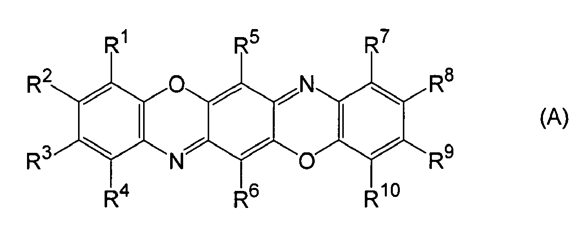 wherein R¹-R¹⁰ each independently are H, halogen (F, Cl, Br, I), or a monovalent group.

8. An inkjet recording method comprising the steps of
(a¹) discharging the inkjet ink composition of any of claims 1-7 onto a recording medium; and
(b¹) curing the discharged ink composition by irradiating it with actinic radiation.

9. The method of Claim 8, wherein the actinic radiation is UV radiation emitted by light-emitting diode that has a peak emission wavelength in the range of 350-420 nm and gives a maximum illumination intensity on the surface of a recording medium of 10-2,000 mW/cm².

10. A printed material recorded by method of claim 8 or 9.
